# EUROPEAN PATENT APPLICATION

(11) **EP 2 287 015 A2**
(43) Date of publication of application: **23.02.2011**
(21) Application number: 10075700.4
(22) Date of filing: 03.07.2001
(51) Int. Cl.: B60C 1/00, B60C 17/00, B60C 15/06, C08L 21/00

(54) **Pneumatic tire**

(30) Priority: 03.07.2000 JP 2000200490; 21.07.2000 JP 2000220137; 21.07.2000 JP 2000220547; 21.07.2000 JP 2000220255; 31.08.2000 JP 2000263350; 29.08.2000 JP 2000258852; 24.07.2000 JP 2000222145; 24.07.2000 JP 2000222144
(62) Divisional of application: 01945807.4
(71) Applicant: Bridgestone Corporation, Tokyo 104-0031 (JP)
(72) Inventor: Motofusa, Shinichi, Kodaira-shi Tokyo (JP); Kondo, Hajime, Kodaira-shi Tokyo (JP); Nishikawa, Tomohisa, Kodaira-shi Tokyo 187-8531 (JP); Kusano, Yukihiro, Kodaira-shi Tokyo (JP); Teratani, Hiroyuki, Kodaira-shi Tokyo 187-8531 (JP); Zuigyou, Yugo, Kodaira-shi Tokyo 187-8531 (JP)
(74) Representative: Lamb, Martin John Carstairs

(57) **Abstract**

A pneumatic tire which comprises a pair of right and left bead portions, a carcass layer disposed extending between the bead portions, a tread portion arranged at an outside of the carcass layer in a radial direction of the tire, a pair of side wall portions arranged at right and left sides of the tread portion and at least one pair of rubber members selected from a pair of rubber members constituted with a rigid rubber and arranged in the bead portions and a pair of rubber members disposed in the side wall portions, wherein at least one pair of rubber members selected from a pair of rubber members arranged in the bead portions and a pair of rubber members disposed in the side wall portions are constituted with rubber composition having a minimum value of a dynamic storage modulus within a temperature range of 200 to 250°C which is 75% of a dynamic storage modulus at 50°C or more.

## Description

### TECHNICAL FIELD

The present invention relates to a pneumatic tire which is not affected by a puncture caused by an external damage, etc. and, more particularly, to a safety pneumatic tire which simultaneously exhibits both of an excellent durability during driving under a damaged condition (run flat durability) and an excellent ride comfort under a condition of the normal internal pressure (ride comfort).

### BACKGROUND ART

In general, in a pneumatic tire, tension is generated in the skeleton portion of the tire such as carcass, belt and the like by enclosing air in the inside of the tire so as to give a pressure of about 200 to 400 kPa in terms of the absolute pressure based on the vacuum (hereinafter simply referred to as "internal pressure"). The tire can be deformed by a force input into the tire and the deformation can be recovered by the generated tension. In other words, by maintaining the internal pressure of a tire within a specific range, a prescribed tension is generated in the skeleton portion of the tire, thereby providing the tire with a function of supporting load. At the same time, the rigidity of the tire is enhanced to provide the tire with basic properties necessary for driving a vehicle, such as a driving performance, a braking performance and a turning performance.

If a tire which is kept at a specific internal pressure has an external damage, the air leaks to the outside through the damage and the internal pressure of the tire is reduced to atmospheric pressure, i.e., the tire falls into a flat state and the tension formed in the skeleton portion of the tire is almost entirely lost. Therefore, the function of supporting load and the driving performance, the braking performance and the turning performance which are obtained by the tension provided by a prescribed internal pressure of the tire are also lost and a vehicle equipped with such a tire cannot be driven any more.

Various safety tires which enable the driving under a flat condition have heretofore been proposed. Examples of the proposed pneumatic safety tire for automobiles include a tire having a double wall structure, a tire having therein a structure for supporting load, and a tire having reinforced side walls. Among the proposed pneumatic safety tires, actually used are, for example, a tire reinforced with a side wall reinforcing layer made of a relatively rigid rubber which is disposed on the inside of the portion extending from a shoulder portion to a bead portion through an intervening side wall portion. These tires are used as a so-called run flat tire mainly among tires having a profile of 60% or lower.

Heretofore, the side wall reinforcing layer is constituted with a rubber composition alone or a composite of a rubber composition and a fiber and so on. During a so-called run-flat-running, wherein a tire is driven under such a condition that the pressure at the inside thereof (hereinafter referred to as "internal pressure") is lowered by a puncture of the tire, however, the temperature of the tire is occasionally elevated to 200°C or higher. At such a high temperature, the breaking of crosslinked portions formed by vulcanization and the breaking of polymer chain occur in the rubber component in the above rubber composition , and as a result, the modulus of elasticity of the rubber composition decreases and the function of supporting load becomes less effective to result in increased deformation of the tire. The increase in the deformation causes further heat generation, and the fracture limit of the side wall reinforcing layer decreases. As a result, the tire is damaged in a relatively short period of time.

As a technique for delaying the above damage of the tire as much as possible, is known a method of preventing the heat generation of the rubber composition itself by increasing the modulus of elasticity of the rubber composition or setting the loss tangent (tan δ ) of the rubber composition as small as possible by suitably selecting the materials used for the rubber composition. The conventional approach by considering the aspect of compounding is, however, rather limited, and therefore, the amount of the side wall reinforcing layer and/or the bead filler must be increased to surely achieve a durability distance of a certain level or longer in a driving operation under the run flat condition.

An increase in the amount of the side wall reinforcing layer and/or the bead filler, however, causes an increase in the weight of the tire by 30 to 40%, thereby increasing a vertical spring constant and a front-and-rear spring constant of a tire. The increased spring constants bring about a marked increase of a rolling resistance and a deterioration of the ride comfort during a driving under a condition of a normal internal pressure before the internal pressure is dropped as well as bring about a marked decrease of the durability of a suspension system of a vehicle because of a large load to the suspension system. Therefore, the above conventional technique is still less applicable to a wide use in view of adverse effects on the performance during driving under a condition of the normal internal pressure, the durability of the vehicle, the fuel economy, and the environment.

For a pneumatic tire having a larger height of the tire section, i.e., a profile of 60% or larger, run flat tires having a structure, in which an inner supporting member is disposed to a rim to support the weight during the flat condition, are mainly used to avoid the heat generation at the side wall portion during a driving at a relatively high speed for a long distance.

Such a tire, however, cannot endure a repeated local input which occurs between the tire and the inner supporting member during a driving under the run flat condition after puncture, and as a result thereof, the driving distance under the run flat condition is, in general, limited to about 100 to 200 km. This technique has a further drawback in that the operation of assembling a tire with a rim after an inner supporting member is disposed to the rim is complicated and takes a long period of time. To overcome this drawback, it is attempted that the diameter of the rim at one transverse end of the rim is made different from that at the other end of the rim to facilitate the insertion of the inner supporting member. A sufficient effect, however, has not been obtained.

To increase the driving distance after puncture of a run flat tire having an inner supporting member, it is effective that the structure of the tire is made thicker and heavier by increasing the amount of the skeleton material. The rolling resistance and the ride comfort during driving under a normal condition, however, become poor because of the increased amount of the skeleton material and this technique does not have practical values.

Tires in which the internal cavity between a tire and a rim in a tire-rim assembly is filled with a foamed material having a closed cell have been proposed, for example, in Japanese Patent Application Laid-Open Nos. Heisei 6(1994)-127207, Heisei 6(1994)-183226, Heisei 7(1995)-186610 and Heisei 8(1996)-332805. The tires proposed above are limited mainly to special tires or small-sized tires such as agricultural tires, tires for rally, motorcycle tires and bicycle tires. No application of the above tires to passenger tires, truck tires, and bus tires, in which the rolling resistance and the ride comfort should be seriously considered, has been made. Additionally, since the inside of the closed cells of the foamed material is set at atmospheric pressure, replacing the air set at high pressure in ordinary pneumatic tires with the foamed material is functionally insufficient.

In Patent No. 2987076, a punctureless tire in which a foamed filler is inserted into an inner circumferential portion of the tire is disclosed. In addition to the disadvantage resulted from the pressure inside the closed cells which is very close to atmospheric pressure, the foamed filler shows a large energy loss attributable to the inter-molecular hydrogen bonding between urethane linkages and also shows a high self-heat generation because the foamed material is made of polyurethane. Thus, when the inside of a tire is filled with a foamed material made of polyurethane, repeated deformation by rotation of the tire causes the foamed material to generate heat, thereby drastically decreasing the durability. Moreover, since a raw material which is difficult to form closed cells is used, the formed cells are easily communicated with each other, and hence it is difficult that gas is held within the material. In particular, the desired internal pressure cannot be maintained during driving after the tire is damaged.

### DISCLOSURE OF THE INVENTION

The present invention has, under the above circumstances, an object of providing a safety tire which enables stable driving even after the tire has a damage, and exhibits excellent run flat durability without sacrificing rolling resistance and ride comfort during driving under a normal condition.

As the result of extensive studies made by the present inventors to overcome the above drawbacks, it was found that arranging, at the side wall portion, a rubber member which has a function of suppressing a decrease in the modulus at very high temperatures or a function of remarkably increasing the modulus at very high temperatures although the modulus at low temperatures is small is effective for exhibiting both of excellent ride comfort during driving under the normal condition and excellent run flat properties under a damaged condition.

As the first aspect, the present invention provides a pneumatic tire which comprises
a pair of right and left bead portions,
a carcass layer disposed extending between the bead portions,
a tread portion arranged at an outside of the carcass layer in a radial direction of the tire,
a pair of side wall portions arranged at right and left sides of the tread portion, and
at least one pair of rubber members selected from a pair of rubber members constituted with a rigid rubber and arranged in the bead portions, and a pair of rubber members disposed in the side wall portions,
wherein at least one pair of rubber members selected from the pair of rubber members arranged in the bead portions, and the pair of rubber members disposed in the side wall portions are constituted with a rubber composition (r1) having a minimum value of a dynamic storage modulus within a temperature range of 200 to 250°C which is 75% or larger of a dynamic storage modulus at 50°C.

As the second aspect, the present invention provides a pneumatic tire which comprises
a pair of right and left bead portions,
a carcass layer disposed extending between the bead portions,
a tread portion arranged at an outside of the carcass layer in a radial direction of the tire,
a pair of side wall portions arranged at right and left sides of the tread portion, and
at least one pair of rubber members selected from a pair of rubber members constituted with a rigid rubber and arranged in the bead portions, and a pair of rubber members disposed in the side wall portions,
wherein at least one pair of rubber members selected from the pair of rubber members arranged in the bead portions and the pair of rubber members disposed in the side wall portions are constituted with a rubber composition (r2) which comprises a rubber component (A) comprising 40% by weight or more of (1) a conjugated diene based elastic polymer having a content of vinyl linkages in conjugated diene units of 25% or more or (2) a conjugated diene based elastic polymer (a) having at least one of nitrogen atom and silicon atom in a molecule.

As the third aspect, the present invention provides a pneumatic tire which comprises
a pair of right and left bead portions,
a carcass layer disposed extending between the bead portions,
a tread portion arranged at an outside of the carcass layer in a radial direction of the tire,
a pair of side wall portions arranged at right and left sides of the tread portion, and
at least one pair of rubber members selected from a pair of rubber members constituted with a rigid rubber and arranged in the bead portions, and a pair of rubber members disposed in the side wall portions,
wherein at least one pair of rubber members selected from the pair of rubber members arranged in the bead portions and the pair of rubber members disposed in the side wall portions are constituted with a rubber composition (r3) comprising a compound (B) which is at least one compound selected from a group consisting of

citraconimide compounds, acrylate compounds and compounds represented by the following general formula (I):

R¹-S-S-A-S-S-R² (I)

wherein A represents an alkylene group having 2 to 10 carbon atoms, and R¹ and R² each independently represent a monovalent organic group having a nitrogen atom.

As the fourth aspect, the present invention provides a pneumatic tire which comprises
a pair of right and left bead portions,
a carcass layer disposed extending between the bead portions,
a tread portion arranged at an outside of the carcass layer in a radial direction of the tire,
a pair of side wall portions arranged at right and left sides of the tread portion, and
at least one pair of rubber members selected from a pair of rubber members constituted with a rigid rubber and arranged in the bead portions, and a pair of rubber members disposed in the side wall portions,
wherein at least one pair of rubber members selected from the pair of rubber members disposed in the bead portions and the pair of rubber members disposed in the side wall portions are constituted with the rubber composition (r1), the rubber composition (r2) or the rubber composition (r3), and a rubber-non woven fabric composite is disposed in the side wall portion.

As the fifth aspect, the present invention provides a method for exhibiting both of excellent ride comfort during driving under a condition of a normal internal pressure and excellent durability under a run flat state of a pneumatic tire, the method comprising disposing on a side wall portions of the tire a rubber member comprising a rubber composition which has a dynamic storage modulus at 50°C in a range of 2 to 20 MPa and a minimum value of a dynamic storage modulus within a temperature range of 200 to 250°C which is 75% or more of a dynamic storage modulus at 50°C, and the tire comprising a pair of right and left bead portions, a carcass layer disposed extending between the bead portions, a tread portion arranged at an outside of the carcass layer in a radial direction of the tire, a pair of side wall portions arranged at right and left sides of the tread portion, and at least one pair of rubber members selected from a pair of rubber members constituted with a rigid rubber and arranged in the bead portions and a pair of rubber members disposed in the side wall portions.

### BRIEF DESCRIPTION OF THE DRAWINGS

Figure 1 shows a schematic sectional view of an example of the pneumatic tire for passenger cars of the present invention.
Figure 2 shows a schematic sectional view of another example of the pneumatic tire for passenger cars of the present invention.

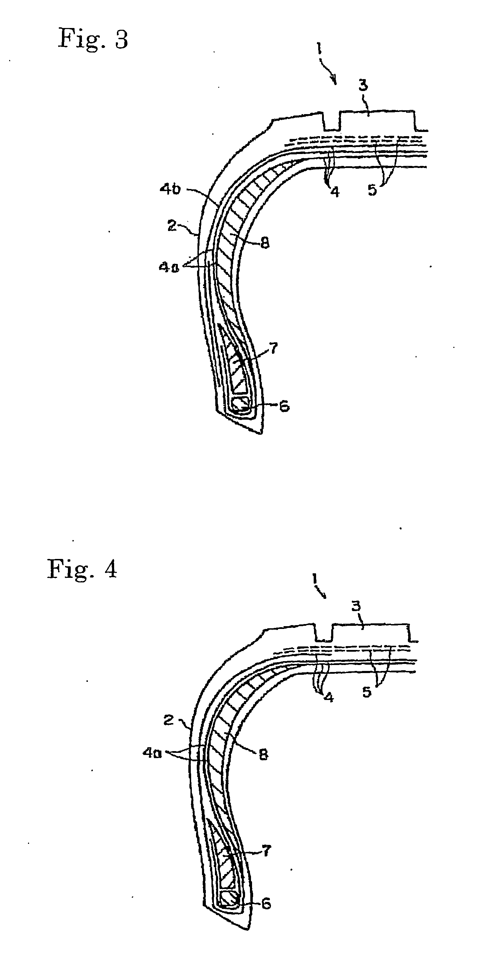

Figure 3 shows a schematic diagram describing an example of the carcass structure in the side wall portion of the pneumatic tire for passenger cars of the present invention.
Figure 4 shows a schematic diagram describing another example of the carcass structure in the side wall portion of the pneumatic tire for passenger cars of the present invention.

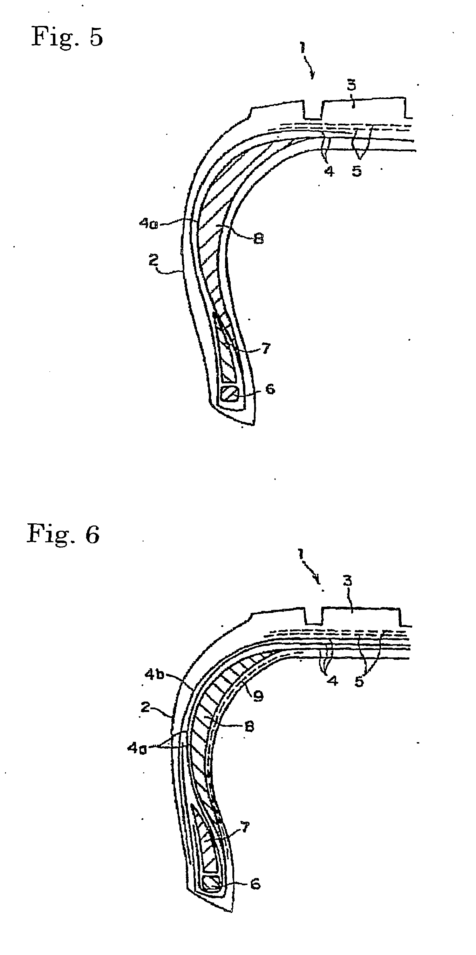

Figure 5 shows a schematic diagram describing still another example of the carcass structure in the side wall portion of the pneumatic tire for passenger cars of the present invention.
Figure 6 shows a schematic diagram exhibiting the side wall portion of the tire used in an example of the present invention.

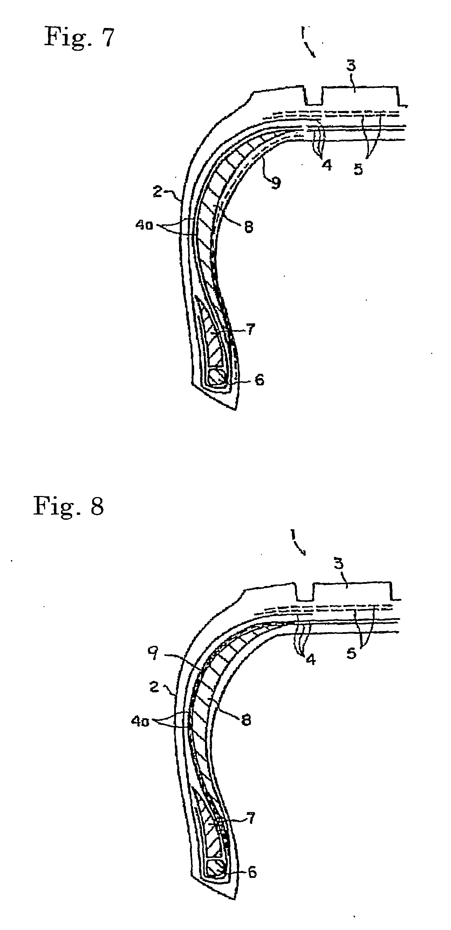

Figure 7 shows a schematic diagram exhibiting the side wall portion of the tire used in an example of the present invention.
Figure 8 shows a diagram describing an example of the position of disposing a rubber-filament fiber composite.

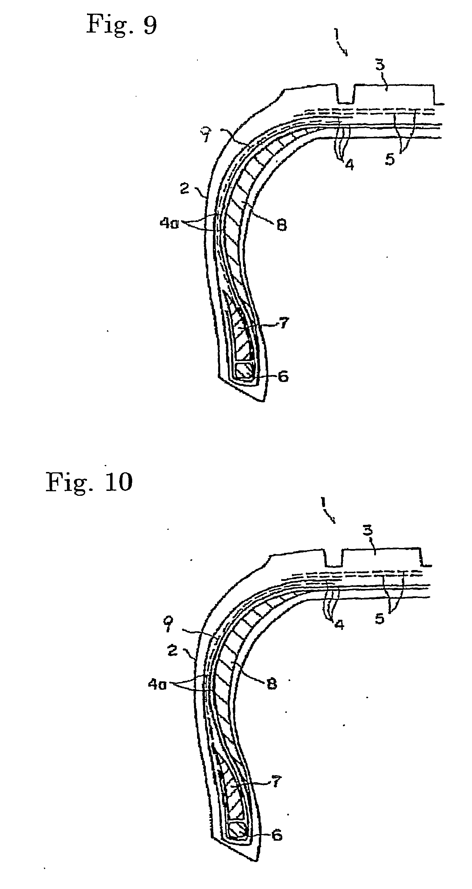

Figure 9 shows a diagram describing another example of the position of disposing a rubber-filament fiber composite.
Figure 10 shows a diagram describing still another example of the position of disposing a rubber-filament fiber composite.

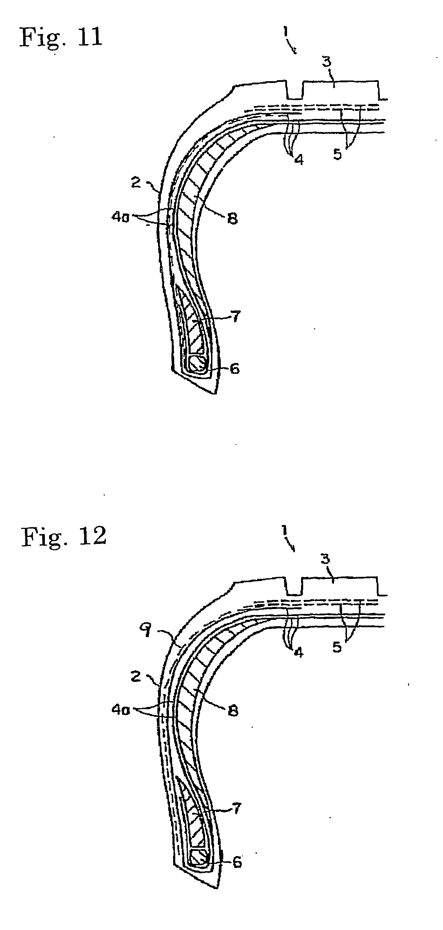

Figure 11 shows a diagram describing still another example of the position of disposing a rubber-filament fiber composite.
Figure 12 shows a diagram describing still another example of the position of disposing a rubber-filament fiber composite.

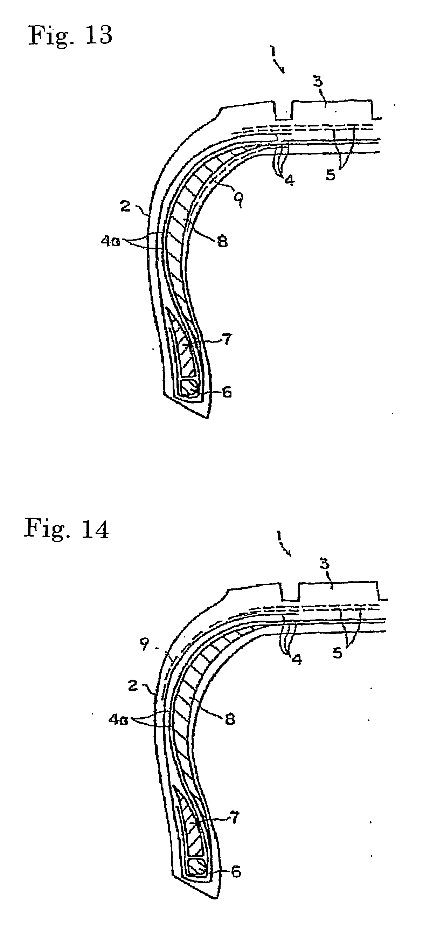

Figure 13 shows a diagram describing still another example of the position of disposing a rubber-filament fiber composite.
Figure 14 shows a diagram describing still another example of the position of disposing a rubber-filament fiber composite.

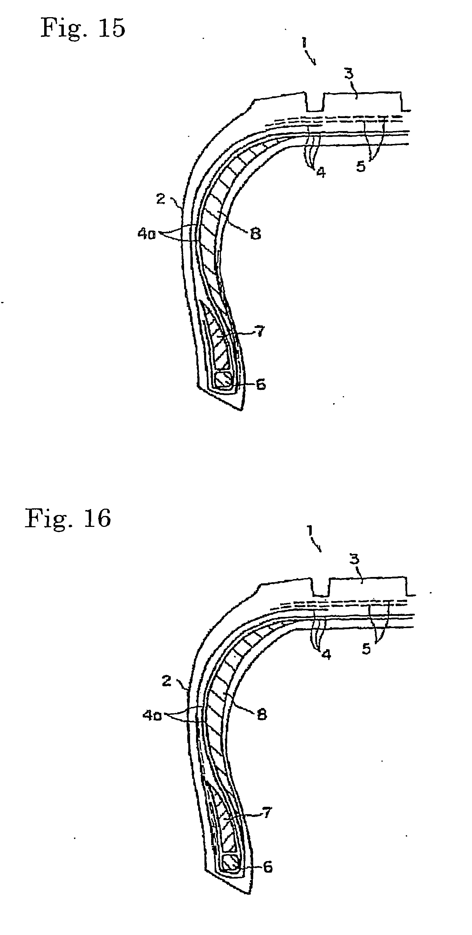

Figure 15 shows a diagram describing still another example of the position of disposing a rubber-filament fiber composite.
Figure 16 shows a diagram describing still another example of the position of disposing a rubber-filament fiber composite.

In the Figures, 1 means a pneumatic tire of the present invention; 2 means a side wall rubber; 3 means a tread rubber; 4 means a carcass; 4a means a turn-up carcass ply; 4b means a down carcass ply; 5 means a belt; 6 means a bead core; 7 means a bead filler, 8 means a reinforcing rubber layer; 9 means a rubber-filament composite; 10 means a belt reinforcing layer; and 11 means a belt reinforcing layer.

### THE MOST PREFERRED EMBODIMENT TO CARRY OUT THE INVENTION

The pneumatic tire of the present invention comprises at least one of a rubber member constituted with a rigid rubber and arranged in the bead portion (occasionally referred to as "bead fillers", hereinafter) and a rubber member disposed in the side wall portions (occasionally referred to as "side rubber member" or "side reinforcing layer"). By using a rubber composition having a function of suppressing the decrease in the modulus at very high temperatures or a function of remarkably increasing the modulus at very high temperatures although the modulus at low temperatures is small as the rubber composition constituting at least one of the rubber member disposed in the bead portions and the rubber member disposed in the side wall portions, and both of excellent ride comfort during driving with a normal internal pressure and excellent durability when the internal pressure is decreased, excellent so called run flat durability, can be exhibited.

In the pneumatic tire of the present invention, it is necessary that the minimum value of the dynamic storage modulus of rubber composition (r1) described above within the temperature range of 200 to 250°C is 75% or larger of the dynamic storage modulus at 50°C. When the minimum value of the dynamic storage modulus within the temperature range of 200 to 250°C is smaller than 75% of the dynamic storage modulus at 50°C, it is not possible to obtain both of excellent ride comfort and excellent run flat durability. It is preferable that the minimum value of the dynamic storage modulus within the temperature range of 200 to 250°C is 85% or larger of the dynamic storage modulus at 50°C, and more preferably the same as (100%) or larger than the dynamic storage modulus at 50°C. It is still more preferable that the minimum value of the dynamic storage modulus within the temperature range of 200 to 250°C is larger than the dynamic storage modulus at 50°C by 10% or more, and most preferably by 20% or more.

It is preferable that the rubber composition (r1) has the dynamic storage modulus at 50°C in the range of 2 to 20 MPa.

It is preferable that the rubber composition (r2) used in the present invention comprises a rubber component (A) comprising 40% by weight or more of (1) a conjugated diene based elastic polymer having a content of vinyl bonds of 25% or more in conjugated diene units or (2) a conjugated diene based elastic polymer (a) having at least one of nitrogen atom and silicon atom in its molecule. The elastic polymer described above means a polymer having a Tg of 20°C or lower. It is preferable that the conjugated diene based elastic polymer (a) is a homopolymer of a conjugated diene monomer, a copolymer of conjugated diene monomers, or a copolymer of a conjugated diene monomer and an aromatic vinyl monomer. Among them polybutadiene and copolymers of styrene are more preferable and polybutadiene is the most preferable.

Examples of the conjugated diene monomer include 1,3-butadiene, 1,3-pentadiene and 1,3-hexadiene. Among these conjugated diene monomers, 1,3-butadiene is preferable. Examples of the aromatic vinyl monomer used for the copolymerization with the conjugated diene monomer include styrene, α -methylstyrene, 1-vinylnaphthalene, 3-vinyltoluene, ethylvinylbenzene, divinylbenzene, 4-cyclohexylstyrene, and 2,4,6-triymethylstyrene. Among these aromatic vinyl monomers, styrene is preferable.

The conjugated diene based polymer can be prepared by various polymerization method. The polymerization process may be a batch polymerization process or a continuous polymerization process. A preferable example of the process is described in the following.

The monomers including the conjugated diene monomer can be polymerized in an inert solvent, preferably in a hydrocarbon solvent, in the presence of an initiator such as an organometallic compound, preferably an organolithium compound. The hydrocarbon solvent is not particularly limited. Examples of the hydrocarbon solvent include n-pentane, n-hexane, n-heptane, cyclohexane benzene and toluene. Among the above solvents, cyclohexane and n-hexane are preferable. The hydrocarbon solvent may be used singly or as a mixture of two or more.

As the organolithium compound used as the initiator, hydrocarbon lithium compounds having at least one lithium atom and 2 to 20 carbon atoms are preferable. Examples of the organolithium compound include n-butyllithium, sec-butyllithium, ethyllithium, n-propyllithium, tert-octyllithium and phenyllithium. Among these organolithium compounds, n-butyllithium is preferable. The organolithium initiator may be used singly or as mixture of two or more.

In the present invention, to obtain a rubber composition having the specific dynamic storage modulus, it is preferable that (1) a conjugated diene based elastic polymer having a content of the vinyl bonds of 25% or more in conjugated diene units or (2) a conjugated diene based elastic polymer having at least one of nitrogen atom and silicon atom in its molecule is used as a rubber component. The content of vinyl bonds described above means a content of a unit formed in a manner such that one of conjugated two carbon-carbon double bonds in the conjugated diene monomer is not involved in the polymerization and one carbon-carbon double bond remains as the side chain in the resultant polymer.

In the conjugated diene elastic polymer (a) of the rubber component (1), it is preferable that the content of vinyl linkages in the conjugated diene units is 25% or more. When the content of vinyl linkages in the conjugated diene units is smaller than 25%, the effect of suppressing the decrease in the modulus due to elevation of the temperature tends to decrease since the decrease in the modulus due to scission of the sulfur crosslinking at a high temperature of 150°C or higher is predominant. The decrease in the modulus due to the elevation of the temperature can be sufficiently suppressed when the content of vinyl bonds is 25% or larger. From the same standpoint, it is more preferable that the content of vinyl bonds is 30% or larger, still more preferably 35% or larger and the most preferably 40% or larger. From the standpoint of surely obtaining elasticity of the polymer, it is preferable that the content of vinyl linkages is 65% or smaller.

The content of vinyl linkages can be suitably adjusted by adding, to the polymerization system, a suitable amount of an ether and/or a tertiary amine compound, such as ditetrahydrofurylpropane, tetrahydrofuran, diethyl ether, dimethoxybenzene, dimethoxyethane, ethylene glycol dibutyl ether, triethylamine, pyridine, N,N,N',N'-tetramethylethylenediamine and dipiperidinoethane.

The temperature of the polymerization is selected, in general, within the range of -80 to 150°C and preferably within the range of -20 to 100°C. The polymerization can be conducted under a generated pressure. In general, it is preferable that the polymerization is conducted under a pressure sufficient for keeping the monomer substantially in the liquid state. In other words, where desired, the polymerization can be conducted under a higher pressure although the pressure depends on the individual substances used for the polymerization, the used polymerization medium and the polymerization temperature. The desired pressure can be obtained by a suitable method such as adding the pressure with a gas inert to the polymerization.

As the conjugated diene based elastic polymer (a) used in the present invention, a modified polymer having a tin atom, a nitrogen atom and/or a silicon atom in its molecule can be used. The use of such a modified polymer is preferable since decrease in the modulus due to elevation of the temperature can be suppressed and generation of heat can be suppressed when a modified polymer wherein a tin atom or a nitrogen atom is introduced is used for a rubber composition comprising carbon black and when a modified polymer wherein a silicon atom is introduced is used for a rubber composition comprising a reinforcing inorganic filler such as silica.

It is preferable that rubber component (A) comprises 50% by weight or more of the conjugated diene based elastic polymer (a) having a content of vinyl linkages in the conjugated diene units of 25% or more and 40% by weight or more of the rubber component is a polymer having at least one of tin atom, nitrogen atom and silicon atom in its molecule, and that 40% by weight or more of conjugated diene based elastic polymer (a) comprises at least one of tin atom, nitrogen atom and silicon atom in its molecule.

It is preferable that the conjugated diene based elastic polymer (a) has a branched structure. The branched structure can be introduced by using an initiator having a functionality of three or larger, a modifier having a functionality of three or larger or a monomer having two or more groups active to the polymerization. It is preferable that a modifier having a functionality of three or larger is used.

The above modified polymer can be prepared by using a conventional process. In general, the above modified polymer can be obtained by initiating polymerization by using an organolithium initiator, followed by addition of a modified of various types to the solution of the polymer having an active lithium end (Japanese Patent Application Publication No. Heisei 6(1994)-89183 and Japanese Patent Application Laid-Open No. Heisei 11(1999)-29659). It is preferable that the modifier is added after the polymerization is completed.

For example, a tin atom can be introduced by adding a tin compound such as tin tetrachloride, tributyltin chloride, dioctyltin dichloride, dibutyltin dichloride and triphenyltin chloride.

A nitrogen atom can be introduced by adding a compound having a nitrogen atom. Examples of the compound having a nitrogen atom include isocyanate compounds such as 2,4-tolylene diisocyanate and diisocyanato-diphenylmethane; aminobenzophenone compounds such as 4,4'-bis(diethylamino)benzophenone and 4-(dimethylamino)benzophenone; urea derivatives such as 1,3-dimethyl-2-imidazolidinone, 1,3-diethyl-2-imidazolidinone and 1,3-dimethyl-3,4,5,6-tetrahydropyrimidine; 4-dimethylaminobenzylideneaniline; dimethylimidazolidinone; and N-methylpyrrolidone.

A silicon atom can be introduced by adding an end modifier such as an alkoxysilane and an aminoalkoxysilane.

Examples of the alkoxysilane compound having an epoxy group include 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxy-silane, 2-(3,4-epoxycylclohexyl)ethyltrimethoxysilane, 2-(3,4-epoxy-cyclohexyl)ethyltriethoxysilane and 2-(3,4-epoxycyclohexyl)ethyl(methyl)-dimethoxysilane.

Examples of the alkoxysilane having an amino group include hydrocarbyloxysilane compounds having a disubstituted amino group such as 3-dimethylaminopropyl(triethoxy)silane, 3-dimethyaminopropyl-(trimethoxy)silane, 3-diethylaminopropyl(triethoxy)silane, 3-diethyl-aminopropyl(trimethoxy)silane, 2-dimethylaminoethyl(triethoxy)silane, 2-dimethylaminoethyl(trimethoxy)silane, 3-dimethylaminopropyl-(diethoxy)methylsilane and 3-dibutylaminopropyl(triethoxy)sllane; and hydrocarbyloxysilane compounds having a cyclic amino group such as 3-(1-hexamethyleneimino)propyl(triethoxy)silane, 3-(1-hexamethylene-imino)propyl(trimethoxy)silane, (1-hexamethyleneimino)methyl-(trimethoxy)silane, (1-hexamethyleneimino)methyl(triethoxy)silane, 2-(1-hexamethyleneimino)ethyl(triethoxy)silane, 2-(1-hexamethyleneimino)-ethyl(trimethoxy)silane, 3-(1-pyrrolidinyl)propyl(triethoxy)silane, 3-(1-pyrrolidinyl)propyl(trimethoxy)silane, 3-(1-heptamethyleneimino)propyl-(triethoxy)silane, 3-(1-dodecamethyleneimino)propyl(triethoxy)silane, 3-(1-hexamethyleneimino)propyl(diethoxy)methylsilane, 3-(1-hexamethyleneimino)propyl(diethoxy)ethylsilane, 1-[3-(triethoxysilyl)-propyl]-4,5-dihydroimidazole, 1-[3-(trimethoxysilyl)propyl]-4,5-dihydro-imidazole and 3-[10-(triethoxysilyl)decyl]-4-oxazoline.

Examples of the alkoxysilane compound having an imino group include N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine and N-(cyclohexylidene)-3-(triethoxysilyl)-1-propaneamine.

The above modified polymer can also be obtained by a polymerization using a lithium amide initiator obtained from a secondary amino compound such as diethylamine or an imine compound such as hexamethyleneimine in combination with an organolithium compound, or by further adding the above modifier to the obtained solution of the polymer having an active lithium end.

The modified polymer prepared by introducing a functional group into its molecular chain is also preferable since the decrease in the modulus due to elevation of the temperature can be suppressed and the low-heat-generating property of a rubber composition comprising a reinforcing inorganic filler such as silica can be effectively improved. A modified polymer having a branched structure obtained by using a polyfunctional modifier are more preferable. A modified polymer into which an amino group, an imino group, an epoxy group or a tin atom is introduced in combination with an alkoxysilyl group are effective, when in particular, carbon black is used in combination with an inorganic filler as the reinforcing filler.

The modified conjugated diene based polymer described above can be prepared by a polymerization using a hydrocarbon solvent, an initiator, a monomer and a condition which are the same as those described for the conjugated diene based polymer having a content of a vinyl bonds of 25% or larger, followed by modifying the obtained polymer with a modifier of various types.

The modified conjugated diene based polymer described above can also be obtained by a polymerization of a conjugated diene in the presence of a monomer having an alkoxysilyl group using an organolithium initiator or a lithium amide initiator.

More specifically, the monomers containing a conjugated diene are polymerized in an inert solvent, preferably in a hydrocarbon solvent, in the presence of an initiator such as an organometallic compound, preferably an organolithium compound.

The objective conjugated diene based polymer can be obtained by an anionic polymerization, where desired, in control of a modifier of the content of vinyl linkages and a randomizer, such as ditetrahydrofurylpropane, tetrahydrofuran and N,N,N',N'-ethylenediamine.

When the modified conjugated diene based polymer described above is used, component (B) described later can be used in combination.

It is preferable that the conjugated diene based polymer in rubber composition (r2) and (r3) has a weight-average molecular weight (Mw) in the range of 200,000 to 900,000. When the molecular weight is smaller, tensile properties and rolling resistance of a vulcanized rubber composition tend to deteriorate. When the molecular weight is larger, processability of an unvulcanized rubber composition tends to deteriorate. The properties of a rubber composition can be made excellent when Mw is kept within the above range. From the same standpoint, it is more preferable that Mw is in the range of 300,000 to 800,000 and the most preferably in the range of 300,000 to 700,000.

It is preferable that the molecular weight distribution expressed by the ratio (Mw/Mn) of Mw to the number-average molecular weight (Mn) of the polymer is in the range of 1 to 4. When the molecular weight distribution exceeds the above range, the low heat generating property deteriorates and it tends to become difficult to maintain the modulus in the temperature range of 150°C or higher. The effect of the present invention can be sufficiently maintained when the molecular weight distribution is in the above range. From the same standpoint, it is more preferable that the molecular weight distribution is in the range of 1 to 3.

Among the above conjugated diene based polymers, conjugated diene based polymers which has a content of vinyl linkages in the conjugated diene units of 25% or larger, a weight-average molecular weight (Mw) in the range of 200,000 to 900,000, a molecular weight distribution (Mw/Mn) expressed by the ratio of the weight-average molecular weight to the number-average molecular weight (Mn) in the range of 1 to 4 and at least one type of atom selected from nitrogen atom and silicon atom is preferable.

When the modified conjugated diene based polymer described above is used, microstructure of the polymer is not particularly limited and can be suitably selected depending on the application. Examples of the polymers having various microstructures include polymers having a large content of vinyl linkages, polymers having a small content of vinyl linkages and polymers having 1,4-trans structure.

It is preferable that the rubber composition used in the present invention comprises 50% by weight or more of the conjugated diene based polymer in the rubber component. The decrease in the modulus due to the elevation of the temperature can be effectively suppressed by using the conjugated diene based polymer described above in a large amount. From the same standpoint, it is more preferable that the rubber component comprises 60% by weight or more and the most preferably 80% by weight or more of the conjugated diene based polymer. The rubber component may be composed of the conjugated diene based polymer alone.

In the rubber composition used in the present invention, the other rubber components used in combination with the conjugated diene based polymer described above are not particularly limited. Examples of the other rubber component include natural rubber (NR), polyisoprene synthetic rubber (IR), cis-1,4-polybutadiene rubber (BR), styrene-butadiene rubber (SBR), acrylonitrile-butadiene rubber (NBR), chloroprene rubber (CR) and butyl rubber (IIR). These rubber component may be used singly or in combination of two or more.

In the present invention, it is preferable for obtaining a rubber composition having the specific dynamic storage modulus described above that the rubber component comprises (1) a conjugated diene based polymer which has a content of vinyl linkages in the conjugated diene units of 25% or larger, a weight-average molecular weight (Mw) of in the range of 200,000 to 900,000 and a molecular weight distribution (Mw/Mn) expressed by the ratio of the weight-average molecular weight to the number-average molecular weight (Mn) of in the range of 1 to 4, or (2) a conjugated diene based polymer which has Mw of in the range of 200,000 to 900,000, (Mw/Mn) of in the range of 1 to 4 and contains at least one type of atom selected from nitrogen atom and silicon atom in its molecule is preferable.

It is preferable that rubber composition (r3) used for the side rubber member and/or the bead filler rubber described above is one compounded a rubber component (A) and a component (B) which is at least one compound selected from the group consisting of citraconimide compounds, acrylate compounds and compounds represented by following general formula (I):

R¹-S-S-A-S-S-R² (I)

wherein A represents an alkylene group having 2 to 10 carbon atoms and R¹ and R² each independently represent a monovalent organic group having a nitrogen atom. Component (B) is occasionally referred to as the heat resistance improver. By using a heat resistance improver, a rubber composition having the minimum value of dynamic storage modulus in the temperature range of 200 to 250°C which is the same as (100%) or larger than the dynamic storage modulus at 50°C can be efficiently obtained.

The heat resistance improver preferably used in a rubber composition for the present invention will be described specifically in the following.

In general formula (I) representing the compound described above, A represents an alkylene group having 2 to 10 carbon atoms. The alkylene group may be any of a linear group, a branched group and a cyclic group. A linear alkylene group is preferable. Examples of the linear alkylene group having 2 to 10 carbon atoms include ethylene group, trimethylene group, tetramethylene group, pentamethylene group, hexamethylene group, heptamethylene group, octamethylene group and decamethylene group. Among these groups, hexamethylene group is preferable from the standpoint of the effect.

In general formula (I), R¹ and R² each represent a monovalent organic group having a nitrogen atom, and preferably a monovalent organic group having at least one aromatic ring and a nitrogen atom. A group having a carbon atom bonded to dithio group, which can be expressed as =N-C(=S)- is more preferable. R¹ and R² may represent the same group or different groups. It is preferable that R¹ and R² represent the same group from the standpoint of easiness of the preparation.

Examples of the compound represented by general formula (I) include α, ω -bis(N,N'-dihydrocarbylthiocarbamoyldithio)alkanes represented by general formula (I-a) :

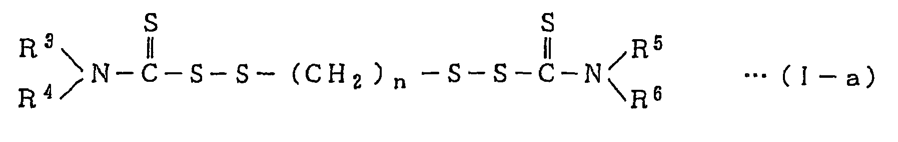

In the above general formula (I-a), R³ to R⁶ each represent an alkyl group, an aryl group or an aralkyl group where at least one of R³ and R⁴ and at least one of R⁵ and R⁶ represents an aryl group or an aralkyl group, and n represents an integer of 2 to 10.

As the alkyl group, those having 1 to 20 carbon atoms are preferable. The alkyl group may be a linear group, a branched group or a cyclic group. Examples of the alkyl group include methyl group, ethyl group, n-propyl group, isopropyl group, n-butyl group, isobutyl group, sec-butyl group, tert-butyl group, various types of pentyl group, various types of hexyl group, various types of octyl group, various types of decyl group, various types of dodecyl group, various types of tetradecyl group, various types of hexadecyl group, various types of octadecyl group, cyclopentyl group, cyclohexyl group and cyclooctyl group.

As the aryl group, those having 6 to 20 carbon atoms are preferable. The aryl group may have a suitable substituent such as a lower alkyl group on the ring. Examples of the aryl group include phenyl group, tolyl group, xylyl group, naphthyl group and methylnaphthyl group. As the aralkyl group, aralkyl groups having 7 to 20 carbon atoms are preferable. The aralkyl group may have a suitable substituent such as a lower alkyl group on the ring. Examples of the aralkyl group include benzyl group, methylbenzyl group, dimethylbenzyl group, phenetyl group, methylphenetyl group, dimethylphenetyl group, naphthylmethyl group, (methylnaphthyl)methyl group, (dimethylnaphthyl)methyl group, naphthylethyl group, (methylnaphthyl)ethyl group and (dimethylnaphthyl)ethyl group.

It is preferable that R³ to R⁶ all represent the aryl group or the aralkyl group described above and more preferably benzyl group from the standpoint of preventing heat aging and easiness of preparation. Examples of the above compound include 1,2-bis(N,N'-dibenzylthiocarbamoyldithio)ethane, 1,3-bis(N,N'-dibenzylthiocarbamoyl-dithio)propane, 1,4-bis(N,N'-dibenzylthiocarbamoyldithio)butane, 1,5-bis(N,N'-dibenzylthiocarbamoyldithio)pentane, 1,6-bis(N,N'-dibenzylthio-carbamoyldithio)hexane, 1,7-bis(N,N'-dibenzylthiocarbamoyldithio)-heptarie, 1,8-bis(N,N'-dibenzylthiocarbamoyldithio)octane, 1,9-bis(N,N'-dibenzylthlocarbamoyldithio)nonane and 1,10-bis(N,N'-dibenzyl-thiocarbamoyldithio)decane. Among these compounds, 1,6-bis(N,N'-dibenzylthiocarbamoyldithio)hexane is preferable from the standpoint of the effect.

The compound represented by the general formula (I) exhibits the effect of improving heat resistance of a rubber composition. It is considered that the effect is exhibited because monosulfide crosslink having higher stability is formed effectively at a high temperature while scission of the existing crosslink takes place.

As the citraconimide compound used as the heat resistance improver, biscitraconimides are preferable from the standpoint of the effect. Examples of the biscitraconimide include compounds represented by general formula (II):

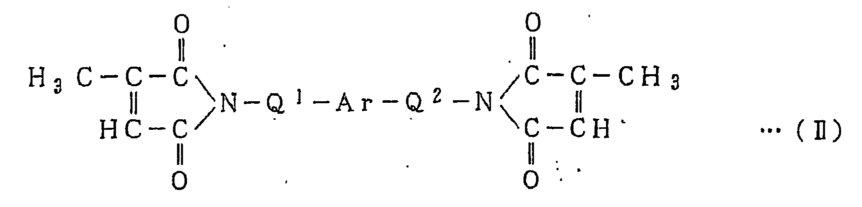

In the general formula (II), Ar represents an arylene group. As the arylene group, those having 6 to 20 carbon atoms with or without a substituent on the ring are preferable. The substituent is not particularly limited as long as the substituent has no effect on vulcanization and is stable at high temperatures of 170°C or higher. Examples of the substituent include lower alkyl groups, lower alkoxyl groups, halogen atoms, nitro group and cyano group. Examples of the arylene group include phenylene group and naphthylene group. Among these arylene groups, phenylene group is preferable.

Q¹ and Q² each represent an alkylene group having 1 to 4 carbon atoms. The alkylene group may be a linear group or a branched group. Examples of the alkylene group include methylene group, ethylene group, propylene group and butylene group. Q¹ and Q² may represent the same group or different groups. It is preferable that Q¹ and Q² represent the same group from the standpoint of easiness of preparation.

Examples of the compound represented by the general formula (II) include 1,2-bis(citraconimidomethyl)benzene, 1,3-bis(citraconimido-methyl)benzene, 1,4-bis(citraconimidomethyl)benzene, 1,6-bis(citraconimidomethyl)benzene, 2,3-bis(citraconimidomethyl)toluene, 2,4-bis(citraconimidomethyl)toluene, 2,5-bis(citraconimidomethyl)toluene, 2,6-bis(citraconimidomethyl)toluene and bis(citraconimidoethyl) compounds corresponding to the above compounds. Among these compounds, 1,6-bis(citraconimidomethyl)benzene is preferable from the standpoint of the effect.

The citraconimide compound of (B) component exhibits the effect of improving the heat resistance of a rubber composition. It is considered that the effect is exhibited since a C-C crosslink is formed in the earlier period by reacting with a conjugated C=C bond in the main chain which is formed at the time of the scission of a crosslink at a high temperature.

As the acrylate of (B) component, polyvalent esters obtained from a polyhydric alcohol and acrylic acid and polyvalent esters obtained from a polyhydric alcohol, acrylic acid and another carboxylic acid are preferable from the standpoint of the effect. The preferable examples of the polyvalent ester include compounds represented by the following general formula (III):

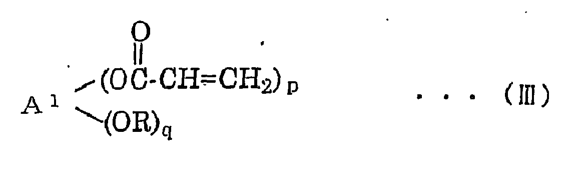

In the general formula (III), A¹ represents a residue group derived from a (**p**+**q**)-valent polyhydric alcohol by removing hydroxyl group, and R represents a hydrogen atom or an acyl group excluding acryloyl group. The acyl group is not particularly limited. The preferable examples of the acyl group include saturated and unsaturated aliphatic acyl groups having 2 to 20 carbon atoms. **p** represents an integer of 2 to 10, **q** represents an integer of 0 to 8, and **p+q** represents an integer of 2 to 10.

Among the compounds represented by the general formula (III), preferred are compounds in which **p** represents an integer of 3 to 6, **q** represents an integer of 0 to 3 and **p+q** represents an integer of 3 to 6, from the standpoint of the effect.

To form as acrylate represented by the general formula (III), a polyhydric alcohol represented by general formula (IV):

A¹-(OH)_{p+q} (IV)

wherein A¹, **p** and **q** are the same as defined above, is used. As the polyhydric alcohol represented by the general formula (IV), 3- to 6-valent alcohols are preferable. Examples of the polyhydric alcohol include glycerol, trimethylolethane, trimethylolpropane, diglycerol, pentaerythritol, dipentaerythritol and sorbitol.

As the compound represented by the general formula (III), polyvalent esters which are obtained from dipentaerythritol and acrylic acid and have 3 to 6 acryloyl groups in one molecule, and modified dipentaerythritol acrylates which are modified at an acyl group and have 3 to 5 acryloyl groups in one molecule are preferable from the standpoint of the effect.

The above compounds are available as commercial products as shown in the following.

For example, compounds expressed by the following formula: 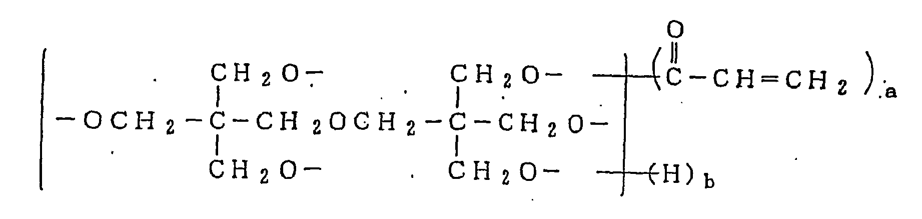 (a mixture of a compound expressed by the above formula in which a=5 and b=1, and a compound expressed by the above formula in which a=6 and b=0) are available as KAYARAD DPHA (a trade mark; manufactured by NIPPON KAYAKU Co., Ltd.).

Also compounds represented by the following general formula: 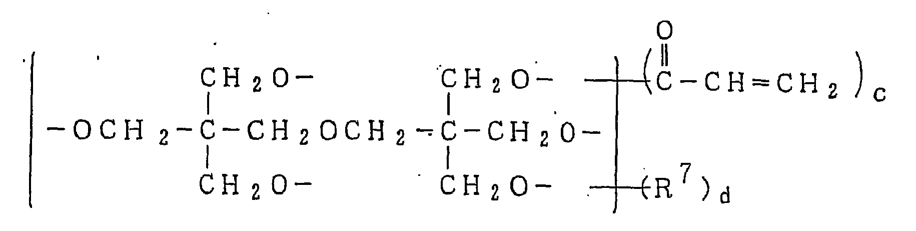 (R⁷ represents an alkynoyl group) are commercially available as KAYARAD D-310 (a trade mark; manufactured by NIPPON KAYAKU Co., Ltd.) in which c=5 and d=1 and as KAYARAD D-330 (a trade mark; manufactured by NIPPON KAYAKU Co., Ltd.) in which c=3 and d=3 is available.

The acrylate of component (B) exhibits an effect of improving heat resistance of the rubber composition. It is considered that the effect is exhibited because of effective formation of C-C crosslink by the reaction with the conjugated C=C bond in the main chain which is formed at the time of the scission of a crosslink at a high temperature.

The amount of (B) component is set in the range of 0.5 to 20 parts by weight per 100 parts by weight of the rubber component (A). When the amount is less than 0.5 parts by weight, there is the possibility that the effect of preventing heat aging is not sufficiently exhibited and the desired effect of improving the heat resistance is not exhibited. When the amount exceeds 20 parts by weight, the effect is not exhibited to the degree expected from the amount, and economic disadvantage arises. Moreover, it causes a deterioration in other physical properties of the obtained rubber composition. From the standpoint of the effect of preventing heat aging, other properties of the rubber composition and economy, it is more preferable that the amount of (B) component is in the range of 0.7 to 15 parts by weight and the most preferably in the range of 1.0 to 10 parts by weight.

In the present invention, where desired, other agents for preventing heat aging can be suitably used in combination with the compounds of (B) component. Examples of the other agent include sodium 1,6-hexamethylenedithiosulfate dihydrate and compounds having two or more ester groups in one molecule.

The compound having two or more ester groups in one molecule is not particularly limited. Acrylates and methacrylates are preferable and polyvalent esters obtained from polyhydric alcohols and acrylic acid or methacrylic acid are more preferable.

Examples of the polyhydric alcohol include alkylene glycols such as ethylene glycol, propylene glycol, butylene glycol, pentanediol and hexanediol; polymers of the alkylene glycols; compounds obtained by substituting methylol group into these compounds; pentaerythritol; addition products of alkylene oxides to polyhydric alcohols; and polyesters and oligoesters having two or more alcoholic hydroxyl groups. Among these compounds, compounds obtained by substituting methylol group into alkylene glycols and polymers of these compounds are preferable.

Examples of the compound having two or more ester groups in one molecule include 1,3-butylene glycol diacrylate, 1,5-pentanediol diacrylate, neopentyl glycol diacrylate, 1,6-hexanediol diacrylate, diethylene glycol diacrylate, triethylene glycol diacrylate, tetraethylene glycol diacrylate, polyethylene glycol diacrylate, polypropylene glycol diacrylate, pentaerythritol triacrylate, trimethylolpropane triacrylate, pentaerythritol tetraacrylate, dipentaerythritol hexaacrylate, dipentaerythritol pentaacrylate, oligoester polyacrylate, dipropylene glycol dimethacrylate, trimethylolethane trimethacrylate, trimethylolpropane trimethacrylate, dipentaerythritol pentamethacrylate and dipentaerythritol trimethacrylate. Among these compounds, dipentaerythritol pentamethacrylate, dipentaerythritol trimethacrylate and trimethylol-propane trimethacrylate are preferable.

Sodium 1,6-hexamethylenedithiosulfate dihydrate described above exhibits the effect of suppressing scission of intermolecular crosslink between polymer molecules constituting the rubber component. The function of the compound having two or more ester groups in one molecule can be considered as follows. When the temperature of the rubber composition is elevated to 170°C or higher, degradation of rubber starts and scission of crosslink points and polymer chains begins to take place. On the other hand, C-C crosslink with the aid of the above compound takes place at a same time. Therefore, the decrease in the modulus is suppressed and, as the result, heat generation is suppressed even at high temperatures.

In the rubber composition used in the present invention, a reinforcing filler (component C) may be further used. The reinforcing filler is not particularly limited and can be suitably selected from those conventionally used in the rubber industry. It is preferable that carbon black, silica or a reinforcing inorganic filler represented by the general formula shown below is used.

Carbon black is not particularly limited and can be suitably selected from those conventionally used in the rubber industry. It is preferable that carbon black has a nitrogen adsorption specific surface area measured by the BET method of in the range of 50 to 400 m²/g. Specifically, HAF, GPF and FEF are preferable from the standpoint of the balance between the reinforcing property and the resistance to heat generation.

It is preferable that the reinforcing inorganic filler used in the present invention as component (C) is porous. It is more preferable that the reinforcing inorganic filler has a nitrogen adsorption specific surface area measured by the BET method of in the range of 50 to 400 m²/g.

Silica is not particularly limited and can be suitably selected from those conventionally used in the rubber industry. Examples of the silica include wet silica and dry silica. Preferable examples of silica include NIPSIL AQ manufactured by NIPPON SILICA INDUSTRIAL Co., Ltd.

As the other reinforcing inorganic fillers, compounds represented by the following general formula:

mM¹·xSiO_{y}·zH₂O

wherein M¹ represents at least one metal selected from Al, Mg, Ti and Ca, an oxide of said metal or a hydroxide of said metal, **m** represents an integer of 1 to 5, **x** represents an integer of 0 to 10, **y** represents an integer of 2 to 5 and z represents an integer of 0 to 10; are preferable. Examples of the compound represented by the above general formula include alumina (Al₂O₃), aluminum hydroxide [Al(OH)₃], magnesium hydroxide [Mg(OH)₂], magnesium oxide (Mg O), talc (3MgO·4SiO₂·H₂O), attapulgite (5MgO·8SiO₂·9H₂O), titanium white (TiO₂), titanium black (TiO₂ₙ₋₁; **n** representing a positive integer), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophylite (Al₂O₃·4SiO₂·H₂O), bentonite (Al₂O₃·4SiO₂·2H₂O), aluminum silicate (Al₂SiO₅, Al₄.SiO₄·5H₂O and the like), magnesium silicate (Mg₂SiO₄, Mg₂SiO₃ and the like), calcium silicate (Ca₂SiO₄ and the like), aluminum calcium silicate (Al₂O₃·CaO·2SiO₂ and the like) and magnesium calcium silicate (CaMgSiO₄). Aluminum hydroxide include the hydrate of alumina (Al₂O₃·3H₂O). The reinforcing inorganic filler may be used singly or in combination of two or more.

Among these reinforcing inorganic fillers, aluminum hydroxide, aluminum oxide, clay and zeolite are more preferable and aluminum hydroxide is the most preferable.

The above reinforcing inorganic filler and carbon black may be used in combination.

In the rubber composition used in the present invention, in addition to the components described above, various additives conventionally used in the rubber industry may suitably be used. Examples of the additives include a vulcanizing agent such as sulfur and peroxides, a vulcanization accelerator, an antioxidant, a softener and an inorganic filler. The rubber composition used in the present invention may be used as a composite with particles, fibers and cloths of various materials.

The pneumatic tire of the present invention can be produced by a conventional process with application of the rubber composition exhibiting excellent heat resistance and excellent durability described above to bead fillers and/or reinforcing layers of side wall portions.

It is preferable that the rubber member disposed in the side wall portions is disposed at an inner side of the tire and adjacent to the carcass layer.

The carcass ply used in the present invention comprises, for example, an aliphatic polyamide and a rubber composition, and can be produced by a conventional process. A green tire is produced by applying this carcass ply and the obtained green tire is vulcanized.

The structure of the carcass of the pneumatic tire of the present invention is not particularly limited. Examples of the carcass structure include 1P structure with one ply, 2P structure with two plies and 3P structure with three plies. Each ply may be a turn-up ply which is turned up around a bead portion or a down ply which extends downwards to a bead portion or one having a so-called envelope structure in which the end of a turn-up ply extends to below a belt. At least one layer of the ply is the turn-up ply.

The rubber-filament fiber composite is disposed in the side wall portion of a tire. The composite is disposed at least at one part of the side wall portion. The composite may be disposed in the entire part of the side wall portion extending from the lower end of the bead portion to below the belt. The composite may be disposed at the inside or at the outside of the carcass ply or between a plurality of carcass plies.

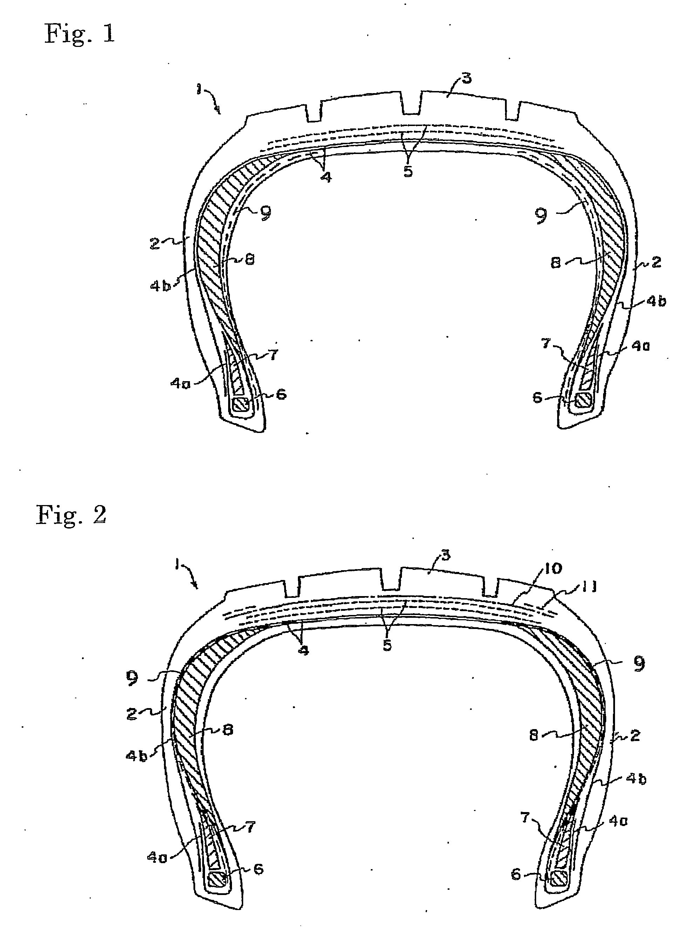

An example of a tire of the present invention will be described with reference to a figure in the following. In Figure 1, a carcass 4 has a 2P structure comprising a turn-up ply 4a and a down ply 4b which are disposed substantially parallel to each other in the radial direction of the tire 1. The turn-up ply 4a is reinforced with a cord made of Nylon 66, and the down ply 4b is disposed at the outside of the turn-up ply 4a. Each of end portions of the turn-up ply 4a are turned around a pair of bead portions comprising a pair of right and left bead cores 6 and a corresponding pair of bead fillers 7. In the crown portion, at the outside in the radial direction of the tire of the carcass 4, a belt 5 comprising two plies each reinforced with a steel cord is disposed. At the outside, in the radial direction of the tire, of the belt 5, a tread rubber 3 is disposed. On the carcass layer at both sides of the tread rubber 3, side wall rubbers 2 are disposed. In each side wall portion, a reinforcing rubber layer 8 which partially supports the load and has a sectional shape of a crescent is disposed at the inside of the turn-up ply 4a. At the inside of each reinforcing rubber layer 8, a rubber-filament fiber composite 9 is disposed. The reinforcing rubber layer comprises a rubber composition which is formed by the formulation shown in Table 18 and has a hardness after vulcanization of 80°. The reinforcing rubber layer has the maximum thickness of 11 mm. The rubber composition used for the rubber-filament fiber composite is the same as that used for the reinforcing rubber layer.

The rubber used for the reinforcing rubber layer 8 which reinforces the side wall portion 2 may be a composite comprising organic fibers or inorganic particles. The sectional shape of the reinforcing rubber layer 8 is not particularly limited as long as the function of reinforcing the side wall portion can be exhibited.

In the pneumatic tire of the present invention, at least one of the bead filler 7 and the reinforcing rubber layer 8 is formed with the above rubber composition having excellent heat resistance and excellent durability.

As the gas filling the inside of the pneumatic tire of the present invention, the air or an inert gas such as nitrogen gas can be used.

When the pneumatic tire of the present invention is used for driving under the normal condition, deterioration in the ride comfort and the noise level due to the increase in the modulus are substantially absent. Further when the temperature of the rubber composition is elevated to 170°C or higher by a large deformation caused by for example puncture of the tire, the decrease in the modulus is suppressed and heat generation at the high temperature is suppressed.

Therefore, the pneumatic tire of the present invention in which the rubber composition is used for the bead filler or the reinforcing rubber layer in the side wall portion exhibits remarkable improvement in the durability, in particular, under the run flat state and the driving distance under the run flat state can be remarkably increased.

The rubber-filament fiber composite can be disposed in the side wall portion 2. The position of disposing the composite is not particularly limited and can be suitably selected depending on the application. For example, the position may be between the carcass ply and an inner liner layer, between the carcass plies, between the carcass ply and the side reinforcing layer or between the side reinforcing layer and the side wall rubber.

The size of a rubber-non-woven fabric composite is not particularly limited. It is preferable that the rubber-non-woven fabric composite has a dimension of about 15 mm extending in the longitudinal direction at both sides of the thickest position of the side reinforcing layer. The rubber-non woven fabric composite may have a dimension extending to the entire side wall portion.

The material of the non-woven fabric is not particularly limited and can be selected by the application. A filament of an organic fiber is preferable, and more preferably a filament of an organic fiber having a melting point or a softening point of 250°C or higher and the most preferably an aramide filament.

In the present invention, it is preferable that a rubber-filament fiber composite constituted with a filament fiber and a rubber composition is applied. The material of the filament fiber constituting the rubber-filament fiber composite is not particularly limited. As the material of the.filament fiber, one fiber or a mixture of a plurality of fibers selected from fibers of natural macromolecules such as cotton fibers, rayon fibers and cellulose fibers; fibers of synthetic macromolecules such as aromatic polyamide fibers; aliphatic polyamide fibers; polyester fibers, polyvinyl alcohol fibers, and polyimide fibers; carbon fibers; glass fibers; and steel wires, may be used. From the standpoint of the dimensional stability at high temperatures, aromatic polyamide fibers, rayon fibers, polyethylene 2,6-naphthalate fibers, polyimide fibers, carbon fibers, glass fibers and steel wires are preferable. Examples of the aromatic polyamide fiber include fibers of poly-para-phenylene terephthalamide, poly-meta-phenylene terephthalamide, poly-para-phenylene isophthalamide and poly-meta-phenylene isophthalamide.

As the aromatic polyamide fiber, para-aramide fibers are preferable. Examples of the para-aramide fiber include fibers of copoly-para-phenylene 3,4-oxydiphenylene terephthalamide. poly-para-phenylene terephthalamide, poly-meta-phenylene terephthalamide, poly-para-phenylene isophthalamide and poly-meta-phenylene terephthalamide. Among these fibers, fibers of para-aramide fibers are preferable. As the commercial product, TECHNOLA (a trade mark; manufactured by TEIJIN Limited) and KEVLAR (a trade mark; manufactured by E.I. DU PONT de Nemours and Company) are available.

As for the non-woven fabric used in the present invention, it is preferable that the diameter or the maximum diameter of the filament of the non-woven fabric is in the range of 0.1 to 100 □m and more preferably in the range of 10 to 35 □m so that rubber sufficiently penetrates through gaps between the filament fibers. When the diameter of the filament of the non-woven fabric is smaller, the gap between the filaments is not sufficient to make the penetration of rubber into the inside of the non-woven fabric difficult. So, a resultant rubber-filament fiber composite occasionally fail to exhibit its function sufficiently. On the other hand, when the diameter of the filament of the non-woven fabric is larger, the bending modulus of the filament fiber itself increases and formation of entanglements between the fibers sufficient for forming the non-woven fabric tends to become difficult. Therefore, a resultant rubber-filament fiber composite occasionally fail to exhibit its function sufficiently.

It is preferable that the length of the fiber applied in the rubber-filament fiber composite is 8 mm or longer and more preferably 10 mm or longer. When the length of the fiber is shorter, entanglements between the filament fibers is insufficient and the strength as the reinforcing layer tends to be difficultly maintained.

The organic or inorganic fiber used in the present invention may have a multi-layer structure in which a plurality of components are laminated together or a structure having cavities at the inside of the fiber such as a hollow structure and a porous structure. The fiber may have various sectional shapes such as a circular shape, a elliptic shape, a rugged shape or a shape of a petal. It is preferable that the fiber has a sectional shape having less roughness on the surface such as the circular shape and the elliptic shape. The shape having less roughness on the surface means a shape which hardly project shadows on the surface due to the roughness of the surface when the fiber is subjected to irradiation with an electric field or particles from the outside.

The filament fiber constituting the rubber-filament fiber composite used in the present invention can be used in the form of aggregates of fibers which are substantially not bundled together, for example, in the form of aggregates of fibers which are entangled together. In the aggregates, fibers are, unlike a tire fabric, not twisted together or woven to a fabric. Examples of the form of the aggregate of fibers include glass wool, non-woven fabrics, knit fabrics, nets and the like.

In the rubber-filament fiber composite used in the pneumatic tire of the present invention, it is preferable that a non-woven fabric is used as the filament fiber. As a process for preparing a non-woven fabric, needle punch process, carding process, melt blow process and spun bond process can be used. As the non-woven fabric, non-woven fabrics prepared by the carding process in which filaments are entangled together by using water stream or needles and the spun bond process in which filaments are bonded to each other are preferable.

It is preferable that the unit weight (the weight per 1 m²) of the non-woven fabric is in the range of 10 g to 300 g. When the unit weight exceeds 300 g/m², rubber does not penetrate into the gaps at the inside of the non-woven fabric although the condition may be different depending on the fluidity of the rubber. When the non-woven fabric as a member of the tire is considered, this condition is not preferable from the standpoint of peeling resistance of the rubber-non-woven fabric composite. When the unit weight is smaller than 10 g/m², it becomes difficult that the uniformity of the non-woven fabric itself is maintained and uneven non-woven fabric is formed. This causes increases in the fluctuations in strength, rigidity and elongation at break of the rubber-non-woven fabric composite and physical properties of the tire obtained after vulcanization cannot be kept constant. Therefore, such unit weights are not preferable.

It is preferable that the thickness of the non-woven fabric as measured under the pressure of 20 g/cm² is in the range of 0.05 to 2.0 mm and more preferably in the range of 0.1 to 0.5 mm. When the thickness is smaller than 0.05 mm, it is difficult that the uniformity of the non-woven fabric is maintained and strength and rigidity of the composite with rubber are insufficient. When the thickness exceeds 2.0 mm, the gauge of the composite with rubber increases and the thickness is not preferable for a member of a tire.

The rubber and the filament fiber are formed into a composite by applying an unvulcanized rubber composition to a filament fiber in advance while the materials are processed in the unvulcanized stage. Specifically, the materials may be mixed together by using a mixing machine conventionally used in the rubber industry such as rolls and a Banbury mixer. From the standpoint of dispersion, it is preferable that the filament is added into the rubber in small separate portions. When a non-woven fabric is used as the filament fiber, an unvulcanized rubber composition in the sheet form is pressed against the non-woven fabric on both upper and lower faces or on one face by using a press or a heated roll and the air inside the non-woven fabric is sufficiently replaced with the unvulcanized rubber composition. Depending on the fluidity of the unvulcanized rubber composition, it may be required to conduct the pressing at an elevated temperature at which the vulcanization does not substantially takes place. As another method, the unvulcanized rubber composition is made into a liquid form with a solvent and tackiness is provided by coating the non-woven fabric with the fluid composition.

It is preferable that the content of the filament fiber in the rubber-filament fiber composite is in the range of 4 to 50% by weight. When the content of the filament fiber is smaller than 4% by weight, uniformity cannot be maintained and rigidity as the reinforcing layer cannot be exhibited. When the content of the filament fiber exceeds 50% by weight, portions in which fibers are continuous increase in the rubber-filament fiber composite. This causes a decrease in durability of the rubber-filament fiber composite and the durability of the tire tends to decrease. Therefore, contents of the filament fiber outside the above range are not preferable.

When adhesion between the filament fiber and the rubber is sufficient in the preparation of the composite, no pretreatment for adhering the filament fiber is required. When the adhesion is not sufficient, the filament fiber may be treated by a dipping heat set treatment or a surface treatment described in the following in the same manner as that used for enhancing adhesion of fibers for tire cords with rubber.

In the present invention, a coating film is formed on the filament forming the above non-woven fabric with a metal or a metal compound which is reactive with sulfur by the physical vapor deposition (PVD) process or the chemical vapor deposition (CVD) process. The formation of the coating film by the PVD process or the CVD process has advantages to be low level of environmental contamination since no solvents are used and that, unlike the conventional dipping treatment and the plating treatment, gaps between fibers in the non-woven fabric are not choked since the coating film is formed via the gas phase.

Examples of the PVD process which can be applied to the present invention include vacuum vapor deposition processes such as the vapor deposition process using resistance heater and vapor deposition process using electron beams; the epitaxy process using molecular beams; the laser abrasion process; sputtering processes such as direct current sputtering process, high frequency sputtering process, magnetron sputtering process and ECR sputtering process; ion beam process; ion plating process such as high frequency ion plating process; ionized cluster beam film forming process; and the ion beam process. Examples of the CVD process include the heat CVD processes such as the ordinary pressure CVD process and the reduced pressure CVD process; the organometallic CVD process; the photo CVD process; and the plasma CVD processes such as the direct current plasma CVD process, the high frequency plasma CVD process, the microwave plasma CVD process and the ECR plasma CVD process. Among these processes, the sputtering processes are preferable and the magnetron sputtering process is more preferable.

The reasons why the sputtering processes are preferable are that the film formation can be conducted while the temperature at the surface of the non-woven fabric is kept low, that the effect of out gases from the non-woven fabric is small since the operating pressure during the film formation is relatively high such as 5 × 10⁻² to 1 × 10¹ Pa, and that particles sputtered from a target are likely to be scattered with the atmospheric gas such as argon (Ar) before the particles reach the surface of the non-woven fabric and "turning around" tends to take place. Due to the turning around, films can be sufficiently formed on portions not faced to the target and on portions at the back side of the non-woven fabric even though the non-woven fabric has a complicated shape.

The conditions of the sputtering and, in particular, the magnetron sputtering, are as follows. As the atmospheric gas, an inert gas such as Ar, He, Ne and Kr, and preferably Ar, is used and, where necessary, a reactive gas may be mixed with the inert gas. Examples of the reactive gas include O₂ and H₂O in the oxidizing system, N₂ and NH₃ in the nitriding system and CH₄ in the carbonizing system. The ratio of the amounts of the inert gas to the reactive gas (the ratio of the volumes in the supplied gas) is 100/0 to 0/100 and preferably 100/0 to 20/80.

Where necessary, a bias voltage may be applied to the non-woven fabric of the substrate. In this case, any of the direct current bias voltage and the alternating current bias voltage may be applied. When the alternating current bias voltage is applied, it is preferable that a pulse voltage or a high frequency (rf) voltage is applied. When the direct current bias voltage is applied, it is preferable that the voltage is in the range of -1 to +1 kV.

The pressure of the gas is not particularly limited as long as the sputtering can be conducted. It is preferable that the pressure of the gas is in the range of 1 × 10⁻² to 5 × 10² Pa and more preferably 5 × 10⁻² to 1 × 10¹ Pa. As the frequency of the power source (supplied to the target), any of the conventional direct current and alternating current may be used. In general, a direct current power source or a high frequency (rf) power source is used. A pulse power source may also be used. The so-called ionizing magnetron sputtering in which particles in the sputter are activated by generating inductive plasma between the target and the substrate may also be used.

It is preferable that the average thickness of the coating film formed by the deposition in the gas phase is in the range of 5 × 10⁻¹⁰ to 1 × 10⁻⁵ m and more preferably in the range of 1 × 10⁻⁹ to 5 × 10⁻⁷ m. When the thickness is too smaller, adhesion is insufficient. When the thickness is too larger, the coating film tends to be separated from the substrate because of the internal stress in the coating film. It is sufficient that the above coating film is formed on the surface of the fiber in an amount necessary for the reaction of sulfurization. It is not always necessary that the coating film is formed uniformly. It occasionally occurs that the reaction with oxygen and water vapor takes place because of exposure to the atmospheric air during or after the film formation and the coating film is contaminated with impurities such as oxygen and hydrogen. Where necessary, a plasma treatment, ion inplantation, ion irradiation and heat treatment may be conducted after the coating film has been formed so that the surface condition, the reactivity and the internal stress of the coating film are improved. It is desirable that the surface of the non-woven fabric is cleaned before the coating film is formed, where necessary. For the cleaning, cleaning with a solvent or the combination of cleaning with a solvent and discharge treatment can be used. The effect of the cleaning may be improved by using combinations of other methods.

As the metal or the metal compound reactive with sulfur which can be used in the present invention, alloys, oxides and nitrides can also be used. Any materials can be used as long as the sulfurization reaction takes place between the materials and sulfur in the rubber during the vulcanization. Examples of such materials include metals such as Co, Cu, Zn, Cr, Al, Ag, Ni, Pb, Ti and W; alloys of two or more of these metals; and compounds of these metals such as oxides, nitrides, carbides, sulfides and sulfates of these metals. Among these materials, metals and alloys such as Co, alloys of Co and Cr, alloys of Cu and Zn and alloys of Cu and Al and oxides of these metals and alloys are preferable and Co and oxides of Co are more preferable (Japanese Patent Application Laid-Open Nos. Showa 62(1987)-87311, Showa 62(1987)-246278 and Heisei 1(1989)-290342). The compounds such as the oxides, the nitrides and the carbides may be obtained from the stoichiometric amounts of the component materials but are not limited to those obtained from the stoichiometric amounts of the component materials. It is preferable that the amount of the metal is larger than the stoichiometric amount.

When the surface of the non-woven film having the above coating film is coated with the unvulcanized rubber and the unvulcanized rubber is pressed under heating against the surface of the non-woven fabric, it is considered that adhesion takes place due to the sulfurization reaction between the above coating film and the rubber during vulcanization of the rubber. Since the vulcanization reaction and the sulfurization reaction are competitive reactions, a suitable matching of these reactions is necessary so that both reactions take place in a suitable manner. When the coating film is formed by the sputtering process, a thin film of a compound having a suitable reactivity in the sulfurization reaction can be easily formed by using a suitable amount of a reactive gas such as oxygen and nitrogen in combination with the inert gas such as Ar during the film formation.

The rubber component used for the carcass ply, the rubber-filament fiber composite and the reinforcing rubber layer is not particularly limited. For example, natural rubber (NR), butadiene rubber (BR), styrene-butadiene rubber (SBR) and isoprene rubber (IR) can be used.

As for the physical properties of the rubber composition used for the composite member, it is preferable that the tensile stress at 50% elongation (M₅₀) is in the range of 2 to 9 MPa and the tensile stress at 100% elongation (M₁₀₀) is in the range of 1 to 15 MPa and more preferably in the range of 4 to 15 MPa. It is preferable that the same rubber composition as that used for the side reinforcing rubber is used as the rubber composition for the rubber-non-woven fabric composite.

### EXAMPLES

The present invention will be described more specifically with reference to examples in the following. However, the present invention is not limited to the examples.

Various measurements were conducted by the following methods.

### (1) Microstructure of a polymer

The content of vinyl linkages in the portion of conjugated diene units (the 1,2-structure in the butadiene portion) is obtained by the infrared spectroscopy (the Morero's method).

### (2) Physical properties of a vulcanized rubber composition [dynamic storage modulus (E')]

From a slab sheet having a thickness of 2 mm which is obtained by vulcanizing a rubber composition under a condition of 160°C for 12 minutes, a sheet having a width of 5 mm and a length of 40 mm is cut out and used as a sample. Using the obtained sample, the dynamic storage modulus (E') is measured under a condition of a distance between clamps of 10 mm, an initial strain of 200 micrometers (microns), a dynamic strain of 1%, a frequency of 52 Hz, an initial temperature of 25°C, a rate of elevation of the temperature of 3°C/minute and a final temperature of 250°C.

The ratio of the minimum value of the dynamic storage modulus in the temperature range of 200 to 250°C to the value of the dynamic storage modulus at 50°C is expressed as an index. The larger the index, the smaller the decrease in the dynamic storage modulus due to elevation of the temperature.

### (3) Tensile stress

The tensile stress of a rubber composition used for a filament fiber composite and a reinforcing rubber layer is measured by the method of Japanese Industrial Standard K6301-1995.

### (4) Ride comfort of a tire

A test tire is attached to a passenger car and the ride comfort is evaluated by a feeling test by two professional drivers. The results of the test are expressed by a criterion of 1 to 10 points and the average value is used as the result of the evaluation. The larger the value, the better the ride comfort.

### (5) Run flat durability of a tire

A test tire is attached to a rim under the atmospheric pressure and, after the tire is inflated to an internal pressure of 200 kPa, the inflated tire is left in a room at 38°C for 24 hours. Then, the internal pressure is released to the atmospheric pressure by opening the valve core, and the tire is subjected to a drum driving test under a specified load at a speed of 89 km/hour at a room temperature of 38°C. The distance driven before a damage took place is used as the run flat durability. The run flat durability is expressed as an index based on the result of a control, which is set at 100. The larger the index, the better the run flat durability. The specified loads are as follows: 4.58 kN (467 kgf) for a radial tire for passenger cars having a size of 205/60R15; 4.32 kN (440 kgf) when the size is 205/55R16; 4.06 kN (414 kgf) when the size is 215/45R17; 4.6 kN (470 kg) for a radial tire for passenger cars having a size of 225/45ZR17; 5.4 kN (550 kg) for a radial tire for passenger cars having a size of 225/55R17; and 5.14 kN (524 kg) for a radial tire for passenger cars having a size of 245/45ZR17.

### (6) Rolling resistance

Rolling resistance is measured by coasting method under a condition of an internal pressure of a tire of 1.7 kg/cm², a load of 100% based on the value of the Japanese Industrial Standard and an initial speed of inertial driving of 100 km/hour. The result is expressed by an index based on the result of a control, which is set at 100. The smaller the index, the smaller the rolling resistance.

Abbreviations used in the tables are shown in the following.

### 1) Molecular weight

Mw: Weight-average molecular weight
Mw/Mn: Molecular weight distribution

### 2-1) End modifiers for carbon black

TTC: tin tetrachloride (SnCl₄)
TBTC: tributyltin chloride(Bu₃SnCl)
DOTDC: dioctyltin dichloride (Oct₂SnCl₂)
DBTDC: dibutyltin dichloride (Bu₂SnCl₂)
DMABP: 4-(dimethylamino)benzophenone
DMABA: 4-dimethylaminobenzylideneaniline
DMABB: 4-dimethylaminobenzylidenebutylamine 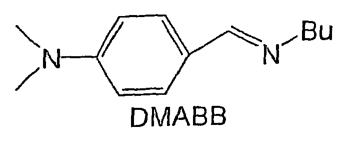
DMI: dimethylimidazolidinone 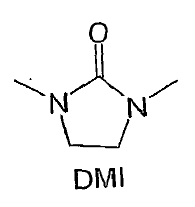
NMP: N-methylpyrrolidone 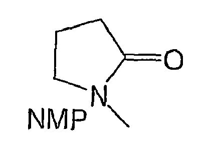
c-MDI: crude MDI; manufactured by NIPPON POLYURETHANE Co., Ltd.; MR400

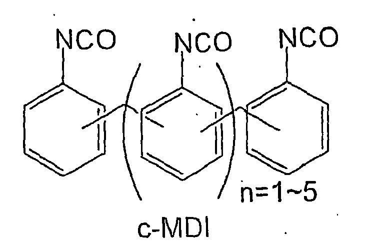

### 2-2) End modifiers for both of inorganic fillers and carbon black

TEOS: tetraethoxysilane
TEOSDI: 1-{3-(triethoxysilyl)propyl}-4,5-dihydroimidazole 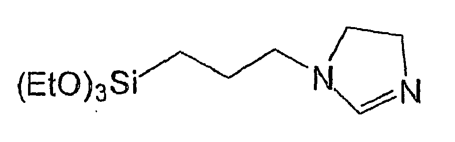
S340: N-(1,3-dimethylbutylidene)-3-(triethoxysilyl)-1-propaneamine 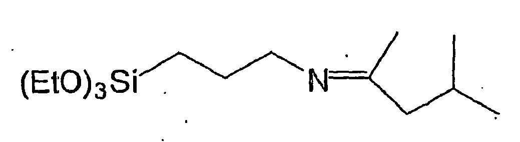
DEAPTE: dimethylaminopropyltriethoxysilane 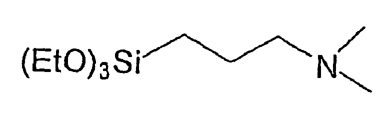
GPEOS: 3-glycidoxypropyltriethoxysilane

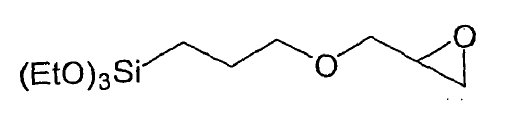

### 3) Modifying initiator

LHMI: a reaction product of n-butyllithium (n-BuLi) and hexamethyleneimine (HMI)

### 4) Compounding ingredients

### Component (A)

BR01: [a trade mark; manufactured by JSR Corporation; cis-1,4-polybutadiene; the content of vinyl linkages: 2.5%.]
Buna VI 47-0: a trade mark; manufactured by BAYER AKTIENGESELLSCHAFT; a butadiene rubber; the content of vinyl linkages: 47%.
Buna VI 70-0 HM: a trade mark; manufactured by BAYER AKTIENGESELLSCHAFT; a butadiene rubber; the content of vinyl linkages: 70%.
Buna VI 80-0 HM: a trade mark; manufactured by BAYER AKTIENGESELLSCHAFT; a butadiene rubber; the content of vinyl linkages: 80%.

### Component (B): heat resistance improver

Compound A represented by general formula (I): 1,6-bis(N,N'-dibenzylthiocarbamoyldithio)hexane (VULCUREN TRIAL PRODUCT KA9188; manufactured by BAYER AKTIENGESELLSCHAFT).
Compound B represented by general formula (I): 1,6-bis(N,N'-dimethylthiocarbamoyldithio)hexane (a tentative synthesized product).
Compound C represented by general formula (I): 1,6-bis(N,N'-diethylthiocarbamoyldithio)hexane (a tentative synthesized product).
Compound D represented by general formula (I): 1,6-bis(N,N'-di(2-ethylhexyl)thiocarbamoyldithio)hexane (a tentative synthesized product).
Compound E represented by general formula (I): 1,6-bis(benzothiazolyldithio)hexane (a tentative synthesized product).
Citraconimide compound A: PERKALINK 900 [a trade mark; manufactured by FLEXSYS K.K.].
Citraconimide compound B: N,N'-m-phenylene-biscitraconimide (a tentative synthesized product).
Acrylate A: KAYARAD D-310 [a trade mark; manufactured by NIPPON KAYAKU Co., Ltd.].
Acrylate B: KAYARAD DPHA [a trade mark; manufactured by NIPPON KAYAKU Co., Ltd.].
Acrylate C: KAYARAD D-330 [a trade mark; manufactured by NIPPON KAYAKU Co., Ltd.].

### (C) Other compounding ingredients

1) Carbon black
   NPG: GPF manufactured by ASAHI CARBON Co., Ltd.; trade mark: #ASAHI NPG.
   #55: FEF manufactured by ASAHI CARBON Co., Ltd.; trade mark: ASAHI #55.
   #60: FEF manufactured by ASAHI CARBON Co., Ltd.; trade mark: ASAHI #60.
2) Softener: "DIANA PROCESS OIL NP-24" [a trade mark; manufactured by IDEMITSU KOSAN Co., Ltd.].
3) Zinc oxide: No. 3 [a trade mark; manufactured by MITSUI MINING & SMELTING Co., Ltd.]
4) Stearic acid: "LUNAC RC BEADS" [a trade mark; manufactured by KAO Corporation].
5) Antioxidant: NOCRAC 6C; a trade mark; manufactured by OUCHISHINKO CHEMICAL INDUSTRIAL Co., Ltd.; N-phenyl-N'-(1,3-dimethylbutyl)-p-phenylenediamine.
6) Vulcanization accelerator: NOCCELOR NS; a trade mark; manufactured by OUCHISHINKO CHEMICAL INDUSTRIAL Co., Ltd.; N-tert-butyl-2-benzothiazolyl sulfenamide.
7) Sulfur: MUCRON-OT; a trade mark; manufactured by SHIKOKU Corporation.
8) Silica: NIPSIL AQ; a trade mark; manufactured by NIPPON SILICA INDUSTRIAL Co., Ltd..
9) Silane coupling agent: Si69; a trade mark; manufactured by DEGUSSA AG.

Processes [I] to [III] for producing polymers used as the rubber component will be described in the following.

[I] Conjugated diene based polymers having a content of vinyl linkages of 25% or more and modified conjugated diene based polymers obtained therefrom (for carbon black-compounded rubber compositions)

### Preparation Examples 1 to 18 (BR-based polymers A, B, I to X; batch polymerization)

Into a 8 liter pressure-resistant reactor having a jacket for adjusting the temperature, the reactor which had been dried and purged with nitrogen, 3 kg of cyclohexane, 500 g of butadiene monomer and 0.225 mmole of ditetrahydrofurylpropane (DTHFP) were placed. After 4.5 mmole of n-butyllithium (BuLi) is added to the resultant mixture, the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 0.11 ml of SnCl₄ (TTC; a 1 M cyclohexane solution) is added as the end modifier and the modification reaction is allowed to proceed for 30 minutes. To the resultant polymerization system, 0.5 ml of a 5% isopropanol solution of 2,6-di-t-butyl-p-cresol (BHT) is added to terminate the polymerization. The obtained polymer is dried by a conventional process and polymer A is obtained.

Polymers B and I to X were obtained by the same procedures as those conducted for producing polymer A except that BuLi and DTHFP were used in amounts shown in Table 1 and end modifiers shown in Table 1 were used in amounts also shown in Table 1.

Polymer Y is obtained in the same manner as in Preparation Example 1 except that TTC as the end modifier is not used.

The microstructures (the content of vinyl linkages), the molecular weights (Mw) and the molecular weight distributions (Mw/Mn) of polymers A, B, I to Y were measured. The results are shown in Table 1.

### Preparation Examples 19 to 21 (BR-based polymers Y, Z and AA; batch polymerization; using a modifying initiator)

Into a 8 liter pressure-resistant reactor having a jacket for adjusting the temperature, the reactor which had been dried and purged with nitrogen, 3 kg of cyclohexane, 500 g of butadiene monomer and 1.6 mmole of ditetrahydrofurylpropane (DTHFP) were placed. After 4 mmole of n-butyllithium (BuLi) is added to the resultant mixture, 0.8 mmole of hexamethyleneimine (HMI) is quickly added and the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 0.81 ml of SnCl₄ (TTC; a 1 M cyclohexane solution) is added as the end modifier and the modification reaction is allowed to proceed for 30 minutes. To the resultant polymerization system, 0.5 ml of a 5% isopropanol solution of BHT is added to terminate the polymerization. The obtained polymer is dried by a conventional process and polymer Z is obtained.

Polymer Y is obtained by the same procedures as those conducted for producing polymer AA except that BuLi is used in an amount shown in Table I and an end modifier shown in Table 1 is used.

The microstructures (the content of vinyl linkages), the molecular weights (Mw) and the molecular weight distributions (Mw/Mn) of the obtained modified butadiene polymers Z and AA were measured. The results are shown in Table 1.

**Table 1 - 1**

| Preparation Example | 1 | 2 | 3 | 4 | 5 | 6 | 7 |
|---|---|---|---|---|---|---|---|
| BR-based polymer (batch polymerization) | A | B | I | J | K | L | M |
| Amount of n-BuLi (mmole) | 4.5 | 3 | 4 | 4 | 4 | 4 | 5 |
| Amount of DTHFP (mmole) | 0.225 | 0.18 | 1.6 | 1.6 | 1.6 | 1.6 | 1.6 |
| Chain end modifier amount (mmole) | TTC 0.11 | TTC 0.11 | TTC 0.8 | TBTC 3.2 | DOTDC 1.6 | DBTDC 1.6 | TEOSDI 3.2 |
| Modifying initiator | - | - | - | - | - | - | - |
| Molecular weight | | | | | | | |
| Mw(× 10,000) | 20.0 | 40.0 | 65.0 | 23.0 | 38.0 | 37.0 | 29.0 |
| Mw/Mn | 1.1 | 1.2 | 1.8 | 1.1 | 1.3 | 1.3 | 1.3 |
| Microstructure | | | | | | | |
| content of vinyl linkages (%) | 25 | 25 | 50 | 50 | 51 | 49 | 48 |

**Table 1 - 2**

| Preparation Example | 8 | 9 | 10 | 11 | 12 | 13 | 14 |
|---|---|---|---|---|---|---|---|
| BR-based polymer (batch polymerization) | N | O | P | Q | R | S | T |
| Amount of n-BuLi (mmole) | 4 | 4 | 4 | 4 | 4 | 5.5 | 5.5 |
| Amount of DTHFP (mmole) | 1.6 | 1.6 | 1.6 | 1.6 | 1.6 | 1.6 | 1.6 |
| Chain end modifier amount (mmole) | DMABP 3.2 | DMA BA 3.2 | DMABB 3.2 | DMI 3.2 | NMP 3.2 | S340 4.1 | c-MDI 3 |
| Modifying initiator | - | - | - | - | - | - | - |
| Molecular weight | | | | | | | |
| Mw (× 10,000) | 23.0 | 23.0 | 23.0 | 25.0 | 25.0 | 28.0 | 36.0 |
| Mw/Mn | 1.1 | 1.1 | 1.1 | 1.1 | 1.1 | 1.3 | 1.4 |
| Microstructure | | | | | | | |
| content of vinyl linkages (%) | 48 | 52 | 52 | 51 | 49 | 52 | 51 |

**Table 1 - 3**

| Preparation Example | 15 | 16 | 17 | 18 | 19 | 20 | 21 |
|---|---|---|---|---|---|---|---|
| BR-based polymer (batch polymerization) | U | V | W | X | Y | Z | AA |
| Amount of n-BuLi (mmole) | 4 | 4 | 4 | 4 | 4 | 4 | 5.5 |
| Amount of DTHFP (mmole) | 1.6 | 1.6 | 0.8 | 0.4 | 1.6 | 1.6 | 1.6 |
| Chain end modifier | TTC/ DMI | TTC/ TBTC | TIC | TTC | TTC | TTC | c-MDI |
| amount (mmole) | 0.4/1.6 | 0.4/1.6 | 0.8 | 0.8 | 0.11 | 0.8 | 0.8 |
| Modifying initiator | - | - | - | - | LHMI | LHMI | LHMI |
| Molecular weight | | | | | | | |
| Mw (× 10,000) | 42.0 | 38.0 | 63.0 | 64.0 | 23.5 | 60.0 | 38.0 |
| Mw/Mn | 1.3 | 1.2 | 1.7 | 1.8 | 1.1 | 1.9 | 1.3 |
| Microstructure | | | | | | | |
| content of vinyl linkages (%) | 50 | 48 | 41 | 30 | 52 | 51 | 52 |

### Preparation Examples 22 to 27 (BR-based polymers C to H; continuous polymerization)

Into a 8 liter pressure-resistant reactor having a jacket for adjusting the temperature, the reactor which had been dried and purged with nitrogen, a 15% by mole of dried cyclohexane solution of butadiene is continuously introduced at a rate of 200 g per minute. Through the same port, a cyclohexane solution (1 mole/liter) of ditetrahydrofurylpropane (DTHFP) and an n-hexane solution (4.5 mmole/liter) of n-butyllithium (BuLi) were continuously introduced at rates of 0.03 mmole/minute and 0.3 mmole/minute, respectively. The polymerization system is always kept at 80°C. The formed polymer is continuously taken out from an upper portion of the reactor and placed into a 1% isopropanol solution of BHT so that a polymer is obtained. The polymerization system is completely homogeneous and transparent without precipitates from the start to the end of the polymerization. The conversion of the polymerization is about 100%. The solid substance of the obtained polymer is dried and rubbery polymer C is obtained.

Polymers D to H were obtained by the same procedures as those conducted for producing polymer C except that BuLi and DTHFP were introduced at rates (mmole/minute) shown in Table 2.

The microstructures (the content of vinyl linkages), the molecular weights (Mw) and the molecular weight distributions (Mw/Mn) of butadiene polymers C to H obtained above were measured. The results are shown in Table 2.

**Table 2**

| Preparation Example | 22 | 23 | 24 | 25 | 26 | 27 |
|---|---|---|---|---|---|---|
| BR-based polymer (continuous polymerization) | C | D | E | F | G | H |
| Amount of n-BuLi (mmole/min) | 0.3 | 0.15 | 0.2 | 0.2 | 0.2 | 0.2 |
| Amount of DTHFP (mmole/min) | 0.03 | 0.02 | 0.03 | 0.04 | 0.06 | 0.15 |
| Molecular weight | | | | | | |
| Mw (× 10,000) | 35.0 | 78.0 | 50.0 | 50.0 | 50.0 | 50.0 |
| Mw/Mn | 3.8 | 3.7 | 2.1 | 1.9 | 2.1 | 2.1 |
| Microstructure | | | | | | |
| content of vinyl linkages (%) | 25 | 25 | 30 | 35 | 40 | 50 |

### Preparation Examples 28 to 31 (SBR-based polymers BA to BD)

Into a 8 liter pressure-resistant reactor having a jacket for adjusting the temperature, the reactor which had been dried and purged with nitrogen, 3 kg of cyclohexane, 475 g of butadiene monomer, 25 g of styrene and 2.5 mmole of ditetrahydrofurylpropane (DTHFP) were placed. After 5.5 mmole of n-butyllithium (BuLi) is added to the resultant mixture, the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 5 ml of c-MDI (a 1 M cyclohexane solution) is added and the modification reaction is allowed to proceed for 30 minutes. To the resultant polymerization system, 0.5 ml of a 5% isopropanol solution of 2,6-di-t-butyl-p-cresol (BHT) is added to terminate the polymerization. The obtained polymer is dried by a conventional process and polymer BA is obtained.

Polymer BB is obtained by the same procedures as those conducted for producing polymer BA except that butadiene and styrene were used in amounts shown in Table 3.

Polymers BC and BD were obtained by the same procedures as those conducted for producing polymers BA and BB except that n-BuLi is used in amounts shown in Table 3 and c-MDI as the end modifier is not used.

The microstructures (the content of vinyl linkages), the molecular weights (Mw) and the molecular weight distributions (Mw/Mn) of polymers BA to BD which were styrene-butadiene copolymers modified at the ends or not modified at the ends were measured. The results are shown in Table 3.

### Preparation Examples 32 and 33 (SBR-based polymers BE and BF)

Into a 8 liter pressure-resistant reactor having a jacket for adjusting the temperature, the reactor which had been dried and purged with nitrogen, 3 kg of cyclohexane, 475 g of butadiene monomer, 25 g of styrene, 0.2 mmole of ditetrahydrofurylpropane (DTHFP) and 0.2 mmole of potassium tert-amylate as a cyclohexane solution were placed. After 4.5 mmole of n-butyllithium (n-BuLi) is added to the resultant mixture, the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, isopropanol is added to terminate the polymerization. The obtained polymer is dried by a conventional process and polymer BE is obtained.

Polymer BF is obtained by the same procedures as those conducted for producing polymer BE except that butadiene and styrene were used in amounts shown in Table 3.

The microstructures (the content of vinyl linkages), the molecular weights (Mw) and the molecular weight distributions (Mw/Mn) of polymers BE and BF obtained above were measured. The results are shown in Table 3.

**Table 3**

| Preparation Example | 28 | 29 | 30 | 31 | 32 | 33 |
|---|---|---|---|---|---|---|
| SBR-based polymer (batch polymerization) | BA | BB | BC | BD | BE | BF |
| Amount of styrene (g) | 25 | 100 | 25 | 100 | 25 | 100 |
| Amount of butadiene (g) | 475 | 400 | 475 | 400 | 475 | 400 |
| Amount of n-BuLi (mmole) | 5.5 | 5.5 | 4.5 | 4.5 | 4.5 | 4.5 |
| Amount of DTHFP (mmole) | 2.5 | 2.5 | 2.5 | 2.5 | 0.2 | 0.2 |
| Chain end modifier amount (mmole) | c-MDI 5 | c-MDI 5 | - - | - - | - - | - - |
| Molecular weight | | | | | | |
| Mw (× 10,000) | 37.0 | 37.0 | 24.0 | 34.0 | 23.0 | 23.0 |
| Mw/Mn | 1.3 | 1.3 | 1.0 | 1.0 | 1.1 | 1.1 |
| Microstructure | | | | | | |
| content of vinyl linkages (%) | 54 | 54 | 55 | 53 | 18 | 18 |

[II] Conjugated diene based polymers having a content of vinyl linkages of 25% or more and modified conjugated diene based polymers obtained therefrom (for a reinforcing inorganic filler and carbon-compounded rubber)

### Preparation Examples 34 to 36 (polymers AB to AD)

Into a 8 liter pressure-resistant reactor having a jacket for adjusting the temperature, the reactor which had been dried and purged with nitrogen, 3 kg of cyclohexane, 500 g of butadiene monomer and 0.05 mmole of ditetrahydrofurylpropane (DTHFP) were placed. After 4 mmole of n-butyllithium

(BuLi) is added to the resultant mixture, the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 0.5 ml of a 5% isopropanol solution of 2,6-di-t-butyl-p-cresol (BHT) is added to terminate the polymerization. The obtained polymer is dried by a conventional process and polymer AB is obtained.

Polymers AC and AD were obtained by the same procedures as those conducted for producing polymer AB except that DTHFP is used in amounts shown in Table 1.

The microstructures (the content of vinyl linkages), the molecular weights (Mw) and the molecular weight distributions (Mw/Mn) of polymers A to C obtained above were measured. The results are shown in Table 4.

### Preparation Examples 37 to 41 (polymers AE to AI)

Into a 8 liter pressure-resistant reactor having a jacket for adjusting the temperature, the reactor which had been dried and purged with nitrogen, 3 kg of cyclohexane, 500 g of butadiene monomer and 1.6 mmole of ditetrahydrofurylpropane (DTHFP) were placed. After 5 mmole of n-butyllithium (BuLi) is added to the resultant mixture, the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 4.3 ml of tetraethoxysilane (TEOS; a 1 M cyclohexane solution) is added as the modifier and a modification reaction is allowed to proceed for 30 minutes. To the resultant polymerization system, 0.5 ml of a 5% isopropanol solution of 2,6-di-t-butyl-p-cresol (BHT) is added to terminate the polymerization. The obtained polymer is dried by a conventional process and polymer AE is obtained.

Polymers AF to AI were obtained by the same procedures as those conducted for producing polymer AE except that n-BuLi is used in amounts shown in Table 1 and modifiers shown in Table 1 were used in amounts also shown in Table 1.

The microstructures (the content of vinyl linkages), the molecular weights (Mw) and the molecular weight distributions (Mw/Mn) of polymers AE to AI obtained above were measured. The results are shown in Table 4.

### Preparation Example 42 (Polymer AJ)

Into a 8 liter pressure-resistant reactor having a jacket for adjusting the temperature, the reactor which had been dried and purged with nitrogen, 3 kg of cyclohexane, 500 g of butadiene monomer and 1.6 mmole of ditetrahydrofurylpropane (DTHFP) were placed. After 5 mmole of n-butyllithium (BuLi) is added to the resultant mixture, 4.5 mmole of hexamethyleneimine (HMI) is quickly added and the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 4.5 mmole of 1-{3-(triethoxysilyl)propyl}-4,5-dihydrolmidazole (TEOSDI; a 1 M cyclohexane solution) is added and the modification reaction is allowed to proceed for 30 minutes. To the resultant polymerization system, 0.5 ml of a 5% isopropanol solution of 2,6-di-t-butyl-p-cresol (BHT) is added to terminate the polymerization. The obtained polymer is dried by a conventional process and polymer AJ is obtained.

The microstructure (the content of vinyl linkages), the molecular weight (Mw) and the molecular weight distribution (Mw/Mn) of polymer AJ obtained above were measured. The results are shown in Table 4.

**Table 4 - 1**

| Preparation Example | 34 | 35 | 36 | 37 | 38 |
|---|---|---|---|---|---|
| Polymer | AB | AC | AD | AE | AF |
| Amount of n-BuLi (mmole) | 4 | 4 | 4 | 5 | 5 |
| Amount of DTHFP(mmole) | 0.05 | 0.4 | 1.6 | 1.6 | 1.6 |
| Chain end modifier | - | - | - | TEOS | TEOSDI |
| amount (mmole) | - | - | - | 4.3 | 4.5 |
| Modifying initiator | - | - | - | - | - |
| Molecular weight | | | | | |
| Mw (× 10,000) | 23.0 | 22.0 | 24.0 | 29.0 | 31.0 |
| Mw/Mn | 1.1 | 1.1 | 1.1 | 1.4 | 1.3 |
| Microstructure | | | | | |
| content of vinyl linkages (%) | 15 | 38 | 50 | 51 | 49 |

**Table 4 - 2**

| Preparation Example | 39 | 40 | 41 | 42 |
|---|---|---|---|---|
| Polymer | AG | AH | AI | AJ |
| Amount of n-BuLi(mmole) | 5.5 | 5 | 5 | 5 |
| Amount of DTHFP(mmole) | 1.6 | 1.6 | 1.6 | 1.6 |
| Chain end modifier | S340 | DEAPTE | GPEOS | TEOSDI |
| amount (mmole) | 4.8 | 4.5 | 5.1 | 4.5 |
| Modifying initiator | - | - | - | LHMI |
| Molecular weight | | | | |
| Mw (× 10,000) | 28.0 | 26.0 | 29.0 | 32.0 |
| Mw/Mn | 1.3 | 1.4 | 1.3 | 1.3 |
| Microstructure | | | | |
| content of vinyl linkages (%) | 48 | 48 | 50 | 51 |

[III] Conjugated diene based polymers having small contents of the vinyl linkage and modified conjugated diene based polymers obtained therefrom

### Preparation Example 43 (Polymer a)

Into a 8 liter pressure-resistant reactor having a jacket for adjusting the temperature, the reactor which had been dried and purged with nitrogen, 3 kg of cyclohexane, 500 g of butadiene monomer and 0.2 mmole of ditetrahydrofurylpropane (DTHFP) were placed. After 4 mmole of n-butyllithium (n-BuLi) is added to the resultant mixture, the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 0.5 ml of a 5% isopropanol solution of 2,6-di-t-butyl-p-cresol (BHT) is added to terminate the polymerization. The obtained polymer is dried by a conventional process and polymer a is obtained.

The microstructure (the content of vinyl linkages), the molecular weight (Mw) and the molecular weight distribution (Mw/Mn) of polymer a obtained above were measured. The results are shown in Table 5.

### Preparation Example 44 (Polymer b)

Into a 8 liter pressure-resistant reactor having a jacket for adjusting the temperature, the reactor which had been dried and purged with nitrogen, 3 kg of cyclohexane, 500 g of butadiene monomer and 0.2 mmole of ditetrahydrofurylpropane (DTHFP) were placed. After 4 mmole of n-butyllithium (n-BuLi) is added to the resultant mixture, the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 0.8 ml of SnCl₄ (a 1 M cyclohexane solution) is added as the end modifier and the modification reaction is allowed to proceed for 30 minutes. Then, 0.5 ml of a 5% isopropanol solution of 2,6-di-t-butyl-p-cresol (BHT) is added to the polymerization system to terminate the polymerization. The obtained polymer is dried by a conventional process and polymer b is obtained.

The microstructure (the content of vinyl linkages), the molecular weight (Mw) and the molecular weight distribution (Mw/Mn) of polymer b obtained above were measured. The results are shown in Table 5.

### Preparation Examples 45 to 49 (Polymers c to g)

Into a 8 liter pressure-resistant reactor having a jacket for adjusting the temperature, the reactor which had been dried and purged with nitrogen, 3 kg of cyclohexane, 500 g of butadiene monomer and 1.6 mmole of ditetrahydrofurylpropane (DTHFP) were placed. After 4 mmole of n-butyllithium (n-BuLi) is added to the resultant mixture, 4 mmole of hexamethyleneimine (HMI) is quickly added and the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 0.8 ml of SnCl₄ (a 1 M cyclohexane solution) is added as the end modifier and the modification reaction is allowed to proceed for 30 minutes. Then, 0.5 ml of a 5% isopropanol solution of 2,6-di-t-butyl-p-cresol (BHT) is added to the polymerization system to terminate the polymerization. The obtained polymer is dried by a conventional process and polymer c is obtained.

Polymers d to g were obtained by the same procedures as those conducted for producing polymer c except that n-BuLi and HMI were used in amounts shown in Table 1 and modifiers shown in Table 1 were used in amounts also shown in Table 1.

The microstructures (the content of vinyl linkages), the molecular weights (Mw) and the molecular weight distributions (Mw/Mn) of polymers c to g obtained above were measured. The results are shown in Table 5.

**Table 5 - 1**

| Preparation Example | 43 | 44 | 45 | 46 | 47 | 48 | 49 |
|---|---|---|---|---|---|---|---|
| Polymer | a | b | c | d | e | f | g |
| Amount of n-BuLi (mmole) | 4 | 4 | 4 | 6 | 5 | 4 | 4 |
| Amount of HMI (mmole) | 0 | 0 | 4 | 4.5 | 5 | 4 | 4 |
| Chain end modifier | - | TTC | TTC | c-MDI | DEABP | NMP | DMI |
| amount (mmole) | - | 0.8 | 0.8 | 1 | 4.5 | 3.5 | 3.5 |
| Molecular weight | | | | | | | |
| Mw (× 10,000) | 23.0 | 65.0 | 65.0 | 38.0 | 26.0 | 24.0 | 23.0 |
| Mw/Mn | 1.1 | 1.8 | 1.8 | 1.4 | 1.4 | 1.1 | 1.2 |
| Microstructure | | | | | | | |
| content of vinyl linkages (%) | 12 | 13 | 11 | 12 | 13 | 12 | 10 |

**Table 5 - 2**

| Preparation Example | 50 | 51 | 52 | 53 | 54 | 55 |
|---|---|---|---|---|---|---|
| Polymer | h | i | j | k | l | m |
| Amount of n-BuLi (mmole) | 5 | 5 | 5.5 | 5 | 5 | 5 |
| Amount of HMI (mmole) | - | - | - | - | - | 0.45 |
| Chain end modifier | TEOS | TEOSDI | S340 | DMAPTE | GPEOS | TEOSDI |
| amount (mmole) | 4.3 | 4.5 | 4.8 | 4.5 | 5.1 | 4.5 |
| Molecular weight | | | | | | |
| Mw (× 10,000) | 28.0 | 31.0 | 29.0 | 27.0 | 31.0 | 31.0 |
| Mw/Mn | 1.4 | 1.3 | 1.3 | 1.4 | 1.3 | 1.3 |
| Microstructure | | | | | | |
| content of vinyl linkages (%) | 16 | 12 | 15 | 14 | 14 | 12 |

### Preparation Examples 50 to 54 (Polymers h to l)

Into a 8 liter pressure-resistant reactor having a jacket for adjusting the temperature, the reactor which had been dried and purged with nitrogen, 3 kg of cyclohexane, 500 g of butadiene monomer and 0.2 mmole of ditetrahydrofurylpropane (DTHFP) were placed. After 5 mmole of n-butyllithium (BuLi) is added to the resultant mixture, the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 4.3 ml of tetraethoxysilane (TEOS, a 1 M cyclohexane solution) is added as the end modifier and the modification reaction is allowed to proceed for 30 minutes. Then, 0.5 ml of a 5% isopropanol solution of 2,6-di-t-butyl-p-cresol (BHT) is added to the polymerization system to terminate the polymerization. The obtained polymer is dried by a conventional process and polymer B is obtained.

Polymers **h** to **l** were obtained by the same procedures as those conducted for producing polymer B except that BuLi is used in amounts shown in Table 1 and modifiers shown in Table 1 were used in amounts also shown in Table 1.

The microstructures (the content of vinyl linkages), the molecular weights (Mw) and the molecular weight distributions (Mw/Mn) of polymers **h** to **l** obtained above were measured. The results are shown in Table 5.

### Preparation Example 55 (Polymer m)

Into a 8 liter pressure-resistant reactor having a jacket for adjusting the temperature, the reactor which had been dried and purged with nitrogen, 3 kg of cyclohexane, 500 g of butadiene monomer and 0.2 mmole of ditetrahydrofurylpropane (DTHFP) were placed. After 5 mmole of n-butyllithium (BuLi) is added to the resultant mixture, 0.45 mmole of hexamethyleneimine (HMI) is quickly added and the polymerization is allowed to proceed at an initial temperature of 40°C for 1 hour. The polymerization is allowed to proceed while the temperature is elevated and the temperature in the jacket is adjusted so that the final temperature of the reaction system did not exceed 75°C. The polymerization system is completely homogeneous and transparent without precipitates from the start to the end of the polymerization. The conversion of the polymerization is about 100%.

To the obtained polymerization system, 4.5 ml of 1-{3-(triethoxysilyl)propyl}-4,5-dihydroimidazole (TEOSDI; a 1 M cyclohexane solution) is added as the end modifier and the modification reaction is allowed to proceed for 30 minutes. To the resultant polymerization system, 0.5 ml of a 5% isopropanol solution of BHT is added to terminate the polymerization. The obtained polymer is dried by a conventional process and polymer **m** is obtained.

The microstructure (the content of vinyl linkages), the molecular weight (Mw) and the molecular weight distribution (Mw/Mn) of polymer **m** obtained above were measured. The results are shown in Table 5.

Rubber compositions are prepared by the formulations shown in Tables and pneumatic tires are prepared. The properties of the pneumatic tires of the present invention thus prepared are evaluated.

### Example 1 to 15 and Comparative Examples 1 to 6 (Embodiment 1)

Rubber compositions are prepared by the formulations shown in Table 6. The prepared rubber compositions are applied in a rubber member disposed in a side wall portion of a tire. The rubber member is arranged at the inside of the side portion of the tire (shown in Figure 1) in Examples 1 to 4 and 8 to 15 and Comparative Examples 1,2 and 4 to 6 and at the outside of the carcass layer in the side portion of the tire (not shown in Figures) in Examples 5 to 7 and Comparative Example 3. A radial tire for passenger car having a size of 205/60R15 is prepared by the conventional process. The maximum thickness of the rubber member layer is shown in Table 1 as the gauge of the rubber member. The ride comfort, the run flat durability and the rolling resistance of the prepared tire are evaluated. The results are shown in Table 6. With respect to the rolling resistance and the run flat durability, the results in Comparative Example 1 are used as the control for the results in Examples 1 to 3, the results in Comparative Example 2 are used as the control for the results in Example 4, the results in Comparative Example 3 are used as the control for the results in Examples 5 to 7, the results in Comparative Example 4 are used as the control for the results in Examples 8 to 11, the results in Comparative Example 5 are used as the control for the results in Example 12 and the results in Comparative Example 6 are used as the control for the results in Examples 13 to 15 ewsdpwctively.

**Table 6 - 1**

| Example | | | 1 | 2 | 3 |
|---|---|---|---|---|---|
| Comparative Example | | 1 | | | |
| Formulation of side rubber member (part by weight) | | | | | |
| | | | | | |
| Component (A) | | | | | |
| | natural rubber | 20.0 | 20.0 | 20.0 | 20.0 |
| | BR01 | 80.0 | 80.0 | 80.0 | 80.0 |
| | Buna VI 47-0 | - | - | - | - |
| | Buna VI 70-0 HM | - | - | - | - |
| | Buna VI 80-0 HM | - | - | - | - |
| | conjugated diene based polymer A | - | - | - | - |
| Component (B) | | | | | |
| | compound A of general formula (I) | - | 3.0 | - | - |
| | compound B of general formula (I) | - | - | - | - |
| | compound C of general formula (I) | - | - | - | - |
| | compound D of general formula (I) | - | - | - | - |
| | compound E of general formula (I) | - | - | - | - |
| | citraconimide compound A | - | - | 3.0 | - |
| | citraconimide compound B | - | - | - | - |
| | acrylate A | - | - | - | 3.0 |
| | acrylate B | - | - | - | - |
| | acrylate C | - | - | - | - |
| Component (C) | | | | | |
| | carbon black (ASAHI #55) | 60.0 | 60.0 | 60.0 | 60.0 |
| | Other compounding ingredients | | | | |
| | softener | 3.0 | 3.0 | 3.0 | 3.0 |
| | zinc oxide | 5.0 | 5.0 | 5.0 | 5.0 |
| | stearic acid | 1.0 | 1.0 | 1.0 | 1.0 |
| | 6C | 2.0 | 2.0 | 2.0 | 2.0 |
| | NS | 2.50 | 2.50 | 2.50 | 2.50 |
| | sulfur | 6.00 | 5.00 | 5.00 | 5.00 |
| Rubber member | | | | | |
| position (inside or outside of carcass) | | inside | inside | inside | inside |
| gauge of rubber member (mm) | | 10.0 | 9.0 | 9.0 | 9.0 |
| Physical properties of rubber | | | | | |
| dynamic storage modulus at 50°C (MPa) | | 11.5 | 11.4 | 13.6 | 14.8 |
| ratio of minimum value of dynamic | | 70.0 | 87.4 | 85.3 | 75.2 |
| | storage modulus in 200 ∼ 250°C to dynamic storage modulus at 50°C (index) | | | | |
| Properties of tire | | | | | |
| ride comfort (vehicle test) | | 5.0 | 5.5 | 5.5 | 5.5 |
| rolling resistance (index) | | 100 | 98 | 98 | 98 |
| run flat durability (index) | | 100 | 109 | 106 | 104 |

**Table 6 - 2**

| Example | | | 4 | | 5 | 6 | 7 |
|---|---|---|---|---|---|---|---|
| Comparative Example | | 2 | | 3 | | | |
| Formulation of side rubber member (part by weight) | | | | | | | |
| Component (A) | | | | | | | |
| | natural rubber | 20.0 | 20.0 | 20.0 | 20.0 | 20.0 | 20.0 |
| | BR01 | 80.0 | 80.0 | 80.0 | 80.0 | 80.0 | 80.0 |
| | Buna VI 47-0 | - | - | - | - | - | - |
| | Buna VI 70-0 HM | - | - | - | - | - | - |
| | Buna VI 80-0 HM | - | - | - | - | - | - |
| | conjugated diene based polymer A | - | - | - | - | - | - |
| Component (B) | | | | | | | |
| | compound A of general formula (I) | - | - | - | - | - | - |
| | compound B of general formula (I) | - | 3.0 | - | - | - | - |
| | compound C of general formula (I) | - | - | - | - | - | 3.0 |
| | compound D of general formula (I) | - | - | - | - | - | - |
| | compound E of general formula (I) | - | - | - | - | - | - |
| | citraconimide compound A | - | - | - | - | 3.0 | - |
| | citraconimide compound B | - | 3.0 | - | - | - | 3.0 |
| | acrylate A | - | - | - | - | - | - |
| | acrylate B | - | 3.0 | - | - | - | - |
| | acrylate C | - | - | - | 3.0 | - | 3.0 |
| Component (C) | | | | | | | |
| | carbon black (ASAHI #55) | 60.0 | 60.0 | 40.0 | 40.0 | 40.0 | 40.0 |
| Other compounding ingredients | | | | | | | |
| | softener | 5.0 | 7.0 | 5.0 | 5.0 | 5.5 | 7.0 |
| | zinc oxide | 5.0 | 5.0 | 5.0 | 5.0 | 5.0 | 5.0 |
| | stearic acid | 1.0 | 1.0 | 1.0 | 1.0 | 1.0 | 1.0 |
| | 6C | 2.0 | 2.0 | 2.0 | 2.0 | 2.0 | 2.0 |
| | NS | 1.25 | 1.25 | 1.25 | 1.25 | 1.25 | 1.25 |
| | sulfur | 3.00 | 2.50 | 2.00 | 2.00 | 2.00 | 1.75 |
| Rubber member | | | | | | | |
| position (inside or outside of carcass) | | inside | inside | outside | outside | outside | outside |
| gauge of rubber member (mm) | | 10.0 | 8.0 | 7.0 | 6.0 | 6.0 | 6.0 |
| Physical properties of rubber | | | | | | | |
| dynamic storage modulus at 50°C (MPa) | | 8.5 | 8.5 | 5.5 | 5.5 | 5.8 | 6.1 |
| ratio of minimum value of dynamic storage modulus in 200 ∼ 250°C to dynamic storage modulus at 50°C (index) | | 60.0 | 100.0 | 52.0 | 76.0 | 86.2 | 102.0 |
| Properties of tire | | | | | | | |
| ride comfort (vehicle test) | | 5.0+ | 6.0+ | 6.5 | 7.0+ | 7.0 | 7.0 |
| rolling resistance (index) | | 100 | 95 | 100 | 98 | 97 | 98 |
| run flat durability (index) | | 100 | 112 | 100 | 112 | 109 | 118 |

**Table 6 - 3**

| Example | | | 8 | 9 | 10 | 11 |
|---|---|---|---|---|---|---|
| Comparative Example | | 4 | | | | |
| Formulation of side rubber member (part by weight) | | | | | | |
| Component (A) | | | | | | |
| | natural rubber | 20.0 | 20.0 | 20.0 | 20.0 | 20.0 |
| | BR01 | 80.0 | - | - | - | - |
| | Buna VI 47-0 | - | 80.0 | - | - | - |
| | Buna VI 70-0 HM | - | - | 80.0 | - | - |
| | Buna VI 80-0 HM | - | - | - | 80.0 | - |
| | conjugated diene based polymer A | - | - | - | - | 80.0 |
| Component (B) | | | | | | |
| | compound A of general formula (I) | - | - | - | - | - |
| | compound B of general formula (I) | - | - | - | - | - |
| | compound C of general formula (I) | - | - | - | - | - |
| | compound D of general formula (I) | - | - | - | - | - |
| | compound E of general formula (I) | - | - | - | - | - |
| | citraconimide compound A | - | - | - | - | - |
| | citraconimide compound B | - | - | - | - | - |
| | acrylate A | - | - | - | - | - |
| | acrylate B | - | - | - | - | - |
| | acrylate C | - | - | - | - | - |
| Component (C) | | | | | | |
| | carbon black (ASAHI #55) | 60.0 | 60.0 | 60.0 | 60.0 | 60.0 |
| Other compounding ingredients | | | | | | |
| | softener | 3.0 | 3.0 | 3.0 | 3.0 | 3.0 |
| | zinc oxide | 5.0 | 5.0 | 5.0 | 5.0 | 5.0 |
| | stearic acid | 1.0 | 1.0 | 1.0 | 1.0 | 1.0 |
| | 6C | 2.0 | 2.0 | 2.0 | 2.0 | 2.0 |
| | NS | 2.50 | 2.50 | 2.50 | 2.50 | 2.50 |
| | sulfur | 3.00 | 3.00 | 3.00 | 3.00 | 3.00 |
| Rubber member | | | | | | |
| | position (inside or outside of carcass) | inside | inside | inside | inside | inside |
| | gauge of rubber member (mm) | 10.0 | 7.5 | 7.5 | 7.5 | 7.5 |
| Physical properties of rubber | | | | | | |
| | ratio of minimum value of dynamic storage modulus in 200 - 250°C to dynamic storage modulus at 50°C (index) | 66.0 | 108.0 | 118.0 | 129.0 | 111.0 |
| | dynamic storage modulus at 50°C (MPa) | 10.2 | 5.2 | 5.3 | 5.5 | 5.6 |
| Properties of tire | | | | | | |
| | ride comfort (vehicle test) | 5.0 | 6.5 | 6.5 | 6.5 | 6.5 |
| | rolling resistance (index) | 100 | 96 | 97 | 97 | 92 |
| | run flat durability (index) | 100 | 110 | 111 | 116 | 115 |

**Table 6 - 4**

| Example | | | 12 | 6 | 13 | 14 | 15 |
|---|---|---|---|---|---|---|---|
| Comparative Example | | 5 | | | | | |
| Formulation of side rubber member (part by weight) | | | | | | | |
| Component (A) | | | | | | | |
| | natural rubber | 10.0 | 10.0 | 10.0 | 10.0 | 10.0 | 10.0 |
| | BR01 | 90.0 | - | 90.0 | - | - | - |
| | Buna VI 47-0 | - | - | - | - | - | - |
| | Buna VI 70-0 HM | - | - | - | - | - | - |
| | Buna VI 80-0 HM | - | - | - | - | - | - |
| | conjugated diene based polymer A | - | 90.0 | - | 90.0 | 90.0 | 90.0 |
| Component (B) | | | | | | | |
| | compound A of general formula (I) | - | - | - | - | 3.0 | 3.0 |
| | compound B of general formula (I) | - | - | - | - | - | - |
| | compound C of general formula (I) | - | - | - | - | - | - |
| | compound D of general formula (I) | - | 3.0 | - | - | - | - |
| | compound E of general formula (I) | - | - | - | 3.0 | - | - |
| | citraconimide compound A | - | - | - | - | - | - |
| | citraconimide compound B | - | - | - | - | - | - |
| | acrylate A | - | - | - | - | 3.0 | 3.0 |
| | acrylate B | - | - | - | - | - | - |
| | acrylate C | - | - | - | - | - | - |
| Component (C) | | | | | | | |
| | carbon black (ASAHI #55) | 60.0 | 60.0 | 35.0 | 35.0 | 35.0 | 35.0 |
| Other compounding ingredients | | | | | | | |
| | softener | 3.0 | 3.0 | 7.0 | 7.0 | 7.0 | 7.0 |
| | zinc oxide | 5.0 | 5.0 | 5.0 | 5.0 | 5.0 | 5.0 |
| | stearic acid | 1.0 | 1.0 | 1.0 | 1.0 | 1.0 | 1.0 |
| | 6C | 2.0 | 2.0 | 2.0 | 2.0 | 2.0 | 2.0 |
| | NS | 2.50 | 2.50 | 1.00 | 1.00 | 1.00 | 1.00 |
| | sulfur | 3.00 | 3.00 | 1.50 | 1.50 | 1.50 | 1.50 |
| Rubber member | | | | | | | |
| | position (inside or outside of carcass) | inside | inside | inside | inside | inside | inside |
| | gauge of rubber member (mm) | 10.0 | 7.0 | 10.0 | 7.0 | 7.0 | 10.0 |
| Physical properties of rubber | | | | | | | |
| | ratio of minimum value of dynamic storage modulus in 200 - 250°C to dynamic storage modulus at 50°C (index) | 63.0 | 136.0 | 47.0 | 138.0 | 143.0 | 143.0 |
| | dynamic storage modulus at 50°C (MPa) | 9.6 | 4.7 | 4.8 | 3.2 | 4.6 | 4.6 |
| Properties of tire | | | | | | | |
| | ride comfort (vehicle test) | 5.0 | 6.5+ | 5.5+ | 7.0+ | 7.0 | 6.0+ |
| | rolling resistance (index) | 100 | 90 | 100 | 86 | 88 | 92 |
| | run flat durability (index) | 100 | 108 | 100 | 106 | 128 | 188 |

It is shown by the above results that, in the safety tire prepared by arranging the rubber member in accordance with the present embodiment having the specific physical properties, the excellent ride comfort and the decrease in the rolling resistance could be achieved by the remarkable decrease in the gauge of the side wall portion and, at the same time, the excellent run flat durability could be exhibited since the decrease in the modulus at high temperatures could be suppressed.

### Examples 16 to 36 and Comparative Example 7 (Embodiment 2)

Rubber compositions are prepared by mixing 60.0 parts by weight of carbon black GPF [#NPG: a trade mark; manufactured by ASAHI CARBON Co., Ltd.], 3.0 parts by weight of a softener "DIANA PROCESS OIL NP-24" [a trade mark; manufactured by IDEMITSU KOSAN Co., Ltd.], 5.0 parts by weight of zinc oxide No. 3 [a trade mark; manufactured by MITSUI MINING & SMELTING Co., Ltd.], 1.0 part by weight of stearic acid "LUNAC RC BEADS" [a trade mark; manufactured by KAO Corporation], 2.0 parts by weight of an antioxidant "NOCRAC 6C" [a trade mark; manufactured by OUCHISHINKO CHEMICAL INDUSTRIAL Co., Ltd.; N-phenyl-N'-(1,3-dimethylbutyl)-p-phenylenediamine], 2.5 parts by weight of a vulcanization accelerator "NOCCELOR NS" [a trade mark; manufactured by OUCHISHINKO CHEMICAL INDUSTRIAL Co., Ltd.; N-tert-butyl-2-benzothiazolyl sulfenamide] and 3.0 parts by weight of sulfur "MUCRON-OT" [a trade mark; manufactured by SHIKOKU Corporation] with 100 parts by weight of rubber component (A) the type and the amount of which are shown in Table 7.

Rubber compositions are prepared by using rubber components shown in Table 7 and carbon black, a softener, zinc oxide, stearic acid, an antioxidant and a vulcanization accelerator by the same formulations as those in Examples 8 to 11.

The rubber compositions prepared above are applied in the rubber member disposed in the side wall portion as shown in Figure 1 and a radial tire for passenger having a size of 225/55R17 is prepared by the conventional process. The ride comfort, the run flat durability and the rolling resistance of the prepared tire are evaluated. The maximum thickness of the reinforcing layer of the side wall portion is shown in Table 7 as the gauge of the reinforcing rubber. The results are shown in Table 7. With respect to the rolling resistance and the run flat durability, the results in Comparative Example 7 are used as the control.

**Table 7 - 1**

| Example | | | 16 | 17 | 18 | 19 | 20 | 21 | 22 |
|---|---|---|---|---|---|---|---|---|---|
| Comparative Example | | 7 | | | | | | | |
| (BR prepared by batch polymerization) | | | | | | | | | |
| Component (A) | | | | | | | | | |
| | natural rubber (part) | 20.0 | 20.0 | 20.0 | 20.0 | 20.0 | 20.0 | 20.0 | 20.0 |
| | BR01 (part) | 80.0 | - | - | - | - | - | - | - |
| | BR polymer of Preparation Example | - | A | B | I | J | K | L | M |
| | amount (part) | 0.0 | 80.0 | 80.0 | 80.0 | 80.0 | 80.0 | 80.0 | 80.0 |
| Physical properties of rubber | | | | | | | | | |
| | ratio of minimum value of dynamic storage modulus in 200 ∼ 250°C to dynamic storage modulus at 50°C (index) | 70 | 82 | 80 | 125 | 121 | 123 | 122 | 125 |
| | dynamic storage modulus (50°C) | 10.2 | 8.0 | 8.6 | 5.1 | 5.2 | 5.4 | 5.6 | 5.5 |
| Properties of tire | | | | | | | | | |
| | gauge of reinforcing rubber (mm) | 11 | 10 | 10 | 8 | 8 | 8 | 8 | 8 |
| | ride comfort | 5.0 | 5.5 | 5+ | 6.5+ | 6.5+ | 6.5 | 6.5 | 6.5 |
| | run flat durability (index) | 100.0 | 108.0 | 113.0 | 123.0 | 128.0 | 127.0 | 126.0 | 122.0 |
| | rolling resistance (index) | 100.0 | 98.5 | 98.5 | 94.5 | 93.0 | 94.0 | 94.5 | 99.5 |

**Table 7 - 2**

| Example | 23 | 24 | 25 | 26 | 27 | 28 | 29 |
|---|---|---|---|---|---|---|---|
| Comparative Example (BR prepared by batch polymerization) | | | | | | | |
| Component (A) | | | | | | | |
| natural rubber (part) | 20.0 | 20.0 | 20.0 | 20.0 | 20.0 | 20.0 | 20.0 |
| BR01 (part) | - | - | - | - | - | - | - |
| BR polymer of Preparation Example | N | O | P | Q | R | S | T |
| amount (part) | 80.0 | 80.0 | 80.0 | 80.0 | 80.0 | 80.0 | 80.0 |
| Physical properties of rubber | | | | | | | |
| ratio of minimum value of dynamic storage modulus in 200 ∼ 250°C to dynamic storage modulus at 50°C (index) | 126 | 124 | 123 | 125 | 124 | 125 | 122 |
| dynamic storage modulus (50°C) | 5.5 | 5.4 | 5.3 | 5.5 | 5.5 | 5.6 | 5.4 |
| Properties of tire | | | | | | | |
| gauge of reinforcing rubber (mm) | 8 | 8 | 8 | 8 | 8 | 8 | 8 |
| ride comfort | 6.5 | 6.5 | 6.5+ | 6.5 | 6.5 | 6.5 | 6.5 |
| run flat durability (index) | 123.0 | 122.0 | 124.0 | 125.0 | 125.0 | 122.0 | 121.0 |
| rolling resistance (index) | 94.0 | 95.0 | 95.5 | 93.0 | 95.0 | 94.5 | 94.0 |

**Table 7 - 3**

| Example | 30 | 31 | 32 | 33 | 34 | 35 | 36 |
|---|---|---|---|---|---|---|---|
| Comparative Example (BR prepared by batch polymerization) | | | | | | | |
| Component (A) | | | | | | | |
| natural rubber (part) | 20.0 | 20.0 | 20.0 | 20.0 | 20.0 | 20.0 | 2.0 |
| BR01 (part) | - | - | - | - | - | - | - |
| BR polymer of Preparation Example | U | V | W | X | Y | Z | AA |
| amount (part) | 80.0 | 80.0 | 80.0 | 80.0 | 80.0 | 80.0 | 80.0 |
| Physical properties of rubber | | | | | | | |
| ratio of minimum value of dynamic storage modulus in 200 ∼ 250°C to dynamic storage modulus at 50°C (index) | 125 | 123 | 116 | 103 | 124 | 125 | 127 |
| dynamic storage modulus (50°C) | 5.3 | 5.1 | 5.1 | 5.4 | 5.6 | 5.4 | 5.5 |
| Properties of tire | | | | | | | |
| gauge of reinforcing rubber (mm) | 8 | 8 | 8 | 8 | 8 | 8 | 8 |
| ride comfort | 6.5 | 6.5+ | 6.5+ | 6.5 | 6.5 | 6.5 | 6.5 |
| run flat durability (index) | 124.0 | 121.0 | 125.0 | 122.0 | 122.0 | 120.0 | 127.0 |
| rolling resistance (index) | 93.5 | 93.5 | 94.0 | 94.0 | 95.5 | 93.0 | 92.5 |

### Examples 37 to 42 and Comparative Examples 8 and 9 (Embodiment 3)

Rubber compositions are prepared by the same procedures as those conducted in Example 16 except that rubber components shown in Table 8 are used in amounts also shown in Table 8 and 6.0 parts by weight of sulfur is used.

Using the prepared rubber compositions for the reinforcing layer of the side wall portion, a tire is prepared and the ride comfort, the run flat durability and the rolling resistance of the prepared tire are evaluated by the same procedures as those conducted in Example 16. The results are shown in Table 8. The maximum thickness of the reinforcing layer of the side wall portion is shown in Table 8 as the gauge of the reinforcing rubber. With respect to the rolling resistance and the run flat durability, the results in Comparative Example 8 are used as the control.

**Table 8**

| Example | | | 37 | 38 | | 39 | 40 | 41 | 42 |
|---|---|---|---|---|---|---|---|---|---|
| Comparative Example | | 8 | | | 9 | | | | |
| (BR prepared by continuous polymerization) | | | | | | | | | |
| Component (A) | | | | | | | | | |
| | natural rubber (part) | 50.0 | 50.0 | 50.0 | 20.0 | 20.0 | 20.0 | 20.0 | 20.0 |
| | BR01 (part) | 50.0 | - | - | 80.0 | - | - | - | - |
| | BR polymer of Preparation Example | - | C | D | - | E | F | G | H |
| | amount (part) | 0.0 | 50.0 | 50.0 | 0.0 | 80.0 | 80.0 | 80.0 | 80.0 |
| Physical properties of rubber | | | | | | | | | |
| | ratio of minimum value of dynamic storage modulus in 200 - 250°C to dynamic storage modulus at 50°C (index) | 73 | 83 | 81 | 61 | 102 | 108 | 114 | 122 |
| | dynamic storage modulus (50°C) | 9.3 | 7.7 | 8.5 | 7.4 | 6.6 | 6.8 | 6.8 | 6.9 |
| Properties of tire | | | | | | | | | |
| | gauge of reinforcing rubber (mm) | 9 | 10 | 10 | 9 | 8 | 8 | 8 | 8 |
| | ride comfort | 5.5 | 5.5 | 5+ | 6.0 | 6.5 | 6.5 | 6.5 | 6.5 |
| | run flat durability (index) | 100.0 | 109.0 | 114.0 | 63.0 | 110.0 | 114.0 | 118.0 | 120.0 |
| | rolling resistance (index) | 100.0 | 99.0 | 100.0 | 100.0 | 98.0 | 99.0 | 99.5 | 100.0 |

### Examples 43 to 46 and Comparative Examples 10 to 12 (Embodiment 4)

Rubber compositions are prepared by the same procedures as those conducted in Example 16 except that rubber components shown in Table 9 are used in amounts also shown in Table 9. Using the prepared rubber compositions for the reinforcing layer of the side wall portion and for the bead filler, a tire similar to those prepared in Example 16 are prepared and the ride comfort, the run flat durability and the rolling resistance of the prepared tires are evaluated by the same procedures as those conducted in Example 16. The maximum thickness of the reinforcing layer of the side wall portion is shown in Table 9 as the gauge of the reinforcing rubber. The results are shown in Table 9. With respect to the rolling resistance and the run flat durability, the results in Comparative Example 12 are used as the control.

**Table 9**

| Example | | 43 | 44 | 45 | 46 | | | |
|---|---|---|---|---|---|---|---|---|
| Comparative Example | | | | | | 10 | 11 | 12 |
| (SBR prepared by batch polymerization) | | | | | | | | |
| Component (A) | | | | | | | | |
| | natural rubber (part) | 20 | 20 | 20 | 20 | 20 | 20 | 20 |
| | BR01 (part) | - | - | - | - | - | - | 80 |
| | SBR polymer of Preparation Example | BA | BB | BC | BD | BE | BF | - |
| | amount (part) | 80 | 80 | 80 | 80 | 80 | 80 | - |
| Physical properties of rubber | | | | | | | | |
| | ratio of minimum value of dynamic storage modulus in 200 - 250°C to dynamic storage modulus at 50°C (index) | 127 | 125 | 126 | 125 | 72 | 74 | 70 |
| | dynamic storage modulus (50°C) | 5.1 | 5.5 | 5.4 | 5.4 | 5.3 | 5.5 | 10.2 |
| Properties of tire | | | | | | | | |
| | portion of application of rubber composition * | | | | | | | |
| side reinforcing layer | | applied | applied | applied | applied | applied | applied | applied |
| bead filler | | applied | applied | applied | applied | applied | applied | applied |
| | gauge of reinforcing rubber (mm) | 8 | 8 | 8 | 8 | 8 | 8 | 11 |
| | height of bead filler (mm) | 40 | 40 | 40 | 40 | 40 | 40 | 40 |
| | ride comfort | 6.5 | 6.5+ | 6.5 | 6.5 | 6.5 | 6.5 | 5.0 |
| | run flat durability (index) | 131.0 | 127.0 | 124.0 | 121.0 | 88.0 | 84.0 | 100.0 |
| | rolling resistance (index) | 91.5 | 93.0 | 95.0 | 96.5 | 95.0 | 96.5 | 100.0 |

| | | | | | | | | |
|---|---|---|---|---|---|---|---|---|
| *: Portion of application of rubber composition: The rubber compositions are applied in the shown rubber members. | | | | | | | | |

It is shown by the above results that the pneumatic tires in which the rubber compositions of the present embodiment which included polybutadiene or styrene-butadiene copolymers having the specific properties are used for the reinforcing layer of the side wall portion or for the bead filler exhibited all of the excellent ride comfort, the excellent run flat durability and the excellent rolling resistance. In particular, the remarkably excellent run flat durability is exhibited when polybutadiene having the content of vinyl linkages of 40 % or more is used. It is made possible that the weight of the tire is decreased while other properties are maintained.

### Examples 47 to 83 and Comparative Example 13 to 16 (Embodiment 5)

Rubber compositions are prepared from rubber component (A), component (B), carbon black as component (C) and a softener, zinc oxide, stearic acid, an antioxidant, a vulcanization accelerator and sulfur as the other ingredients of compounding which are shown in Table 10 in amounts also shown in Table 10.

Using the prepared rubber compositions for the reinforcing layer of the side wall portion, a radial tire for passenger cars having a size of 205/60R15 is prepared by the conventional process. The maximum thickness of the reinforcing layer of the side wall portion is shown in Table 10 as the gauge of the reinforcing rubber. The ride comfort, the run flat durability and the rolling resistance of the prepared tire are evaluated. The maximum thickness of the reinforcing layer of the side wall portion is shown in Table 10 as the gauge of the reinforcing rubber. The results are shown in Table 10. With respect to the rolling resistance and the run flat durability, the results in Comparative Example 13 are used as the control.

**Table 10 - 1**

| Example | | | 47 | 48 | 49 | 50 |
|---|---|---|---|---|---|---|
| Comparative Example | | 13 | | | | |
| (Formulation (PHR)) | | | | | | |
| Component (A) | | | | | | |
| | natural rubber | 50.0 | 50.0 | 50.0 | 50.0 | 50.0 |
| | BR01 | 50.0 | - | - | - | - |
| | polymer of Preparation Example | - | A | B | C | D |
| | amount (part) | 0.0 | 50.0 | 50.0 | 50.0 | 50.0 |
| Component (B) (type: amount) | | | | | | |
| | compound of general formula (I) | - | A:0.5 | C:0.5 | E:0.5 | - |
| | citraconimide compound | - | - | - | - | A:0.5 |
| | acrylate | - | - | - | - | - |
| Component (C) | | | | | | |
| | carbon black #ASAHI NPG | 60.0 | 60.0 | 60.0 | 60.0 | 60.0 |
| Other compounding ingredients | | | | | | |
| | softener | 3.0 | 3.0 | 3.0 | 3.0 | 3.0 |
| | zinc oxide | 5.0 | 5.0 | 5.0 | 5.0 | 5.0 |
| | stearic acid | 1.0 | 1.0 | 1.0 | 1.0 | 1.0 |
| | 6C2.0 | 2.0 | 2.0 | 2.0 | 2.0 | |
| | NS | 2.5 | 2.5 | 2.5 | 2.5 | 2.5 |
| | sulfur | 6.0 | 6.0 | 6.0 | 6.0 | 6.0 |
| Physical properties of rubber | | | | | | |
| | ratio of minimum value of dynamic storage modulus in 200 ∼ 250°C to dynamic storage modulus at 50°C (index) | 70.0 | 84.5 | 82.4 | 85.7 | 83.2 |
| | dynamic storage modulus (50°C) | 10.2 | 7.9 | 8.5 | 7.5 | 8.4 |
| Properties of tire | | | | | | |
| | gauge of reinforcing rubber (mm) | 12 | 11 | 11 | 11 | 11 |
| | ride comfort | 5.0 | 5.5 | 5+ | 5.5 | 5+ |
| | run flat durability (index) | 100.0 | 117.0 | 122.0 | 118.0 | 118.0 |
| | rolling resistance (index) | 100.0 | 99.0 | 99.0 | 99.0 | 100.0 |

**Table 10 - 2**

| Example | | | | 51 | 52 | 53 |
|---|---|---|---|---|---|---|
| Comparative Example | | 14 | 15 | | | |
| (Formulation (PHR)) | | | | | | |
| Component (A) | | | | | | |
| | natural rubber | 20.0 | 20.0 | 20.0 | 20.0 | 20.0 |
| | BR01 | 80.0 | 80.0 | - | - | - |
| | polymer of Preparation | - | - | E | F | G |
| | Example amount (part) | 0.0 | 0.0 | 80.0 | 8.00 | 80.0 |
| Component (B) (type: amount) | | | | | | |
| | compound of general formula (I) | - | - | - | - | - |
| | citraconimide compound | - | - | B:0.5 | - | - |
| | acrylate | - | - | - | A:0.5 | B:0.5 |
| Component (C) | | | | | | |
| | carbon black #ASAHI NPG | 60.0 | 60.0 | 60.0 | 60.0 | 60.0 |
| Other compounding ingredients | | | | | | |
| | softener | 3.0 | 3.0 | 3.0 | 3.0 | 3.0 |
| | zinc oxide | 5.0 | 5.0 | 5.0 | 5.0 | 5.0 |
| | stearic acid | 1.0 | 1.0 | 1.0 | 1.0 | 1.0 |
| | 6C2.0 | 2.0 | 2.0 | 2.0 | 2.0 | |
| | NS | 2.5 | 2.5 | 2.5 | 2.5 | 2.5 |
| | sulfur | 6.0 | 3.0 | 6.0 | 6.0 | 6.0 |
| Physical properties of rubber | | | | | | |
| | ratio of minimum value of dynamic storage modulus in 200 - 250°C to dynamic storage modulus at 50°C (index) | 73.0 | 61.0 | 104.6 | 111.1 | 117.2 |
| | dynamic storage modulus (50°C) | 9.3 | 7.4 | 6.5 | 6.9 | 7.1 |
| Properties of tire | | | | | | |
| | gauge of reinforcing rubber (mm) | 10 | 10 | 9 | 9 | 9 |
| | ride comfort | 5.5 | 6.0 | 6.5 | 6.5 | 6.5 |
| | run flat durability (index) | 100.0 | 65.0 | 114.0 | 119.0 | 123.0 |
| | rolling resistance (index) | 100.0 | 100.0 | 100.0 | 100.0 | 100.0 |

**Table 10 - 3**

| Example | | 54 | 55 | 56 | 57 | 58 | 59 | 60 | 61 |
|---|---|---|---|---|---|---|---|---|---|
| Comparative Example | | | | | | | | | |
| (Formulation (PHR)) | | | | | | | | | |
| Component (A) | | | | | | | | | |
| | natural rubber | 20.0 | 20.0 | 20.0 | 20.0 | 20.0 | 20.0 | 20.0 | 20.0 |
| | BR01 | - | - | - | - | - | - | - | - |
| | polymer of Preparation | H | I | J | K | L | P | M | N |
| | Example amount (part) | 80.0 | 80.0 | 80.0 | 8.00 | 80.0 | 80.0 | 80.0 | 80.0 |
| Component (B) (type: amount) | | | | | | | | | |
| | compound of general formula (I) | - | B:3.0 | B:3.0 | B:3.0 | B:3.0 | B:3.0 | - | - |
| | citraconimide compound | - | A:3.0 | B:3.0 | - | - | - | A:3.0 | A:3.0 |
| | acrylate | C:0.5 | - | - | A:3.0 | B:3.0 | C:3.0 | A:3.0 | B:3.0 |
| Component (C) | | | | | | | | | |
| | carbon black #ASAHI NPG | 60.0 | 60.0 | 60.0 | 60.0 | 60.0 | 60.0 | 60.0 | 60.0 |
| Other compounding ingredients | | | | | | | | | |
| | softener | 3.0 | 3.0 | 3.0 | 3.0 | 3.0 | 3.0 | 3.0 | 3.0 |
| | zinc oxide | 5.0 | 5.0 | 5.0 | 5.0 | 5.0 | 5.0 | 5.0 | 5.0 |
| | stearic acid | 1.0 | 1.0 | 1.0 | 1.0 | 1.0 | 1.0 | 1.0 | 1.0 |
| | 6C2.0 | 2.0 | 2.0 | 2.0 | 2.0 | 2.0 | 2.0 | 2.0 | |
| | NS | 2.5 | 2.5 | 2.5 | 2.5 | 2.5 | 2.5 | 2.5 | 2.5 |
| | sulfur | 6.0 | 3.0 | 3.0 | 3.0 | 3.0 | 3.0 | 3.0 | 3.0 |
| Physical properties of rubber | | | | | | | | | |
| | ratio of minimum value of dynamic storage modulus in 200 ∼ 250°C to dynamic storage modulus at 50°C (index) | 125.4 | 168 | 162 | 168 | 166 | 169 | 169 | 166 |
| | dynamic storage modulus (50°C) | 7.2 | 4.9 | 5.0 | 5.6 | 5.8 | 5.7 | 5.8 | 5.7 |
| Properties of tire | | | | | | | | | |
| | gauge of reinforcing rubber (mm) | 9 | 10 | 10 | 10 | 10 | 10 | 10 | 10 |
| | ride comfort | 6.5 | 6.5 | 6.5 | 6.0+ | 6.0+ | 6.0+ | 6.0+ | 6.0+ |
| | run flat durability (index) | 125.0 | 214.0 | 220.0 | 223.0 | 221.0 | 212.0 | 194.0 | 179.0 |
| | rolling resistance (index) | 100.0 | 95.5 | 94.0 | 95.5 | 95.5 | 95.5 | 96.0 | 97.0 |

**Table 10 - 4**

| Example | | 62 | 63 | 64 | 65 | 66 |
|---|---|---|---|---|---|---|
| Comparative Example | | | | | | |
| (Formulation (PHR)) | | | | | | |
| Component (A) | | | | | | |
| | natural rubber | 20.0 | 20.0 | 20.0 | 20.0 | 20.0 |
| | BR01 | - | - | - | - | - |
| | polymer of Preparation | O | P | Q | R | R |
| | Example amount (part) | 80.0 | 80.0 | 80.0 | 80.0 | 80.0 |
| Component (B) (type: amount) | | | | | | |
| | compound of general formula (I) | - | D:3.0 | D:3.0 | D:3.0 | D:3.0 |
| | citraconimide compound | A:3.0 | A:3.0 | B:3.0 | - | - |
| | acrylate | C:3.0 | - | - | A:3.0 | B:3.0 |
| Component (C) | | | | | | |
| | carbon black #ASAHI NPG | 60.0 | 60.0 | 60.0 | 60.0 | 60.0 |
| Other compounding ingredients | | | | | | |
| | softener | 3.0 | 3.0 | 3.0 | 3.0 | 3.0 |
| | zinc oxide | 5.0 | 5.0 | 5.0 | 5.0 | 5.0 |
| | stearic acid | 1.0 | 1.0 | 1.0 | 1.0 | 1.0 |
| | 6C2.0 | 2.0 | 2.0 | 2.0 | 2.0 | |
| | NS | 2.5 | 2.5 | 2.5 | 2.5 | 2.5 |
| | sulfur | 3.0 | 3.0 | 3.0 | 3.0 | 3.0 |
| Physical properties of rubber | | | | | | |
| | ratio of minimum value of dynamic storage modulus in 200 ∼ 250°C to dynamic storage modulus at 50°C (index) | 164 | 168 | 165 | 169 | 165 |
| | dynamic storage modulus (50°C) | 5.6 | 5.3 | 5.3 | 5.8 | 5.6 |
| Properties of tire | | | | | | |
| | gauge of reinforcing rubber (mm) | 10 | 10 | 10 | 10 | 10 |
| | ride comfort | 6.0+ | 6.5 | 6.5 | 6.0+ | 6.0+ |
| | run flat durability (index) | 181.0 | 215.0 | 213.0 | 212.0 | 209.0 |
| | rolling resistance (index) | 97.0 | 94.0 | 95.5 | 96.0 | 95.5 |

**Table 10 - 5**

| Example | | 67 | 68 | 69 | 70 | 71 |
|---|---|---|---|---|---|---|
| Comparative Example | | | | | | |
| (Formulation (PHR)) | | | | | | |
| Component (A) | | | | | | |
| | natural rubber | 20.0 | 20.0 | 20.0 | 20.0 | 20.0 |
| | BR01 | - | - | - | - | - |
| | polymer of Preparation | S | T | U | V | W |
| | Example amount (part) | 80.0 | 80.0 | 80.0 | 80.0 | 80.0 |
| Component (B) (type: amount) | | | | | | |
| | compound of general formula (I) | D:3.0 | - | - | - | A:3.0 |
| | citraconimide compound | - | B:3.0 | B:3.0 | B:3.0 | A:3.0 |
| | acrylate | C:3.0 | A:3.0 | B:3.0 | C:3.0 | A:3.0 |
| Component (C) | | | | | | |
| | carbon black #ASAHI NPG | 60.0 | 60.0 | 60.0 | 60.0 | 60.0 |
| Other compounding ingredients | | | | | | |
| | softener | 3.0 | 3.0 | 3.0 | 3.0 | 3.0 |
| | zinc oxide | 5.0 | 5.0 | 5.0 | 5.0 | 5.0 |
| | stearic acid | 1.0 | 1.0 | 1.0 | 1.0 | 1.0 |
| | 6C2.0 | 2.0 | 2.0 | 2.0 | 2.0 | |
| | NS | 2.5 | 2.5 | 2.5 | 2.5 | 2.5 |
| | sulfur | 3.0 | 3.0 | 3.0 | 3.0 | 3.0 |
| Physical properties of rubber | | | | | | |
| | ratio of minimum value of dynamic storage modulus in 200 ∼ 250°C to dynamic storage modulus at 50°C (index) | 168 | 163 | 153 | 135 | 190 |
| | dynamic storage modulus (50°C) | 5.5 | 5.5 | 5.4 | 5.8 | 6.1 |
| Properties of tire | | | | | | |
| | gauge of reinforcing rubber (mm) | 10 | 10 | 10 | 10 | 10 |
| | ride comfort | 6.0+ | 6.0+ | 6.0+ | 6.0+ | 6.0+ |
| | run flat durability (index) | 213.0 | 177.0 | 181.0 | 176.0 | 244.7 |
| | rolling resistance (index) | 95.0 | 96.5 | 97.0 | 97.0 | 98.0 |

**Table 10 - 6**

| Example | | | | 72 | 73 | 74 |
|---|---|---|---|---|---|---|
| Comparative Example | | 14 | 15 | | | |
| (Formulation (PHR)) | | | | | | |
| Component (A) | | | | | | |
| | natural rubber | 20.0 | 20.0 | 20.0 | 20.0 | 20.0 |
| | BR01 | 80.0 | 80.0 | - | - | - |
| | polymer of Preparation | - | - | X | Y | J |
| | Example amount (part) | - | - | 80.0 | 80.0 | 80.0 |
| Component (B) (type: amount) | | | | | | |
| | compound of general formula (I) | - | - | B:3.0 | B:3.0 | A:5.0 |
| | citraconimide compound | - | - | B:3.0 | B:3.0 | A:5.0 |
| | acrylate | - | - | B:3.0 | B:3.0 | - |
| Component (C) | | | | | | |
| | carbon black #ASAHI NPG | 60.0 | 60.0 | 60.0 | 60.0 | 60.0 |
| Other compounding ingredients | | | | | | |
| | softener | 3.0 | 3.0 | 3.0 | 3.0 | 3.0 |
| | zinc oxide | 5.0 | 5.0 | 5.0 | 5.0 | 5.0 |
| | stearic acid | 1.0 | 1.0 | 1.0 | 1.0 | 1.0 |
| | 6C2.0 | 2.0 | 2.0 | 2.0 | 2.0 | |
| | NS | 2.5 | 2.5 | 2.5 | 2.5 | 2.5 |
| | sulfur | 6.0 | 3.0 | 3.0 | 3.0 | 3.0 |
| Physical properties of rubber | | | | | | |
| | ratio of minimum value of dynamic storage modulus in 200 ∼ 250°C to dynamic storage modulus at 50°C (index) | 73.0 | 61.0 | 189 | 188 | 165 |
| | dynamic storage modulus (50°C) | 9.3 | 7.4 | 6.0 | 6.0 | 5.0 |
| Properties of tire | | | | | | |
| | gauge of reinforcing rubber (mm) | 10 | 10 | 10 | 10 | 10 |
| | ride comfort | 5.5 | 6.0 | 6.0+ | 6.0+ | 6.5 |
| | run flat durability (index) | 100.0 | 65.0 | 235.0 | 230.0 | 220.0 |
| | rolling resistance (index) | 100.0 | 100.0 | 98.0 | 96.5 | 94.0 |

**Table 10 - 7**

| Example | | 75 | 76 | 77 | 78 | 79 |
|---|---|---|---|---|---|---|
| Comparative Example | | | | | | |
| (Formulation (PHR)) | | | | | | |
| Component (A) | | | | | | |
| | natural rubber | - | 20.0 | - | 20.0 | - |
| | BR01 | - | - | - | - | - |
| | polymer of Preparation | J | P | P | X | X |
| | Example amount (part) | 100.0 | 80.0 | 100.0 | 80.0 | 100.0 |
| Component (B) (type: amount) | | | | | | |
| | compound of general formula (I) | A:5.0 | A:5.0 | A:5.0 | A:5.0 | A:5.0 |
| | citraconimide compound | A:5.0 | - | - | A:5.0 | A:5.0 |
| | acrylate | - | A:5.0 | A:5.0 | A:5.0 | A:5.0 |
| Component (C) | | | | | | |
| | carbon black #ASAHI NPG | 60.0 | 60.0 | 60.0 | 60.0 | 60.0 |
| Other compounding ingredients | | | | | | |
| | softener | 3.0 | 3.0 | 3.0 | 3.0 | 3.0 |
| | zinc oxide | 5.0 | 5.0 | 5.0 | 5.0 | 5.0 |
| | stearic acid | 1.0 | 1.0 | 1.0 | 1.0 | 1.0 |
| | 6C2.0 | 2.0 | 2.0 | 2.0 | 2.0 | |
| | NS | 2.5 | 2.5 | 2.5 | 2.5 | 2.5 |
| | sulfur | 3.0 | 3.0 | 3.0 | 3.0 | 3.0 |
| Physical properties of rubber | | | | | | |
| | ratio of minimum value of dynamic storage modulus in 200 ∼ 250°C to dynamic storage modulus at 50°C (index) | 181 | 171 | 185 | 192 | 206 |
| | dynamic storage modulus (50°C) | 4.6 | 5.3 | 4.9 | 6.0 | 5.6 |
| Properties of tire | | | | | | |
| | gauge of reinforcing rubber (mm) | 7 | 10 | 7 | 10 | 7 |
| | ride comfort | 7.0 | 6.5 | 7.0 | 6.0+ | 7.0 |
| | run flat durability (index) | 113.0 | 215.0 | 119.0 | 235.0 | 134.0 |
| | rolling resistance (index) | 89.5 | 94.0 | 89.5 | 98.0 | 89.0 |

**Table 10 - 8**

| Example | | | 80 | 81 | | 82 | 83 |
|---|---|---|---|---|---|---|---|
| Comparative Example | | 16 | | | 17 | | |
| (Formulation (PHR)) | | | | | | | |
| Component (A) | | | | | | | |
| | natural rubber | 20.0 | 20.0 | 20.0 | 20.0 | 20.0 | 20.0 |
| | BR01 | - | - | - | - | - | - |
| | polymer of Preparation | BE | BA | BC | BF | BB | BD |
| | Example amount (part) | 80.0 | 80.0 | 80.0 | 80.0 | 80.0 | 80.0 |
| Component (B) (type: amount) | | | | | | | |
| | compound of general formula (I) | A:5.0 | A:5.0 | A:5.0 | A:5.0 | A:5.0 | A:5.0 |
| | citraconimide compound | - | - | - | - | - | - |
| | acrylate | A:5.0 | A:5.0 | A:5.0 | A:5.0 | A:5.0 | A:5.0 |
| Component (C) | | | | | | | |
| | carbon black #ASAHI NPG | 60.0 | 60.0 | 60.0 | 60.0 | 60.0 | 60.0 |
| Other compounding ingredients | | | | | | | |
| | softener | 3.0 | 3.0 | 3.0 | 3.0 | 3.0 | 3.0 |
| | zinc oxide | 5.0 | 5.0 | 5.0 | 5.0 | 5.0 | 5.0 |
| | stearic acid | 1.0 | 1.0 | 1.0 | 1.0 | 1.0 | 1.0 |
| | 6C2.0 | 2.0 | 2.0 | 2.0 | 2.0 | 2.0 | |
| | NS | 2.5 | 2.5 | 2.5 | 2.5 | 2.5 | 2.5 |
| | sulfur | 3.0 | 3.0 | 3.0 | 3.0 | 3.0 | 3.0 |
| Physical properties of rubber | | | | | | | |
| | ratio of minimum value of dynamic storage modulus in 200 ∼ 250°C to dynamic storage modulus at 50°C (index) | 92 | 182 | 185 | 94 | 181 | 180 |
| | dynamic storage modulus (50°C) | 5.5 | 5.7 | 5.2 | 5.4 | 5.6 | 5.3 |
| Properties of tire | | | | | | | |
| | gauge of reinforcing rubber (mm) | 7 | 7 | 7 | 7 | 7 | 7 |
| | ride comfort | 7.0 | 7.0 | 7.0 | 7.0 | 7.0 | 7.0 |
| | run flat durability (index) | 100.0 | 128.0 | 132.0 | 100.0 | 132.0 | 131.0 |
| | rolling resistance (index) | 100.0 | 96.0 | 99.0 | 100.0 | 96.0 | 99.0 |

It is shown by the above results that, in the safety tire prepared by using the rubber composition in accordance with the present embodiment having the specific physical properties for the reinforcing layer of the side wall portion, the excellent ride comfort and the decrease in the rolling resistance could be achieved by the remarkable decrease in the gauge of the side reinforcing rubber and the excellent run flat durability could be exhibited since the decrease in the modulus at high temperatures could be suppressed.

### Examples 84 to 112 and Comparative Examples 17 to 19 (Embodiment 6)

Rubber compositions are prepared by mixing 60.0 parts by weight of carbon black GPF [#NPG: a trade mark; manufactured by ASAHI CARBON Co., Ltd.] as component (C) and 3.0 parts by weight of a softener "DIANA PROCESS OIL NP-24" [a trade mark; manufactured by IDEMITSU KOSAN Co., Ltd.], 4.0 parts by weight of zinc oxide No. 3 [a trade mark; manufactured by MITSUI MINING & SMELTING Co., Ltd.], 1.0 part by weight of stearic acid "LUNAC RC BEADS" [a trade mark; manufactured by KAO Corporation], 2.0 parts by weight of an antioxidant "NOCRAC 6C" [a trade mark; manufactured by OUCHISHINKO CHEMICAL INDUSTRIAL Co., Ltd.; 2.0 parts by weight of N-phenyl-N'-(1,3-dimethylbutyl)-p-phenylenediamine], 3.5 parts by weight of a vulcanization accelerator "NOCCELOR NS" [a trade mark; manufactured by OUCHISHINKO CHEMICAL INDUSTRIAL Co., Ltd.; N-tert-butyl-2-benzothiazolyl sulfenamide], 2.5 to 5.0 parts by weight of sulfur "MUCRON-OT" [a trade mark; manufactured by SHIKOKU Corporation] and HTS (sodium 1,6-hexamethylenedithiosulfate dihydrate) in amounts shown in Table 2 as the other components with 100 parts by weight of rubber component (A) the type and the amount of which are shown in Table 11.

The rubber compositions prepared above are applied in the reinforcing layer of the side wall portion and a radial tire for passenger cars having a size of 225/45ZR17 are prepared by the conventional process. The ride comfort, the run flat durability and the rolling resistance of the prepared tires are evaluated. The maximum thickness of the reinforcing layer of the side wall portion is shown in Table 11 as the gauge of the reinforcing rubber. The results are shown in Table 11. With respect to the rolling resistance and the run flat durability, the results in Comparative Example 17 are used as the control for the results obtained in Examples 84 to 87 and the results in Comparative Example 18 are used as the control for the results obtained in Examples 88 to 112 and Comparative Example 19.

**Table 11 - 1**

| Example | | | 84 | 85 | 86 | 87 |
|---|---|---|---|---|---|---|
| Comparative Example | | 17 | | | | |
| Component (A) | | | | | | |
| | natural rubber (part by weight) | 50.0 | 50.0 | 50.0 | 50.0 | 50.0 |
| | BR01 (part by weight) | 50.0 | - | - | - | - |
| | BR of Preparation Example | - | A | B | C | D |
| | amount (part by weight) | - | 50.0 | 50.0 | 50.0 | 50.0 |
| Other compounding ingredients | | | | | | |
| | zinc oxide (part by weight) | 4.0 | 4.0 | 4.0 | 4.0 | 4.0 |
| | vulcanization accelerator (part by weight) | 3.5 | 3.5 | 3.5 | 3.5 | 3.5 |
| | sulfur (part by weight) | 5.0 | 5.0 | 5.0 | 5.0 | 5.0 |
| | HTS (part by weight) | - | 0.5 | 0.5 | 0.5 | 0.5 |
| Physical properties of rubber | | | | | | |
| | ratio of minimum value of dynamic storage modulus in 200 - 250°C to dynamic storage modulus at 50°C (index) | 70 | 84 | 83 | 86 | 85 |
| | dynamic storage modulus (50°C) | 10.0 | 7.8 | 8.3 | 7.6 | 8.2 |
| Properties of tire | | | | | | |
| | gauge of side reinforcing rubber (mm) | 10 | 9 | 9 | 9 | 9 |
| | ride comfort | 5.0 | 5.5 | 5+ | 5.5 | 5+ |
| | run flat durability (index) | 100.0 | 114.0 | 118.0 | 115.0 | 119.0 |
| | rolling resistance (index) | 100.0 | 99.0 | 99.0 | 99.5 | 100.0 |

**Table 11 - 2**

| Example | | | | 88 | 89 | 90 |
|---|---|---|---|---|---|---|
| Comparative Example | | 18 | 19 | | | |
| Component (A) | | | | | | |
| | natural rubber (part by weight) | 20.0 | 20.0 | 20.0 | 20.0 | 20.0 |
| | BR01 (part by weight) | 80.0 | 80.0 | - | - | - |
| | BR of Preparation Example | - | - | E | F | G |
| | amount (part by weight) | - | - | 80.0 | 80.0 | 80.0 |
| Other compounding ingredients | | | | | | |
| | zinc oxide (part by weight) | 4.0 | 4.0 | 4.0 | 4.0 | 4.0 |
| | vulcanization accelerator (part by weight) | 3.5 | 3.5 | 3.5 | 3.5 | 3.5 |
| | sulfur (part by weight) . | 5.0 | 2.5 | 5.0 | 5.0 | 5.0 |
| | HTS (part by weight) | - | - | 1.0 | 1.0 | 1.0 |
| Physical properties of rubber | | | | | | |
| | ratio of minimum value of dynamic storage modulus in 200 ∼ 250°C to dynamic storage modulus at 50°C (index) | 74 | 60 | 105 | 112 | 118 |
| | dynamic storage modulus (50°C) | 9.1 | 7.1 | 6.4 | 6.7 | 6.9 |
| Properties of tire | | | | | | |
| | gauge of side reinforcing rubber (mm) | 8 | 8 | 7 | 7 | 7 |
| | ride comfort | 5.5 | 6.0 | 6.5 | 6.5 | 6.5 |
| | run flat durability (index) | 100.0 | 61.0 | 112.0 | 118.0 | 120.0 |
| | rolling resistance (index) | 100.0 | 100.0 | 99.0 | 99.5 | 99.5 |

**Table 11 - 3**

| Example | | 91 | 92 | 93 | 94 | 95 | 96 |
|---|---|---|---|---|---|---|---|
| Comparative Example | | | | | | | |
| Component (A) | | | | | | | |
| | natural rubber (part by weight) | 20.0 | 20.0 | 20.0 | 20.0 | 20.0 | 20.0 |
| | BR01 (part by weight) | - | - | - | - | - | - |
| | BR of Preparation Example | H | I | J | K | J | M |
| | amount (part by weight) | 80.0 | 80.0 | 80.0 | 80.0 | 80.0 | 80.0 |
| Other compounding ingredients | | | | | | | |
| | zinc oxide (part by weight) | 4.00 | 4.00 | 4.00 | 4.00 | 4.00 | 4.00 |
| | vulcanization accelerator (part by weight) | 3.5 | 3.5 | 3.5 | 3.5 | 3.5 | 3.5 |
| | sulfur (part by weight) | 5 | 2.5 | 2.5 | 2.5 | 2.5 | 2.5 |
| | HTS (part by weight) | 1.00 | 5.00 | 5.00 | 5.00 | 5.00 | 5.00 |
| Physical properties of rubber | | | | | | | |
| | ratio of minimum value of dynamic storage modulus in 200 - 250°C to dynamic storage modulus at 50°C (index) | 126 | 142 | 137 | 140 | 140 | 144 |
| | dynamic storage modulus (50°C) | 6.9 | 5.2 | 5.1 | 5.3 | 5.5 | 5.5 |
| Properties of tire | | | | | | | |
| | gauge of side reinforcing rubber (mm) | 7 | 7 | 7 | 7 | 7 | 7 |
| | ride comfort | 6.5 | 6.5 | 6.5 | 6.5 | 6+ | 6+ |
| | run flat durability (index) | 125.0 | 140.0 | 142.0 | 140.0 | 141.0 | 140.0 |
| | rolling resistance (index) | 100.0 | 96.0 | 94.0 | 95.0 | 95.5 | 95.5 |

**Table 11 - 4**

| Example | | 97 | 98 | 99 | 100 | 101 | 102 |
|---|---|---|---|---|---|---|---|
| Comparative Example | | | | | | | |
| Component (A) | | | | | | | |
| | natural rubber (part by weight) | 20.0 | 20.0 | 20.0 | 20.0 | 20.0 | 20.0 |
| | BR01 (part by weight) | - | - | - | - | - | - |
| | BR of Preparation Example | N | O | P | Q | R | S |
| | amount (part by weight) | 80.0 | 80.0 | 80.0 | 80.0 | 80.0 | 80.0 |
| Other compounding ingredients | | | | | | | |
| | zinc oxide (part by weight) | 4.0 | 4.0 | 4.0 | 4.0 | 4.0 | 4.0 |
| | vulcanization accelerator (part by weight) | 3.5 | 3.5 | 3.5 | 3.5 | 3.5 | 3.5 |
| | sulfur (part by weight) | 2.5 | 2.5 | 2.5 | 2.5 | 2.5 | 2.5 |
| | HTS (part by weight) | 5.0 | 5.0 | 5.0 | 5.0 | 5.0 | 5.0 |
| Physical properties of rubber | | | | | | | |
| | ratio of minimum value of dynamic storage modulus in 200 - 250°C to dynamic storage modulus at 50°C (index) | 144 | 142 | 143 | 142 | 144 | 141 |
| | dynamic storage modulus (50°C) | 5.4 | 5.4 | 5.3 | 5.4 | 5.4 | 5.6 |
| Properties of tire | | | | | | | |
| | gauge of side reinforcing rubber (mm) | 7 | 7 | 7 | 7 | 7 | 7 |
| | ride comfort | 6+ | 6+ | 6.5 | 6+ | 6+ | 6+ |
| | run flat durability (index) | 141.0 | 142.0 | 141.0 | 143.0 | 145.0 | 139.0 |
| | rolling resistance (index) | 95.0 | 96.0 | 96.5 | 94.0 | 95.0 | 95.0 |

**Table 11 - 5**

| Example | | 103 | 104 | 105 | 106 | 107 | 108 |
|---|---|---|---|---|---|---|---|
| Comparative Example | | | | | | | |
| Component (A) | | | | | | | |
| | natural rubber (part by weight) | 20 | 20 | 20 | 20 | 20 | 20 |
| | BR01 (part by weight) | - | - | - | - | - | - |
| | BR of Preparation Example | T | U | V | W | X | Y |
| | amount (part by weight) | 80 | 80 | 80 | 80 | 80 | 80 |
| Other compounding ingredients | | | | | | | |
| | zinc oxide (part by weight) | 4 | 4 | 4 | 4 | 4 | 4 |
| | vulcanization accelerator (part by weight) | 3.5 | 3.5 | 3.5 | 3.5 | 3.5 | 3.5 |
| | sulfur (part by weight) | 2.5 | 2.5 | 2.5 | 2.5 | 2.5 | 2.5 |
| | HTS (part by weight) | 5 | 5 | 5 | 5 | 5 | 5 |
| Physical properties of rubber | | | | | | | |
| | ratio of minimum value of dynamic storage modulus in 200 ∼ 250°C to dynamic storage modulus at 50°C (index) | 139 | 141 | 138 | 128 | 113 | 139 |
| | dynamic storage modulus (50°C) | 5.5 | 5.4 | 5.1 | 5 | 5.3 | 5.5 |
| Properties of tire | | | | | | | |
| | gauge of side reinforcing rubber (mm) | 7 | 7 | 7 | 7 | 7 | 7 |
| | ride comfort | 6+ | 6+ | 6.5 | 6.5 | 6.5 | 6+ |
| | run flat durability (index) | 137.0 | 139.0 | 137.0 | 134.0 | 132.0 | 137.0 |
| | rolling resistance (index) | 95.5 | 94.5 | 94.5 | 95.0 | 95.0 | 96.5 |

**Table 11 - 6**

| Example | | 109 | 110 | 111 | 112 |
|---|---|---|---|---|---|
| Comparative Example | | | | | |
| Component (A) | | | | | |
| | natural rubber (part by weight) | 20 | - | - | - |
| | BR01 (part by weight) | - | - | - | - |
| | BR of Preparation Example | Z | J | Q | Z |
| | amount (part by weight) | 80 | 100 | 100 | 100 |
| Other compounding ingredients | | | | | |
| | zinc oxide (part by weight) | 4 | 4 | 4 | 4 |
| | vulcanization accelerator (part by weight) | 3.5 | 3.5 | 3.5 | 3.5 |
| | sulfur (part by weight) | 2.5 | 2.5 | 2.5 | 2.5 |
| | HTS (part by weight) | 5 | 5 | 5 | 5 |
| Physical properties of rubber | | | | | |
| | ratio of minimum value of dynamic storage modulus in 200 ∼ 250°C to dynamic storage modulus at 50°C (index) | 138 | 155 | 160 | 162 |
| | dynamic storage modulus (50°C) | 5.5 | 4.5 | 4.7 | 5 |
| Properties of tire | | | | | |
| | gauge of side reinforcing rubber (mm) | 7 | 7 | 7 | 5 |
| | ride comfort (vehicle test) | 6+ | 6.5+ | 6.5+ | 7 |
| | run flat durability (index) | 135.0 | 158.0 | 162.0 | 145.0 |
| | rolling resistance (index) | 94.0 | 92.5 | 92.0 | 91.0 |

It is shown by the results in Table 11 that, in the safety tire prepared by using the HTS-compounded rubber composition for the reinforcing layer of the side wall portion, the excellent ride comfort and the decrease in the rolling resistance could be achieved by the remarkable decrease in the gauge of the reinforcing layer of the side wall portion and the excellent run flat durability could be exhibited since the decrease in the modulus at high temperatures could be suppressed.

### Examples 113 to 122 and Comparative Example 20 to 23 (Embodiment 7)

Rubber compositions are prepared from rubber component (A), carbon black and silica as the reinforcing inorganic fillers of component (C) and a silane coupling agent, a softener, zinc oxide, stearic acid, an antioxidant, a vulcanization accelerator and sulfur as the other ingredients of compounding which are shown in Table 12 in amounts also shown in Table 12.

Using the prepared rubber compositions for the reinforcing layer of the side wall portion, a radial tire for passenger cars having a size of 205/60R15 are prepared by the conventional process. The ride comfort, the run flat durability and the rolling resistance of the prepared tire are evaluated. The maximum thickness of the reinforcing layer of the side wall portion is shown in Table 12 as the gauge of the reinforcing rubber. The results are shown in Table 12. With respect to the rolling resistance and the run flat durability, the results in Comparative Example 20 are used as the control for the results obtained in Examples 113 and 114 and Comparative Example 21 and the results in Comparative Example 22 are used as the control for the results obtained in Examples 115 to 122 and Comparative Example 23.

**Table 12 - 1**

| Example | | | | 113 | 114 |
|---|---|---|---|---|---|
| Comparative Example | | 20 | 21 | | |
| Formulation (PHR) | | | | | |
| Component (A) | | | | | |
| | natural rubber | 50.0 | 50.0 | 50.0 | 50.0 |
| | BR01 | 50.0 | - | - | - |
| | polymer of Preparation | - | AB | AC | AD |
| | Example amount (part by weight) | - | 50.0 | 50.0 | 50.0 |
| Component (C) | | | | | |
| | silica | 20.0 | 20.0 | 20.0 | 20.0 |
| | carbon black ASAHI #NPG | 40.0 | 40.0 | 40.0 | 40.0 |
| Other compounding ingredients | | | | | |
| | silane coupling agent | 2.0 | 2.0 | 2.0 | 2.0 |
| | softener | 3.0 | 3.0 | 3.0 | 3.0 |
| | zinc oxide | 5.0 | 5.0 | 5.0 | 5.0 |
| | stearic acid | 1.0 | 1.0 | 1.0 | 1.0 |
| | 6C2.0 | 2.0 | 2.0 | 2.0 | |
| | NS | 2.3 | 2.3 | 2.3 | 2.3 |
| | sulfur | 5.0 | 5.0 | 5.0 | 5.0 |
| Physical properties of rubber | | | | | |
| | ratio of minimum value of dynamic storage modulus in 200 ∼ 250°C to dynamic storage modulus at 50°C (index) | 62 | 66 | 78 | 82 |
| | dynamic storage modulus (50°C) | 10.8 | 8.0 | 8.5 | 8.6 |
| Properties of tire | | | | | |
| | gauge of reinforcing rubber (mm) | 12.0 | 11.0 | 11.0 | 11.0 |
| | ride comfort | 4.5 | 5.0 | 5.0 | 5.0 |
| | run flat durability (index) | 100.0 | 88.0 | 108.0 | 109.0 |
| | rolling resistance (index) | 100.0 | 98.5 | 99.5 | 100.0 |

**Table 12 - 2**

| Example | | | | 115 | 116 | 117 |
|---|---|---|---|---|---|---|
| Comparative Example | | 22 | 23 | | | |
| Formulation (PHR) | | | | | | |
| Component (A) | | | | | | |
| | natural rubber | 20.0 | 20.0 | 20.0 | 20.0 | 20.0 |
| | BR01 | 80.0 | 80.0 | - | - | - |
| | polymer of Preparation | - | - | AE | AF | AG |
| | Example amount (part by weight) | - | - | 80.0 | 80.0 | 80.0 |
| Component (C) | | | | | | |
| | silica | 30.0 | 30.0 | 30.0 | 30.0 | 30.0 |
| | carbon black ASAHI #NPG | 30.0 | 30.0 | 30.0 | 30.0 | 30.0 |
| Other compounding ingredients | | | | | | |
| | silane coupling agent | 3.0 | 3.0 | 3.0 | 3.0 | 3.0 |
| | softener | 3.0 | 3.0 | 3.0 | 3.0 | 3.0 |
| | zinc oxide | 5.0 | 5.0 | 5.0 | 5.0 | 5.0 |
| | stearic acid | 1.0 | 1.0 | 1.0 | 1.0 | 1.0 |
| | 6C2.0 | 2.0 | 2.0 | 2.0 | 2.0 | |
| | NS | 2.3 | 2.3 | 2.3 | 2.3 | 2.3 |
| | sulfur | 5.0 | 2.5 | 2.5 | 2.5 | 2.5 |
| Physical properties of rubber | | | | | | |
| | ratio of minimum value of dynamic storage modulus in 200 ∼ 250°C to dynamic storage modulus at 50°C (index) | 65 | 62 | 125 | 122 | 124 |
| | dynamic storage modulus (50°C) | 9.1 | 7.5 | 6.8 | 6.6 | 6.7 |
| Properties of tire | | | | | | |
| | gauge of reinforcing rubber (mm) | 12 | 12 | 10 | 10 | 10 |
| | ride comfort | 4.5+ | 5+ | 6.5 | 6.5+ | 6.5+ |
| | run flat durability (index) | 100.0 | 61.0 | 115.0 | 119.0 | 113.0 |
| | rolling resistance (index) | 100.0 | 100.0 | 96.0 | 93.0 | 94.0 |

**Table 12 - 3**

| Example | | 118 | 119 | 120 | 121 | 122 |
|---|---|---|---|---|---|---|
| Comparative Example | | | | | | |
| Formulation (PHR) | | | | | | |
| | Component (A) | | | | | |
| | natural rubber | 20.0 | 20.0 | 20.0 | - | - |
| | BR01 | . - | - | - | - | - |
| | polymer of Preparation | AH | AI | AJ | AF | AI |
| | Example amount (part by weight) | 80.0 | 80.0 | 80.0 | 100.0 | 100.0 |
| Component (C) | | | | | | |
| | silica | 30.0 | 30.0 | 30.0 | 55.0 | 55.0 |
| | carbon black ASAHI #NPG | 30.0 | 30.0 | 30.0 | 5.0 | 5.0 |
| Other compounding ingredients | | | | | | |
| | silane coupling agent | 3.0 | 3.0 | 3.0 | 5.5 | 5.5 |
| | softener | 3.0 | 3.0 | 3.0 | 5.0 | 5.0 |
| | zinc oxide | 5.0 | 5.0 | 5.0 | 5.0 | 5.0 |
| | stearic acid | 1.0 | 1.0 | 1.0 | 1.0 | 1.0 |
| | 6C2.0 | 2.0 | 2.0 | 2.0 | 2.0 | |
| | NS | 2.3 | 2.3 | 2.3 | 2.3 | 2.3 |
| | sulfur | 2.5 | 2.5 | 2.5 | 2.5 | 2.5 |
| Physical properties of rubber | | | | | | |
| | ratio of minimum value of dynamic storage modulus in 200 - 250°C to dynamic storage modulus at 50°C (index) | 125 | 127 | 126 | 132 | 134 |
| | dynamic storage modulus (50°C) | 6.6 | 6.9 | 6.8 | 6.2 | 6.1 |
| Properties of tire | | | | | | |
| | gauge of reinforcing rubber (mm) | 10 | 10 | 10 | 10 | 10 |
| | ride comfort | 6.5 | 6.5+ | 6.5 | 6.5+ | 6.5+ |
| | run flat durability (index) | 116.0 | 124.0 | 122.0 | 131.0 | 130.0 |
| | rolling resistance (index) | 94.5 | 93.5 | 93.5 | 91.5 | 92.0 |

It is shown by the above results that, in the pneumatic tires prepared by using the rubber composition in accordance with the present embodiment having the specific physical properties for the reinforcing layer of the side wall portion, the excellent ride comfort and the decrease in the rolling resistance could be achieved by the remarkable decrease in the gauge of the reinforcing layer of the side wall portion and the excellent run flat durability could be exhibited since the decrease in the modulus at high temperatures could be suppressed.

### Examples 123 to 132 and Comparative Example 24 to 27 (Embodiment 8)

Rubber compositions are prepared from rubber component (A), component (B), carbon black and silica as the reinforcing inorganic fillers of component (C) and a silane coupling agent, a softener, zinc oxide, stearic acid, an antioxidant, a vulcanization accelerator and sulfur as the other ingredients of compounding which are shown in Table 13 in amounts also shown in Table 13.

Using the prepared rubber compositions for the reinforcing layer of the side wall portion, a radial tire for passenger cars having a size of 245/45R17 is prepared by the conventional process. The maximum thickness of the reinforcing layer of the side wall portion is shown in Table 13 as the gauge of the reinforcing rubber. The ride comfort, the run flat durability and the rolling resistance of the prepared tire are evaluated. The results are shown in Table 13. With respect to the rolling resistance and the run flat durability, the results in Comparative Example 24 are used as the control.

**Table 13 - 1**

| Example | | | | 123 | 124 | | | 125 |
|---|---|---|---|---|---|---|---|---|
| Comparative Example | | 24 | 25 | | | 26 | 27 | |
| (Formulation (PHR)) | | | | | | | | |
| Component (A) | | | | | | | | |
| | natural rubber | 50.0 | 50.0 | 50.0 | 50.0 | 20.0 | 20.0 | 20.0 |
| | BR01 | 50.0 | - | - | - | 80.0 | 80.0- | - |
| | polymer of Preparation | - | AB | AC | AD | - | - | AE |
| | Example amount | - | 50.0 | 50.0 | 50.0 | - | - | 80.0 |
| Component (B) (type: amount) | | | | | | | | |
| | compound of general formula (I) | - | A:0.5 | - | - | - | - | A:3.0 |
| | citraconimide compound | - | - | A:0.5 | - | - | - | A:3.0 |
| | acrylate | - | - | - | A:0.5 | - | - | - |
| Component (C) | | | | | | | | |
| | silica | 20.0 | 20.0 | 20.0 | 20.0 | 30.0 | 30.0 | 30.0 |
| | carbon black ASAHI #NPG | 40.0 | 40.0 | 40.0 | 40.0 | 30.0 | 30.0 | 30.0 |
| Other compounding ingredients | | | | | | | | |
| | silane coupling agent | 2.0 | 2.0 | 2.0 | 2.0 | 3.0 | 3.0 | 3.0 |
| | softener | 3.0 | 3.0 | 3.0 | 3.0 | 3.0 | 3.0 | 3.0 |
| | zinc oxide | 5.0 | 5.0 | 5.0 | 5.0 | 5.0 | 5.0 | 5.0 |
| | stearic acid | 1.0 | 1.0 | 1.0 | 1.0 | 1.0 | 1.0 | 1.0 |
| | antioxidant | 2.0 | 2.0 | 2.0 | 2.0 | 2.0 | 2.0 | 2.0 |
| | vulcanization accelerator | 2.3 | 2.3 | 2.3 | 2.3 | 2.3 | 2.3 | 2.3 |
| | sulfur | 5.0 | 5.0 | 5.0 | 5.0 | 5.0 | 2.5 | 2.5 |
| Physical properties of rubber | | | | | | | | |
| | ratio of minimum value of dynamic storage modulus in 200 ∼ 250°C to dynamic storage modulus at 50°C (index) | 63 | 74 | 80 | 84 | 67 | 63 | 169 |
| | dynamic storage modulus (50°C) | 10.8 | 7.8 | 8.4 | 9.0 | 9.1 | 7.5 | 6.7 |
| Properties of tire | | | | | | | | |
| | gauge of reinforcing rubber (mm) | 12.0 | 10.5 | 10.5 | 10.5 | 12.0 | 12.0 | 12.0 |
| | ride comfort | 4.0 | 5.0 | 5.0 | 5.0 | 4.0+ | 4.5 | 5.5 |
| | run flat durability (index) | 100.0 | 102.0 | 112.0 | 114.0 | 100.0 | 66.0 | 202.0 |
| | rolling resistance (index) | 100.0 | 98.0 | 98.5 | 99.0 | 100.0 | 100.0 | 97.0 |

**Table 13 - 2**

| Example | | 126 | 127 | 128 | 129 | 130 | 131 | 132 |
|---|---|---|---|---|---|---|---|---|
| Comparative Example | | | | | | | | |
| (Formulation (PHR)) | | | | | | | | |
| Component (A) | | | | | | | | |
| | natural rubber | 20.0 | 20.0 | 20.0 | 20.0 | 20.0 | - | - |
| | BR01 | - | - | - | - | - | - | - |
| | polymer of Preparation | AF | AG | AH | AI | AJ | AF | AI |
| | Example amount | 80.0 | 80.0 | 80.0 | 80.0 | 80.0 | 100.0 | 100.0 |
| Component (B) (type: amount) | | | | | | | | |
| | compound of general formula (I) | B:3.0 | - | C:3.0 | E:3.0 | D:5.0 | A:5.0 | A:5.0 |
| | citraconimide compound | - | A:3.0 | B:3.0 | B:3.0 | A:5.0 | A:5.0 | A:5.0 |
| | acrylate | B:3.0 | C:3.0 | A:3.0 | C:3.0 | A:5.0 | A:5.0 | A:5.0 |
| Component (C) | | | | | | | | |
| | silica | 30.0 | 30.0 | 30.0 | 30.0 | 30.0 | 55.0 | 55.0 |
| | carbon black ASAHI #NPG | 30.0 | 30.0 | 30.0 | 30.0 | 30.0 | 5.0 | 5.0 |
| | Other compounding ingredients | | | | | | | |
| | silane coupling agent | 3.0 | 3.0 | 3.0 | 3.0 | 3.0 | 5.5 | 5.5 |
| | softener | 3.0 | 3.0 | 3.0 | 3.0 | 3.0 | 5.0 | 5.0 |
| | zinc oxide | 5.0 | 5.0 | 5.0 | 5.0 | 5.0 | 5.0 | 5.0 |
| | stearic acid | 1.0 | 1.0 | 1.0 | 1.0 | 1.0 | 1.0 | 1.0 |
| | antioxidant | 2.0 | 2.0 | 2.0 | 2.0 | 2.0 | 2.0 | 2.0 |
| | vulcanization accelerator | 2.3 | 2.3 | 2.3 | 2.3 | 2.3 | 2.3 | 2.3 |
| | sulfur | 2.5 | 2.5 | 2.5 | 2.5 | 2.5 | 2.5 | 2.5 |
| Physical properties of rubber | | | | | | | | |
| | ratio of minimum value of dynamic storage modulus in 200 - 250°C to dynamic storage modulus at 50°C (index) | 162 | 161 | 178 | 176 | 193.0 | 202 | 206 |
| | dynamic storage modulus (50°C) | 7.0 | 7.1 | 7.2 | 7.3 | 7.5 | 6.7 | 6.6 |
| Properties of tire | | | | | | | | |
| | gauge of reinforcing rubber (mm) | 12.0 | 12.0 | 12.0 | 9.0 | 9.0 | 9.0 | 9.0 |
| | ride comfort | 5.5 | 5.5 | 5.5 | 6.0 | 6.0 | 6.5 | 6.5 |
| | run flat durability (index) | 204.0 | 161.0 | 222.0 | 111.0 | 122.0 | 131.0 | 130.0 |
| | rolling resistance (index) | 95.5 | 95.5 | 96.5 | 90.5 | 91.5 | 88.5 | 89.0 |

In accordance with the present embodiment, a pneumatic tire of the present invention which is prepared by using a rubber composition, the conjugated diene based polymer having the specific properties is compounded therein, for its reinforcing layer of the side wall portion and/or its bead filler exhibits all of the excellent ride comfort, the excellent run flat durability and the excellent rolling resistance. In particular, excellent durability is exhibited in driving under a run flat state and the driving distance under the run flat state can be increased remarkably.

### Examples 133 to 137 and Comparative Examples 28 to 30 (Embodiment 9)

Rubber compositions are prepared from rubber component (A), carbon black as component (C) and a softener, zinc oxide, stearic acid, an antioxidant, a vulcanization accelerator and sulfur as the other ingredients of compounding which are shown in Table 14 in amounts also shown in Table 14.

Using the prepared rubber compositions for the reinforcing layer of the side wall portion (the side wall reinforcing rubber) or for both of the side wall reinforcing rubber and the bead filler rubber, a radial tire for passenger cars having a size of 205/55R16 is prepared by the conventional process. The gauge of the reinforcing rubber (the maximum thickness of the reinforcing layer of the side wall portion) and the height of the bead filler are shown in Table 14. The ride comfort, the run flat durability and the rolling resistance of the prepared tire (the size of the rim: 6.5JJ-16) are evaluated. The results are shown in Table 14. With respect to the rolling resistance and the run flat durability, the results in Comparative Example 28 are used as the control for the results obtained in Examples 133 and 134 and Comparative Example 29 and the results in Comparative Example 30 are used as the control for the results obtained in Examples 135 to 137 respectively.

**Table 14**

| Example | | | | 133 | 134 | | 135 | 136 | 137 |
|---|---|---|---|---|---|---|---|---|---|
| Comparative Example | | 28 | 29 | | | 30 | | | |
| (Formulation (PHR)) | | | | | | | | | |
| Component (A) | | | | | | | | | |
| | natural rubber | 50.0 | 50.0 | 50.0 | 50.0 | 25.0 | 25.0 | 25.0 | 25.0 |
| | polymer of Preparation | a | b | c | d | a | e | f | g |
| | Example amount (part) | 50.0 | 50.0 | 50.0 | 50.0 | 75.0 | 75.0 | 75.0 | 75.0 |
| Component (C) | | | | | | | | | |
| | carbon black ASAHI #65 | 55.0 | 55.0 | 55.0 | 55.0 | 65.0 | 65.0 | 65.0 | 65.0 |
| Other compounding ingredients | | | | | | | | | |
| | softener | 5.0 | 5.0 | 5.0 | 5.0 | 5.0 | 5.0 | 5.0 | 5.0 |
| | zinc oxide | 4.5 | 4.5 | 4.5 | 4.5 | 4.5 | 4.5 | 4.5 | 4.5 |
| | stearic acid | 1.0 | 1.0 | 1.0 | 1.0 | 1.0 | 1.0 | 1.0 | 1.0 |
| | 6C2.0 | 2.0 | 2.0 | 2.0 | 2.0 | 2.0 | 2.0 | 2.0 | |
| | NS | 2.5 | 2.5 | 2.5 | 2.5 | 2.5 | 2.5 | 2.5 | 2.5 |
| | sulfur | 3.0 | 3.0 | 3.0 | 3.0 | 5.0 | 5.0 | 5.0 | 5.0 |
| Member of application of | | | | | | | | | |
| | rubber composition * side reinforcing layer | appl | appl | appl | appl | appl | appl | appl | appl |
| | bead filler | - | - | - | - | appl | appl | appl | appl |
| | Physical properties of rubber | | | | | | | | |
| | ratio of minimum value of dynamic storage modulus in 200 ∼ 250°C to dynamic storage modulus at 50°C (index) | 74.0 | 73.0 | 76.0 | 75.0 | 81.0 | 84.0 | 82.0 | 83.0 |
| | dynamic storage modulus (50°C) | 7.9 | 8.1 | 7.7 | 8.1 | 9.3 | 9.3 | 9.1 | 9.4 |
| Properties of tire | | | | | | | | | |
| | gauge of side reinforcing rubber (mm) | 12 | 12 | 12 | 12 | 12 | 12 | 12 | 12 |
| | height of bead filler (mm) | 45 | 45 | 45 | 45 | 45 | 45 | 45 | 45 |
| | run flat durability (index) | 100.0 | 102.0 | 108.0 | 112.0 | 100.0 | 115.0 | 118.0 | 122.0 |
| | rolling resistance (index) | 100.0 | 99.5 | 97.5 | 96.5 | 100.0 | 93.0 | 91.0 | 92.0 |

| | | | | | | | | | |
|---|---|---|---|---|---|---|---|---|---|
| *: appl: The rubber compositions are applied in the shown member. | | | | | | | | | |

### Examples 138 to 144 and Comparative Example 31 (Embodiment 10)

Rubber compositions area prepared from rubber component (A), component (B), carbon black as component (C) and a softener, zinc oxide, stearic acid, an antioxidant, a vulcanization accelerator and sulfur as the other ingredients of compounding which are shown in Table 15 in amounts also shown in Table 15.

Using the prepared rubber compositions for the reinforcing layer of the side wall portion (the side reinforcing rubber) or for both of the side reinforcing rubber and the bead filler rubber, a radial tire for passenger cars having a size of 215/45ZR17 is prepared by the conventional process. The ride comfort, the run flat durability and the rolling resistance of the prepared tire (the size of the rim: 7JJ-16) are evaluated. The maximum thickness of the reinforcing layer of the side wall portion is shown in Table 15 as the gauge of the reinforcing rubber. The results are shown in Table 15. With respect to the rolling resistance and the run flat durability, the respective results in Comparative Example 31 are used as the control.

**Table 15**

| Example | | | 138 | 139 | 140 | 141 | 142 | 143 | 144 |
|---|---|---|---|---|---|---|---|---|---|
| Comparative Example | | 31 | | | | | | | |
| (Formulation (PHR)) | | | | | | | | | |
| Component (A) | | | | | | | | | |
| | natural rubber | 10.0 | 10.0 | 10.0 | 10.0 | 10.0 | 10.0 | 10.0 | 10.0 |
| | polymer of Preparation | d | d | e | e | f | f | g | g |
| | Example amount(part) | 90.0 | 90.0 | 90.0 | 90.0 | 90.0 | 90.0 | 90.0 | 90.0 |
| Component (B) | | | | | | | | | |
| | compound of general formula (I) | - | E:0.5 | - | - | D:3.0 | C:3.0 | B:5.0 | A:5.0 |
| | citraconimide compound | - | - | A:0.5 | - | B:3.0 | - | A:5.0 | - |
| | acrylate | - | - | - | A:0.5 | - | B:3.0 | C:5.0 | A:5.0 |
| Component (C) | | | | | | | | | |
| | carbon black ASAHI #65 | 60.0 | 60.0 | 60.0 | 60.0 | 60.0 | 60.0 | 60.0 | 60.0 |
| Other compounding ingredients | | | | | | | | | |
| | softener | 7.5 | 7.5 | 7.5 | 7.5 | 7.5 | 7.5 | 7.5 | 7.5 |
| | zinc oxide | 4.5 | 4.5 | 4.5 | 4.5 | 4.5 | 4.5 | 4.5 | 4.5 |
| | stearic acid | 1.0 | 1.0 | 1.0 | 1.0 | 1.0 | 1.0 | 1.0 | 1.0 |
| | 6C2.0 | 2.0 | 2.0 | 2.0 | 2.0 | 2.0 | 2.0 | 2.0 | |
| | NS | 2.5 | 2.5 | 2.5 | 2.5 | 2.5 | 2.5 | 2.5 | 2.5 |
| | sulfur | 4.5 | 4.5 | 4.5 | 4.5 | 4.5 | 4.5 | 4.5 | 4.5 |
| Member of application of rubber composition * | | | | | | | | | |
| | side reinforcing layer | appl | appl | appl | appl | appl | appl | appl | appl |
| | bead filler | appl | appl | appl | appl | appl | appl | appl | appl |
| Physical properties of rubber | | | | | | | | | |
| | ratio of minimum value of dynamic storage modulus in 200 ∼ 250°C to dynamic storage modulus at 50°C (index) | 80.0 | 86.0 | 84.0 | 83.0 | 107.0 | 108.5 | 129.0 | 117.0 |
| | dynamic storage modulus (50°C) | 8.9 | 8.7 | 8.6 | 8.8 | 8.8 | 8.4 | 9.0 | 9.1 |
| Properties of tire | | | | | | | | | |
| | gauge of side reinforcing rubber (mm) | 9.5 | 9.5 | 9.5 | 9.5 | 8.0 | 8.0 | 8.0 | 8.0 |
| | height of bead filler (mm) | 45 | 45 | 45 | 45 | 45 | 45 | 45 | 45 |
| | run flat durability (index) | 100.0 | 112.0 | 104.0 | 106.0 | 116.0 | 117.0 | 121.0 | 124.0 |
| | rolling resistance (index) | 100.0 | 99.5 | 99.0 | 99.5 | 99.0 | 99.0 | 99.5 | 99.5 |

| | | | | | | | | | |
|---|---|---|---|---|---|---|---|---|---|
| *: appl: The rubber compositions are applied in the shown member. | | | | | | | | | |

It is shown by the above results that the pneumatic tires prepared by using the rubber composition in accordance with the present invention having the specific physical properties for the reinforcing layer of the side wall portion and/or the bead filler exhibited both of the excellent run flat durability and the excellent rolling resistance.

### Examples 145 to 150 and Comparative Examples 32 and 33 (Embodiment 11)

Rubber compositions are prepared by mixing silica as component (C) and other ingredients of compounding with 100 parts by weight of rubber component (A) the type and the amount of which are shown in Table 16 in accordance with the formulations shown in Table 16.

Using the prepared rubber compositions for the reinforcing layer in the side wall portion (the side reinforcing rubber) or for both of the side reinforcing rubber and the bead filler, a radial tire for passenger cars having a size of 225/55R17 are prepared by the conventional process. The run flat durability and the rolling resistance of the prepared tire (the size of the rim: 6.5JJ-16) are evaluated. The gauge of the reinforcing rubber (the maximum thickness of the reinforcing layer in the side wall portion) and the height of the bead filler are shown in Table 16. The results are shown in Table 16. With respect to the rolling resistance and the run flat durability, the results in Comparative Example 32 are used as the control.

**Table 16**

| Example | | | 145 | 146 | 147 | | 148 | 149 | 150 |
|---|---|---|---|---|---|---|---|---|---|
| Comparative Example | | 32 | | | | 33 | | | |
| (Formulation (PHR)) | | | | | | | | | |
| Component (A) | | | | | | | | | |
| | natural rubber | 50.0 | 50.0 | 50.0 | 50.0 | 25.0 | 25.0 | 25.0 | 25.0 |
| | polymer of Preparation | a | b | c | d | a | e | f | g |
| | Example amount (part) | 50.0 | 50.0 | 50.0 | 50.0 | 75.0 | 75.0 | 75.0 | 75.0 |
| Component (C) | | | | | | | | | |
| | silica AQ | 25.0 | 25.0 | 25.0 | 25.0 | 45.0 | 45.0 | 45.0 | 45.0 |
| | carbon black ASAHI #65 | 45.0 | 45.0 | 45.0 | 45.0 | 10.0 | 10.0 | 10.0 | 10.0 |
| Other compounding ingredients | | | | | | | | | |
| | silane coupling agent | 25. | 25. | 2.5 | 2.5 | 4.5 | 4.5 | 4.5 | 4.5 |
| | softener | 5.0 | 5.0 | 5.0 | 5.0 | 5.0 | 5.0 | 5.0 | 5.0 |
| | zinc oxide | 4.5 | 4.5 | 4.5 | 4.5 | 4.5 | 4.5 | 4.5 | 4.5 |
| | stearic acid | 1.0 | 1.0 | 1.0 | 1.0 | 1.0 | 1.0 | 1.0 | 1.0 |
| | 6C2.0 | 2.0 | 2.0 | 2.0 | 2.0 | 2.0 | 2.0 | 2.0 | |
| | NS | 2.5 | 2.5 | 2.5 | 2.5 | 2.5 | 2.5 | 2.5 | 2.5 |
| | sulfur | 2.5 | 2.5 | 2.5 | 2.5 | 4.5 | 4.5 | 4.5 | 4.5 |
| Member of application of rubber composition * | | | | | | | | | |
| | side reinforcing layer | appl | appl | appl | appl | appl | appl | appl | appl |
| | bead filler | - | - | - | - | appl | appl | appl | appl |
| Physical properties of rubber | | | | | | | | | |
| | ratio of minimum value of dynamic storage modulus in 200 ∼ 250°C to dynamic storage modulus at 50°C (index) | 67.0 | 65.0 | 68.0 | 69.0 | 71.0 | 78.0 | 75.0 | 76.0 |
| | dynamic storage modulus (50°C) | 7.4 | 7.6 | 7.4 | 7.7 | 8.8 | 9.0 | 9.1 | 9.1 |
| Properties of tire | | | | | | | | | |
| | gauge of side reinforcing rubber (mm) | 11 | 11 | 11 | 11 | 12 | 12 | 12 | 12 |
| | height of bead filler (mm) | 40 | 40 | 40 | 40 | 40 | 40 | 40 | 40 |
| | run flat durability (index) | 100 | 103 | 120 | 125 | 100 | 109 | 113 | 119 |
| | rolling resistance (index) | 100.0 | 99.5 | 97.0 | 96.5 | 100.0 | 98.0 | 97.0 | 96.5 |

| | | | | | | | | | |
|---|---|---|---|---|---|---|---|---|---|
| *: appl: The rubber compositions are applied in the shown member. | | | | | | | | | |

### Examples 151 to 161 and Comparative Examples 34 to 36 (Embodiment 12)

Rubber compositions are prepared by mixing compounds of component (B), silica as component (C) and other ingredients with 100 parts by weight of rubber component (A) the type and the amount of which are shown in Table 17 in accordance with the formulations shown in Table 17.

Using the prepared rubber compositions for the reinforcing layer in the side wall portion (the side reinforcing rubber) or for both of the side reinforcing rubber and the bead filler, a radial tire for passenger cars having a size of 245/45ZR17 (the size of the rim: 8JJ-17) are prepared by the conventional process. The run flat durability and the rolling resistance of the prepared tire are evaluated. The maximum thickness of the reinforcing layer in the side wall portions is shown in Table 17 as the gauge of the reinforcing rubber. The respective results are shown in Table 17. With respect to the rolling resistance and the run flat durability, the results in Comparative Example 34 are used as the control for the results obtained in Examples 151 to 154, the results in Comparative Example 35 are used as the control for the results obtained in Examples 155 to 157 and the results in Comparative Example 36 are used as the control for the results obtained in Examples 158 to 161 respectively.

**Table 17-1**

| Example | | | 151 | 152 | 153 | 154 | | 155 | 156 | 157 |
|---|---|---|---|---|---|---|---|---|---|---|
| Comparative Example | | 34 | | | | | 35 | | | |
| (Formulation (PHR)) | | | | | | | | | | |
| Component (A) | | | | | | | | | | |
| | natural rubber | 50.0 | 50.0 | 50.0 | 50.0 | 50.0 | 25.0 | 25.0 | 25.0 | 25.0 |
| | polymer of Preparation | c | c | c | c | c | d | d | d | d |
| | Example amount (part) | 50.0 | 50.0 | 50.0 | 50.0 | 50.0 | 75.0 | 75.0 | 75.0 | 75.0 |
| Component (B) | | | | | | | | | | |
| | compound of general formula (I) | - | A:0.5 | C:0.5 | E:0.5 | - | - | - | - | - |
| | citraconimide compound | - | - | - | - | A:0.5 | - | B:0.5 | - | - |
| | acrylate | - | - | - | - | - | - | - | B:0.5 | C:0.5 |
| Component (C) | | | | | | | | | | |
| | silica AQ | 25.0 | 25.0 | 25.0 | 25.0 | 25.0 | 45.0 | 45.0 | 45.0 | 45.0 |
| | carbon black ASAHI #65 | 45.0 | 45.0 | 45.0 | 45.0 | 45.0 | 25.0 | 25.0 | 25.0 | 25.0 |
| Other compounding ingredients | | | | | | | | | | |
| | silane coupling agent | 2.5 | 2.5 | 2.5 | 2.5 | 2.5 | 4.5 | 4.5 | 4.5 | 4.5 |
| | softener | 5.0 | 5.0 | 5.0 | 5.0 | 5.0 | 5.0 | 5.0 | 5.0 | 5.0 |
| | zinc oxide | 4.5 | 4.5 | 4.5 | 4.5 | 4.5 | 4.5 | 4.5 | 4.5 | 4.5 |
| | stearic acid | 1.0 | 1.0 | 1.0 | 1.0 | 1.0 | 1.0 | 1.0 | 1.0 | 1.0 |
| | 6C2.0 | 2.0 | 2.0 | 2.0 | 2.0 | 2.0 | 2.0 | 2.0 | 2.0 | |
| | NS | 2.5 | 2.5 | 2.5 | 2.5 | 2.5 | 2.5 | 2.5 | 2.5 | 2.5 |
| | sulfur | 2.5 | 2.5 | 2.5 | 2.5 | 2.5 | 4.5 | 4.5 | 4.5 | 4.5 |
| Member of application of rubber composition * | | | | | | | | | | |
| | side reinforcing layer | appl | appl | appl | appl | appl | appl | appl | appl | appl |
| | bead filler | - | - | - | - | - | appl | appl | appl | appl |
| Physical properties of rubber | | | | | | | | | | |
| | ratio of minimum value of dynamic storage modulus in 200 ∼ 250°C to dynamic storage modulus at 50°C (index) | 64.0 | 83.0 | 82.0 | 80.5 | 79.0 | 72.0 | 87.0 | 81.0 | 80.0 |
| | dynamic storage modulus (50°C) | 8.1 | 8.0 | 7.9 | 7.8 | 8.1 | 8.8 | 9.0 | 9.1 | 9.1 |
| Properties of tire | | | | | | | | | | |
| | gauge of side reinforcing rubber (mm) | 11 | 9 | 9 | 9 | 9 | 12 | 10 | 10 | 10 |
| | height of bead filler (mm) | 45 | 45 | 45 | 45 | 45 | 45 | 45 | 45 | 45 |
| | run flat durability (index) | 100 | 105 | 104 | 104 | 102 | 100 | 103 | 102 | 102 |
| | rolling resistance (index) | 100.0 | 95.0 | 95.0 | 94.5 | 95.0 | 100.0 | 95.0 | 94.0 | 94.0 |

**Table 17-2**

| Example | | | 158 | 159 | 160 | 161 |
|---|---|---|---|---|---|---|
| Comparative Example | | 36 | | | | |
| (Formulation (PHR)) | | | | | | |
| Component (A) | | | | | | |
| | natural rubber | 10.0 | 10.0 | 10.0 | 10.0 | 10.0 |
| | polymer of Preparation | g | g | g | g | g |
| | Example amount (part) | 90.0 | 90.0 | 90.0 | 90.0 | 90.0 |
| Component (B) | | | | | | |
| | compound of general formula (I) | - | D:3.0 | - | A:3.0 | B:5.0 |
| | citraconimide compound | - | A:3.0 | B:3.0 | - | A:5.0 |
| | acrylate | - | - | B:3.0 | A:3.0 | A:5.0 |
| Component (C) | | | | | | |
| | silica AQ | 55.0 | 55.0 | 55.0 | 55.0 | 55.0 |
| | carbon black ASAHI #65 | 5.0 | 5.0 | 5.0 | 5.0 | 5.0 |
| Other compounding ingredients | | | | | | |
| | silane coupling agent | 4.5 | 4.5 | 4.5 | 4.5 | 4.5 |
| | softener | 7.5 | 7.5 | 7.5 | 7.5 | 7.5 |
| | zinc oxide | 4.5 | 4.5 | 4.5 | 4.5 | 4.5 |
| | stearic acid | 1.0 | 1.0 | 1.0 | 1.0 | 1.0 |
| | 6C2.0 | 2.0 | 2.0 | 2.0 | 2.0 | |
| | NS | 2.5 | 2.5 | 2.5 | 2.5 | 2.5 |
| | sulfur | 4.5 | 4.5 | 4.5 | 4.5 | 4.5 |
| Member of application of rubber composition * | | | | | | |
| | side reinforcing layer | appl | appl | appl | appl | appl |
| | bead filler | appl | appl | appl | appl | appl |
| Physical properties of rubber | | | | | | |
| | ratio of minimum value of dynamic storage modulus in 200 ∼ 250°C to dynamic storage modulus at 50°C (index) | 66.0 | 107.5 | 104.5 | 110.0 | 135.5 |
| | dynamic storage modulus (50°C) | 7.9 | 7.8 | 8.1 | 8.1 | 8.2 |
| Properties of tire | | | | | | |
| | gauge of side reinforcing rubber (mm) | 12 | 10 | 10 | 10 | 10 |
| | height of bead filler (mm) | 45 | 45 | 45 | 45 | 45 |
| | run flat durability (index) | 100 | 120 | 111 | 138 | 131 |
| | rolling resistance (index) | 100.0 | 95.0 | 95.0 | 94.0 | 95.0 |

| | | | | | | |
|---|---|---|---|---|---|---|
| *: appl: The rubber compositions are applied in the shown member. | | | | | | |

It is shown by the above results that the pneumatic tires prepared by using the rubber composition in accordance with the present invention having the specific physical properties for the reinforcing layer of the side wall portion and/or the bead filler exhibited both of the excellent run flat durability and the excellent rolling resistance.

### Examples 162 to 169 and Comparative Examples 37 to 40 (Embodiment 13)

Using rubber composition shown in Table 18 for both of the side reinforcing rubber and the bead filler rubber and disposing a non-woven fabric composite at the position shown in Table 18, a radial tire for passenger cars having a size of 205/55R16 are prepared by the conventional process.

A tire having a size of 225/60R16 in which a reinforcing rubber layer having a sectional shape of a crescent is disposed at the inside of the carcass ply of the side wall portion is prepared by the conventional process. The formulation for the rubber composition used for the rubber-filament fiber composites is shown in Table 18. M₅₀ is 4.5 Pa and M₁₀₀ is 10.5 Pa.

**Table 18 - 1**

| Rubber composition for side reinforcement (part by weight) | |
|---|---|
| Natural rubber | 30.0 |
| Butadiene rubber ^{*1} | 70.0 |
| Carbon black ^{*2} | 60.0 |
| Softener ^{*3} | 5.0 |
| Zinc oxide | 3.0 |
| Stearic acid | 1.0 |
| Antioxidant ^{*4} | 2.0 |
| Vulcanization accelerator ^{*5} | 3.5 |
| Sulfur | 5.0 |
| Tensile stress at 50% elongation (MPa) | 4.5 |
| Tensile stress at 100% elongation (MPa) | 10.5 |

| | |
|---|---|
| *1: BR01 (a trade mark; manufactured by JSR Corporation) *2: FEF *3: Spindle oil *4: NOCRAC 6C (a trade mark; manufactured by OUCHISHINKO CHEMICAL INDUSTRIAL Co., Ltd.) *5: NOCCELLOR NS (a trade mark; manufactured by OUCHISHINKO CHEMICAL INDUSTRIAL Co., Ltd.) M₅₀ = 4.5 MPa M₁₀₀ = 10.5 MFa | |

**Table 18 - 2**

| Carcass ply coating rubber for organic fiber (part by weight) | |
|---|---|
| Natural rubber | 100.0 |
| Carbon black ^{*1} | 40.0 |
| Softener ^{*2} | 3.0 |
| Zinc oxide | 3.0 |
| Stearic acid | 1.0 |
| Antioxidant ^{*3} | 1.0 |
| Vulcanization accelerator ^{*4} | 0.8 |
| Sulfur | 2.5 |
| Tensile stress at 50% elongation (MPa) | 1.6 |
| Tensile stress at 100% elongation (MPa) | 2.6 |

| | |
|---|---|
| *1: HAF *2: Spindle oil *3: NOCRAC 6C (a trade mark; manufactured by OUCHISHINKO CHEMICAL INDUSTRIAL Co., Ltd.) *4: NOCCELLOR CZ (a trade mark; manufactured by OUCHISHINKO CHEMICAL INDUSTRIAL Co., Ltd.) M₅₀ = 1.6 MPa M₁₀₀ = 2.6 MPa | |

**Table 19 - 1**

| Example | | | 162 | 163 | | 164 | 165 |
|---|---|---|---|---|---|---|---|
| Comparative Example | | 37 | | | 38 | | |
| (Formulation (PHR)) | | | | | | | |
| Component (A) | | | | | | | |
| | natural rubber | 50.0 | 50.0 | 50.0 | 50.0 | 50.0 | 50.0 |
| | polymer of Preparation | A | A | A | h | h | h |
| | Example amount (part) | 50.0 | 50.0 | 50.0 | 50.0 | 50.0 | 50.0 |
| Component (C) | | | | | | | |
| | silica AQ | 0.0 | 0.0 | 0.0 | 25.0 | 25.0 | 25.0 |
| | carbon black ASAHI #65 | 60.0 | 60.0 | 60.0 | 45.0 | 45.0 | 45.0 |
| Other compounding ingredients | | | | | | | |
| | silane coupling agent | 2.5 | 2.5 | 2.5 | 2.5 | 2.5 | 2.5 |
| | softener | 5.0 | 5.0 | 5.0 | 5.0 | 5.0 | 5.0 |
| | zinc oxide | 4.5 | 4.5 | 4.5 | 4.5 | 4.5 | 4.5 |
| | stearic acid | 1.0 | 1.0 | 1.0 | 1.0 | 1.0 | 1.0 |
| | 6C2.0 | 2.0 | 2.0 | 2.0 | 2.0 | 2.0 | |
| | NS | 2.5 | 2.5 | 2.5 | 2.5 | 2.5 | 2.5 |
| | sulfur | 2.5 | 2.5 | 2.5 | 2.5 | 2.5 | 2.5 |
| Member of application of rubber composition * | | | | | | | |
| | side reinforcing layer | appl | appl | appl | appl | appl | appl |
| | bead filler | - | - | - | - | - | - |
| Non-woven fabric | | | | | | | |
| | type | none | not treated | treated | none | not treated | treated |
| | disposed position | - | Figure 2 | Figure 2 | - | Figure 3 | Figure 3 |
| Properties of tire | | | | | | | |
| | gauge of side reinforcing rubber (mm) | 11 | 10 | 10 | 11 | 10 | 10 |
| | height of bead filler (mm) | 40 | 40 | 40 | 40 | 40 | 40 |
| | run flat durability (index) | 100 | 108 | 118 | 100 | 110 | 119 |
| | rolling resistance (index) | 100 | 96.0 | 97.0 | 100 | 95.0 | 96.0 |

**Table 19 - 2**

| Example | | | 166 | 167 | | 168 | 169 |
|---|---|---|---|---|---|---|---|
| Comparative Example | | 39 | | | 40 | | |
| (Formulation (PHR)) | | | | | | | |
| Component (A) | | | | | | | |
| | natural rubber | 25.0 | 25.0 | 25.0 | 25.0 | 25.0 | 25.0 |
| | polymer of Preparation | M | M | M | AH | AH | AH |
| | Example amount (part) | 75.0 | 75.0 | 75.0 | 75.0 | 75.0 | 75.0 |
| Component (C) | | | | | | | |
| | silica AQ | 45.0 | 45.0 | 45.0 | 45.0 | 45.0 | 45.0 |
| | carbon black #ASAHI NPG | 10.0 | 10.0 | 10.0 | 10.0 | 10.0 | 10.0 |
| Other compounding ingredients | | | | | | | |
| | silane coupling agent | 4.5 | 4.5 | 4.5 | 4.5 | 4.5 | 4.5 |
| | softener | 5.0 | 5.0 | 5.0 | 5.0 | 5.0 | 5.0 |
| | zinc oxide | 4.5 | 4.5 | 4.5 | 4.5 | 4.5 | 4.5 |
| | stearic acid | 1.0 | 1.0 | 1.0 | 1.0 | 1.0 | 1.0 |
| | 6C2.0 | 2.0 | 2.0 | 2.0 | 2.0 | 2.0 | |
| | NS | 2.5 | 2.5 | 2.5 | 2.5 | 2.5 | 2.5 |
| | sulfur | 4.5 | 4.5 | 4.5 | 4.5 | 4.5 | 4.5 |
| Member of application of rubber composition * | | | | | | | |
| | side reinforcing layer | appl | appl | appl | appl | appl | appl |
| | bead filler | appl | appl | appl | appl | appl | appl |
| Non-woven fabric | | | | | | | |
| | type | none | not treated | treated | none | not treated | treated |
| | disposed position | - | Figure 4 | Figure 4 | - | Figure | 5 Figure 5 |
| Properties of tire | | | | | | | |
| | gauge of side reinforcing rubber (mm) | 12 | 11 | 11 | 12 | 11 | 11 |
| | height of bead filler (mm) | 40 | 40 | 40 | 40 | 40 | 40 |
| | run flat durability (index) | 100 | 111 | 120 | 100 | 111 | 121 |
| | rolling resistance (index) | 100 | 95 | 95 | 100 | 94 | 95 |

| | | | | | | | |
|---|---|---|---|---|---|---|---|
| *: appl: The rubber compositions are applied in the shown member. | | | | | | | |

It is shown by the above results that the durability of the tire could be further improved by disposing a rubber-non-woven fabric composite in the side wall portion and the effect could be further enhanced by treating the non-woven fabric with cobalt spuutering.

### INDUSTRIAL APPLICABILITY

The pneumatic tire of the present invention in which the rubber composition in accordance with the present invention is used for the reinforcing layer of the side wall portion and/or the bead filler exhibits all of the excellent ride comfort, the excellent run flat durability and the excellent rolling resistance. In particular, when polybutadiene having a content of vinyl linkages of 40% or more is used, a remarkably excellent run flat durability is exhibited. It is also made possible that the weight of the tire is reduced while other properties of the tire are maintained.

According to a first aspect of the present invention, there is provided a pneumatic tire comprising:
a pair of right and left bead portions,
a carcass layer disposed extending between the bead portions,
a tread portion disposed at an outside of the carcass layer in a radial direction of the tire,
a pair of side wall portions disposed at right and left sides of the tread portion and
at least one pair of rubber members selected from the group consisting of a pair of rubber members constituted with a rigid rubber and disposed in the bead portions and a pair of rubber member constituted with a rigid rubber disposed in the side wall portions,
wherein at least one of the rubber member disposed in the bead portions and the rubber member disposed in the side wall portions is constituted with a rubber composition (r1) having a minimum value of a dynamic storage modulus within a temperature range of 200 to 250°C which is 75% or more of a dynamic storage modulus at 50°C.

Preferably, the rubber composition (r1) has a dynamic storage modulus in a range of 2 to 20 MPa at 50°C.

According to a second aspect of the present invention, there is provided a pneumatic tire comprising:
a pair of right and left bead portions,
a carcass layer disposed extending between the bead portions,
a tread portion disposed at an outside of the carcass layer in a radial direction of the tire,
a pair of side wall portions disposed at right and left sides of the tread portion and
at least one pair of rubber members selected from the group consisting of a pair of rubber members constituted with a rigid rubber and disposed in the bead portions and a pair of rubber member constituted with a rigid rubber disposed in the side wall portions,
wherein at least one of the rubber member disposed in the bead portions and the rubber member disposed in the side wall portions is constituted with a rubber component (A)-compounded rubber composition (r2), the rubber component (A) comprising 40% by weight or more of (1) a conjugated diene based elastic polymer having a content of a vinyl linkage of 25% or more in conjugated diene units or (2) a conjugated diene based elastic polymer (a) having at least one of a nitrogen atom and a silicon atom in its molecule.

Preferably, the conjugated diene based elastic polymer (a) has a weight-average molecular weight (Mw) in a range of 200,000 to 900,000.

Preferably, the conjugated diene based elastic polymer (a) has a molecular weight distribution, which is expressed as a ratio (Mw/Mn) of a weight-average molecular weight to a number-average molecular weight (Mn), in a range of 1 to 4.

Preferably, the conjugated diene based elastic polymer (a) is at least one polymer selected from the group consisting of a homopolymer of a conjugated diene monomer, a copolymer of conjugated diene monomers and a copolymer of a conjugated diene monomer and an aromatic vinyl monomer.

Preferably, the conjugated diene based elastic polymer (a) is at least one polymer selected from the group consisting of polybutadiene, styrene-butadiene copolymers, modified polybutadiene and modified styrene-butadiene copolymers.

Preferably, the rubber component (A) comprises 40% by weight or more of the conjugated diene based elastic polymer (a) having a content of a vinyl linkage of 25% or more in conjugated diene units and 40% or more of the polymer having at least one of a tin atom, a nitrogen atom and a silicon atom in its molecule.

Preferably, 40% by weight or more of the conjugated diene based elastic polymer (a) comprises at least one of a tin atom, a nitrogen atom and a silicon atom in its molecule.

Preferably, the conjugated diene based elastic polymer (a) is obtained by reaction with a compound having a tin atom in its molecule after polymerization.

Preferably, the compound having a tin atom in its molecule is at least one compound selected from the group consisting of tin tetrachloride, tributyltin chloride, dioctyltin dichloride, dibutyltin dichloride and triphenyltin chloride.

Preferably, the conjugated diene based elastic polymer (a) is obtained by reacting a compound having a nitrogen atom in its molecule after a completion of polymerization.

Preferably, the compound having a nitrogen atom in its molecule is at least one compound selected from the group consisting of isocyanate compounds, aminobenzophenone compounds, urea derivatives, 4-dimethylamino-benzylideneaniline, dimethylimidazolidinone and N-methylpyrrolidone.

Preferably, the isocyanate compound is at least one compound selected from the group consisting of 2,4-tolylene diisocyanate and diisocyanatodiphenylmethane.

Preferably, the aminobenzophenone compound is at least one compound selected from the group consisting of 4,4'-bis(diethylamino)benzophenone and 4-(dimethylamino)benzophenone.

Preferably, the urea derivative is at least one compound selected from a group consisting of 1,3-dimethyl-2-imidazolidinone, 1,3-diethyl-2-imidazolidinone and 1,3-dimethyl-3,4,5,6-tetrahydropyrimidine.

Preferably, the conjugated diene based elastic polymer (a) is obtained by reacting a compound having a silicon atom in its molecule after a completion of polymerization.

Preferably, the compound having a silicon atom in its molecule is at least one compound selected from a group consisting of alkoxysilanes and aminoalkoxysilanes.

Preferably, the alkoxysilane is at least one compound selected from a group consisting of methylethoxysilane, tetraethoxysilane, 3-glycidoxypropyltriethoxysilane and 3-glycidoxypropyltrimethoxysilane.

Preferably, the aminoalkoxysilane is at least one compound selected from a group consisting of 1-{3-(triethoxysilyl)propyl}-4,5-dihydroimidazole, N-(1,3-dimethylbutylidene)-3-(triethoxysilyl)-1-propaneamine, dimethylamino-propyltriethoxysilane, N-(1-methylpropylidene)-3-(triethoxysilyl)-1-propaneamine and N-(1,3-dimethylbutylidene)-3-(triethoxysilyl)-1-propaneamine.

Preferably, the rubber component (A) comprises a conjugated diene based polymer having a branched structure.

According to a third aspect of the present invention, there is provided
a pneumatic tire comprising:
a pair of right and left bead portions,
a carcass layer disposed extending between the bead portions,
a tread portion disposed at an outside of the carcass layer in the radial direction of the tire,
a pair of side wall portions disposed at right and left sides of the tread portion and
at least a rubber member constituted with a rigid rubber and disposed in the bead portions and a rubber member disposed in the side wall portions,
wherein at least one of the rubber member disposed in the bead portions and the rubber member disposed in the side wall portions is constituted with a compound (B)-compounded rubber composition (r3), compound (B) being at least one compound selected from the group consisting of a citraconimide compound, an acrylate compound and a compound represented by following general formula (I):

   R¹-S-S-A-S-S-R² (I)

   wherein A represents an alkylene group having 2 to 10 carbon atoms and R¹ and R² each independently represents a monovalent organic group having a nitrogen atom.

Preferably, the citraconimide compound of the (B) component is a biscitraconimide.

Preferably, the biscitraconimide compound of the (B) component is 1,6-bis(citraconimidomethyl)benzene.

Preferably, the acrylate compound of the (B) component is a polyvalent ester obtained from a polyhydric alcohol and an acrylic acid or a polyvalent ester obtained from a polyhydric alcohol and an acrylic acid or another carboxylic acid.

Preferably, the acrylate compound is dipentaerythritol acrylate modified with an acyl group.

Preferably, in the general formula (I) representing a compound of the component (B), A represents hexamethylene group.

Preferably, the compound of the component (B) represented by the general formula (I) is 1,6-bis(N,N'-dibenzylthiocarbamoyldithio)hexane.

Preferably, the rubber composition (r3) further comprises a rubber component (A), wherein the (B) component is compounded in an amount of 0.5 to 20 parts by weight per 100 parts by weight of the rubber component (A).

Preferably, a reinforcing filler (C) comprising at least one filler selected from a group consisting of reinforcing inorganic fillers and a carbon black is further compounded with at least one selected from the group of the rubber compositions (r1), (r2) and (r3).

Preferably, the reinforcing inorganic filler is porous.

Preferably, the reinforcing inorganic filler is at least one filler selected from the group consisting of silica and compounds represented by the following general formula:

mM¹·SiO_{y}·zH₂O

wherein M¹ is selected from the group consisting of metals of Al, Mg, Ti and Ca, and an oxide or a hydroxide thereof, **m** represents an integer of 1 to 5, **x** represents an integer of 0 to 10, **y** represents an integer of 2 to 5 and **z** represents an integer of 0 to 10.

Preferably, the reinforcing inorganic filler has a nitrogen adsorption specific surface area measured by the BET method in the range of 50 to 400 m²/g.

Preferably, the reinforcing inorganic filler is at least one filler selected from the group consisting of silica, aluminum hydroxide, aluminum oxide, calcium carbonate, magnesium carbonate, clay and zeolite.

Preferably, the carbon black has a nitrogen adsorption specific surface area measured by the BET method in the range of 50 to 400 m2/g

Preferably, sodium 1,6-hexamethylenedithiosulfate dihydrate is further compounded with at least one selected from the group of the rubber compositions (r1), (r2) and (r3).

Preferably, the rubber member disposed in the side wall portion is arranged at an inner side of the tire and adjacent to the carcass layer.

According to a fourth aspect of the present invention, there is provided a pneumatic tire comprising:
a pair of right and left bead portions,
a carcass layer disposed extending between the bead portions,
a tread portion disposed at an outside of the carcass layer in a radial direction of the tire,
a pair of side wall portions disposed at right and left sides of the tread portion and
at least one of a rubber member constituted with a rigid rubber and disposed in the bead portions and a rubber member disposed in the side wall portions,
wherein at least one of the rubber member disposed in the bead portions and the rubber member disposed in the side wall portions is constituted with at least one of a rubber composition selected from the group consisting of the rubber composition (r1), the rubber composition (r2) and the rubber composition (r3), and a rubber-filament fiber composite is further disposed in the side wall portion.

According to a fifth aspect of the present invention, there is provided a method for exhibiting both of excellent ride comfort during driving under a condition of a normal internal pressure and excellent durability under a run flat state of a pneumatic tire which comprises a carcass layer, a tread portion disposed at an outside of the carcass layer in a radial direction of the tire and a pair of side wall portions disposed at right and left sides of the tread portion, the method comprises disposing a rubber member constituted with the rubber composition described in any one of the first to fourth aspects in the side wall portions.

Preferably, the method comprises adjusting a minimum value of a dynamic storage modulus of the rubber composition within a temperature range of 200 to 250°C to a same value or larger of a dynamic storage modulus at 50°C of the rubber composition.

## Claims

1. A pneumatic tire comprising:
a pair of right and left bead portions,
a carcass layer disposed extending between the bead portions,
a tread portion disposed at an outside of the carcass layer in the radial direction of the tire,
a pair of side wall portions disposed at right and left sides of the tread portion and
at least a rubber member constituted with a rigid rubber and disposed in the bead portions and a rubber member disposed in the side wall portions,
wherein at least one of the rubber member disposed in the bead portions and the rubber member disposed in the side wall portions is constituted with a compound (B)-compounded rubber composition (r3), compound (B) being at least one compound selected from the group consisting of a citraconimide compound, an acrylate compound and a compound represented by following general formula (I):.
R¹-S-S-A-S-S-R² (I)
wherein A represents an alkylene group having 2 to 10 carbon atoms and R' and R² each independently represents a monovalent organic group having a nitrogen atom.

2. A pneumatic tire according to Claim 1, wherein the citraconimide compound of the (B) component is a biscitraconimide.

3. A pneumatic tire according to Claim 2, wherein the biscitraconimide compound of the (B) component is 1,6-bis(citraconimidomethyl)benzene.

4. A pneumatic tire according to Claim 1, wherein the acrylate compound of the (B) component is a polyvalent ester obtained from a polyhydric alcohol and an acrylic acid or a polyvalent ester obtained from a polyhydric alcohol and an acrylic acid or another carboxylic acid.

5. A pneumatic tire according to Claim 4, wherein the acrylate compound is dipentaerythritol acrylate modified with an acyl group.

6. A pneumatic tire according to Claim 1, wherein, in the general formula (I) representing a compound of the component (B), A represents hexamethylene group.

7. A pneumatic tire according to Claim 6, wherein the compound of the component (B) represented by the general formula (I) is 1,6-bis(N,N'-dibenzylthiocarbamoyldithio)hexane.

8. A pneumatic tire according to any one of Claims 1 to 7, the rubber composition (r3) further comprises a rubber component (A), wherein the (B) component is compounded in an amount of 0.5 to 20 parts by weight per 100 parts by weight of the rubber component (A).

9. A pneumatic tire according to Claim 1, a reinforcing filler (C) comprising at least one filler selected from a group consisting of reinforcing inorganic fillers and a carbon black is further compounded with at least one selected from the group of the rubber compositions (r1), (r2) and (r3).

10. A pneumatic tire according to Claim 9, wherein the reinforcing inorganic filler is porous.

11. A pneumatic tire according to Claim 10, wherein the reinforcing inorganic filler is at least one filler selected from the group consisting of silica and compounds represented by the following general formula:
mM¹·xSiO_{y}·zH₂O
wherein M¹ is selected from the group consisting of metals of Al, Mg, Ti and Ca, and an oxide or a hydroxide thereof, m represents an integer of 1 to 5, x represents an integer of 0 to 10, y represents an integer of 2 to 5 and z represents an integer of 0 to 10.

12. A pneumatic tire according to Claim 10, wherein the reinforcing inorganic filler has a nitrogen adsorption specific surface area measured by the BET method in the range of 50 to 400 m²/g.

13. A pneumatic tire according to Claim 10, wherein the reinforcing inorganic filler is at least one filler selected from the group consisting of silica, aluminum hydroxide, aluminum oxide, calcium carbonate, magnesium carbonate, clay and zeolite.

14. A pneumatic tire according to Claim 9, wherein the carbon black has a nitrogen adsorption specific surface area measured by the BET method in the range of 50 to 400 m²/g_{.}

15. A pneumatic tire according to any one of Claims 1 to 14, sodium 1,6-hexamethylenedithiosulfate dihydrate is further compounded with at least one selected from the group of the rubber compositions (r1), (r2) and (r3).

16. A pneumatic tire according to any one of Claims 1 to 15, wherein the rubber member disposed in the side wall portion is arranged at an inner side of the tire and adjacent to the carcass layer.

17. A pneumatic tire as claimed in claim 1 comprising:
a pair of right and left bead portions,
a carcass layer disposed extending between the bead portions,
a tread portion disposed at an outside of the carcass layer in a radial direction of the tire,
a pair of side wall portions disposed at right and left sides of the tread portion and
at least one of a rubber member constituted with a rigid rubber and disposed in the bead portions and a rubber member disposed in the side wall portions,
wherein at least one of the rubber member disposed in the bead portions and the rubber member disposed in the side wall portions is constituted with a rubber composition (r3), and a rubber-filament fiber composite is further disposed in the side wall portion.

18. A method for exhibiting both of excellent ride comfort during driving under a condition of a normal internal pressure and excellent durability under a run flat state of a pneumatic tire which comprises a carcass layer, a tread portion disposed at an outside of the carcass layer in a radial direction of the tire and a pair of side wall portions disposed at right and left sides of the tread portion, the method comprises disposing a rubber member constituted with the rubber composition described in any one of Claims 1 to 16 in the side wall portions.

19. A method for exhibiting both of excellent ride comfort during driving under a condition of a normal internal pressure and excellent durability under a run flat state of a pneumatic tire according to Claim 18, the method comprises adjusting a minimum value of a dynamic storage modulus of the rubber composition within a temperature range of 200 to 250 °C to a same value or larger of a dynamic storage modulus at 50°C of the rubber composition.
